(19) Europäisches Patentamt
European Patent Office
Office européen des brevets

(11) EP 1 872 658 A1

(12) **EUROPEAN PATENT APPLICATION**
published in accordance with Art. 153(4) EPC

(43) Date of publication:
**02.01.2008 Bulletin 2008/01**

(21) Application number: **06730586.2**

(22) Date of filing: **30.03.2006**

(51) Int Cl.:
***A01N 47/12*** *(2006.01)* ***A01N 25/04*** *(2006.01)*
***A01N 25/12*** *(2006.01)* ***A01N 25/14*** *(2006.01)*

(86) International application number:
**PCT/JP2006/306638**

(87) International publication number:
**WO 2006/106811 (12.10.2006 Gazette 2006/41)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.03.2005 JP 2005100507**

(71) Applicant: **Mitsui Chemicals, Inc.**
**Tokyo 105-7117 (JP)**

(72) Inventors:
- **TOMURA, Naofumi**
  **Mobara-shi, Chiba 2970017 (JP)**
- **EBIHARA, Kouichi**
  **Mobara-shi, Chiba 2970017 (JP)**
- **MORIZANE, Kunihiko**
  **Mobara-shi, Chiba 2970017 (JP)**
- **EZAKI, Ryutaro**
  **Mobara-shi, Chiba 2970017 (JP)**
- **KAWAHARA, Nobuyuki**
  **Mobara-shi, Chiba 2970017 (JP)**
- **NOMURA, Michikazu**
  **Mobara-shi, Chiba 2970017 (JP)**

(74) Representative: **Stuart, Ian Alexander et al**
**Mewburn Ellis LLP**
**York House**
**23 Kingsway**
**London WC2B 6HP (GB)**

# (54) PESTICIDAL COMPOSITION

(57) An object of the present invention is to provide a composition for preventing harmful organisms exerting an excellent control effect against plant diseases and/or insecticidal effect. Disclosed is a composition for preventing harmful organisms comprising a diamine derivative represented by the formula (1), and one or more compounds selected from the group consisting of other fungicides, insecticides and acaricides as active ingredients,

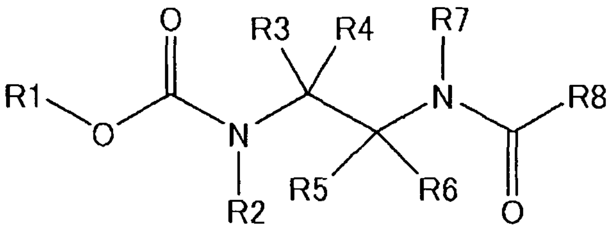

(1)

wherein, in the formula, R1 represents a hydrocarbon having 1 to 6 carbon atoms which is substituted with halogen or the like; R2 and R7 each independently represent a hydrogen atom, a hydrocarbon having 1 to 6 carbon atoms or the like; R3 and R4 each independently represent a hydrogen atom, a hydrocarbon having 1 to 6 carbon atoms which may be substituted or the like, or R3 and R4 represent a cycloalkyl group having 3 to 6 carbon atoms containing a carbon atom bonded thereto; R5 and R6 each independently represent a hydrogen atom, a hydrocarbon group having 1 to 6 carbon atoms or the like; and R8 represents an arylalkyl group which may be substituted, an aryl group which may be substituted or a heteroaryl group which may be substituted.

EP 1 872 658 A1

**Description**

TECHNICAL FIELD

The present invention relates to an excellent composition for preventing harmful organisms.

BACKGROUND ART

In Patent Document 1, there have been disclosed a diamine derivative different from the compound of the present invention and a plant disease control agent having such a diamine derivative as an active ingredient. However, in the document, there has not been disclosed any of the usefulness of the diamine derivative having an oxycarbonyl group with a halogen-substituted hydrocarbon.
Patent Document 1: Japanese Patent Laid-Open Publication No. 2003-096046 (WO 2003008372)

DISCLOSURE OF THE INVENTION

Under the above circumstances, the present inventors have recently found that, diamine derivatives, in particular a diamine derivative having an oxycarbonyl group with a halogen-substituted hydrocarbon, exhibit a high control effect against rice blast. The diamine derivative having such a structure is a novel compound exhibiting an excellent action on control of plant diseases and its control effect is more remarkably excellent than the effect obtained from the diamine derivative as disclosed, for example, in Japanese Patent Laid-Open Publication No. 2003-096046.
However, it is difficult to control pests or diseases in all fields by using only the novel diamine derivative.
The present invention has been made in view of such circumstances, and is to provide a composition for preventing harmful organisms exhibiting an excellent control effect against plant diseases and/or insecticidal effect.
In order to solve this problem, the present inventors have repeatedly conducted an extensive study and as a result, have found that a composition for preventing harmful organisms comprising a diamine derivative having an oxycarbonyl group with a halogen-substituted hydrocarbon and one or more compounds selected from the group consisting of other fungicides, insecticides and acaricides as active ingredients exhibits an excellent control effect against plant diseases and/or insecticidal effect on diseases and pests at the same time. Thus, the present invention has been completed.
That is, the present invention is specified by the following matters.
[1] a composition for preventing harmful organisms comprising a diamine derivative represented by the formula (1), and one or more compounds selected from the group consisting of other fungicides, insecticides and acaricides as active ingredients,
**[0007]**

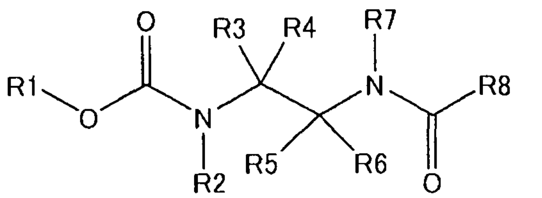
(1)

wherein, in the formula, R1 represents a hydrocarbon having 1 to 6 carbon atoms which is substituted with halogen; R2 and R7 each independently represent a hydrogen atom, a hydrocarbon having 1 to 6 carbon atoms or an acyl group; R3 and R4 each independently represent a hydrogen atom, a hydrocarbon having 1 to 6 carbon atoms which may be substituted or a heteroaryl group which may be substituted, or R3 and R4 represent a cycloalkyl group having 3 to 6 carbon atoms containing a carbon atom bonded thereto; R5 and R6 each independently represent a hydrogen atom or a hydrocarbon having 1 to 6 carbon atoms; and R8 represents an arylalkyl group which may be substituted, an aryl group which may be substituted or a heteroaryl group which may be substituted;
[2] the composition for preventing harmful organisms as set forth in [1], wherein other fungicide, insecticide or acaricide is a compound selected from pyrethroid-based insecticides such as allethrin, tetramethrin, resmethrin, phenothrin, furamethrin, permethrin, cypermethrin, deltamethrin, cyhalothrin, cyfluthrin, fenpropathrin, tralomethrin, cycloprothrin, flucythrinate, fluvalinate, acrinathrin, tefluthrin, bifenthrin, empenthrin, beta-cyfluthrin, cypermethrin, fenvalerate, esfenvalerate, flubrocythrinate, metofluthrin, profluthrin, dimefluthrin, flubrocythrinate, silafluofen, pyrethrum extract, etofenprox and halfenprox;

organophosphate-based insecticides such as DDVP, cyanophos, fenthion, fenitrothion, tetrachlorvinphos, dimethylvinphos, propaphos, methyl parathion, temephos, phoxim, acephate, isofenphos, salithion, DEP, EPN, ethion, mecarbam, pyridafenthion, diazinon, pirimiphos-methyl, etrimfos, isoxathion, quinalphos, chlorpyrifos-methyl, chlorpyrifos, phosalone, phosmet, methidathion, oxydeprofos, vamidothion, malathion, phenthoate, dimethoate, formothion, thiometon, ethylthiometon, phorate, terbufos, profenofos, prothiofos, sulprofos, pyraclofos, monocrotophos, naled, fosthiazate, trichlorphon, ethoprophos, cadusafos, chlorfenvinphos, dichlofenthion, ethylthiometon, methamidophos, dichlorvos, tebupirimfos, omethoate, triazophos, oxydemeton-methyl, azinphos-methyl, chlorethoxyphos, dicrotophos, disulfoton, fenamiphos, phosphamidon, trichlorphon, chlormephos, demeton-S-methyl, mevinphos, parathion, tebupirimfos, MEP, malathion, PHC, DCIP and MPP;
carbamate-based insecticides such as NAC, MTMC, MIPC, BPMC, XMC, PHC, MPMC, ethiofencarb, bendiocarb, pirimicarb, carbosulfan, benfuracarb, methomyl, oxamyl, aldicarb, thiodicarb, alanycarb, carbofuran, methiocarb, fenothiocarb, formetanate, xylylmethylcarbamate, propoxur, isoprocarb and furathiocarb;
neonicotinoid-based insecticides such as imidacloprid, nitenpyram, acetamiprid, dinotefuran, thiamethoxam, thiacloprid and clothianidin;
organochlorine-based insecticides such as bromopropylate, dicofol, endosulfan and linden;
insect growth regulators such as diflubenzuron, chlorfluazuron, teflubenzuron, triflumuron, flufenoxuron, flucycloxuron, hexaflumuron, fluazuron, diafenthiuron, novaluron, noviflumuron, bistrifluron, chromafenozide, halofenozide, methoxyfenozide, lufenuron, cyromazine, triazamate, tebufenozide, buprofezin and isoprothiolane;
natural product insecticides such as nicotine sulfate, polynactin complex, abamectin, milbemectin, lepimectin, BT agent, spinosad and rotenone; nereistoxin-based insecticides such as cartap, thiocyclam and bensultap;
carboxamide-based fungicides such as thifluzamide, flutolanil, mepronil, pencycuron, ethaboxam, oxycarboxin, carboxin and silthiofam;
melanin biosynthesis inhibitor-based fungicides such as carpropamid, diclocymet, tricyclazole, pyroquilon, fenoxanil and fthalide;
strobilurin-based fungicides such as azoxystrobin, metominostrobin, orysastrobin, kresoxim-methyl, fluoxastrobin, trifloxystrobin, dimoxystrobin, pyraclostrobin and picoxystrobin;
antibiotic fungicides such as kasugamycin, validamycin, blasticidin-S-benzylaminobenzenesulfonate, polyoxin, tecloftalam, oxytetracycline, streptomycin, blasticidin-S, mildiomycin and polyoxins;
pyrimidine-based fungicides such as ferimzone, fenarimol, pyrifenox, nuarimol and bupirimate;
azole-based fungicides such as simeconazole, furametpyr, ipconazole, triflumizole, prochloraz, pefurazoate, imazalil, imibenconazole, etridiazole, epoxiconazole, oxpoconazole fumarate, diniconazole, difenoconazole, cyproconazole, thifluzamide, tetraconazole, tebuconazole, triadimenol, triadimefon, triticonazole, bitertanol, hymexazole, fenbuconazole, fluquinconazole, flusilazole, flutriafol, prothioconazole, propiconazole, bromuconazole, hexaconazole, penconazole and metconazole;
copper fungicides such as copper, copper nonylphenolsulfonate, basic copper chloride, basic copper sulfate, oxine copper, DBEDC, anhydrous copper sulfate and copper (II) hydroxide; benzimidazole-based fungicides such as thiophanate-methyl, benomyl, thiabendazole, thiophanate, carbendazim and fuberidazole;
organophosphate-based fungicides such as EDDP, IBP, tolclofos-methyl, fosetyl, dinocap and pyrazophos;
acylalanine-based fungicides such as metalaxyl, oxadixyl, benalaxyl and metalaxyl-M;
dicarboximide-based fungicides such as iprodione, procymidone, vinclozolin and chlozolinate;
dithiocarbamate-based fungicides such as thiuram, manzeb, propineb, zineb, metiram, maneb, ziram and ambam;
soil fungicides such as hydroxyisoxazole, methasulfocarb, chloropicrin, flusulfamide, dazomet, methyl isothiocyanate, potassium hydroxyisoxazole, echlomezol, 1,3-dichloropropene and carbam;
organochlorine-based fungicides such as TPN and captan;
anilinopyrimidine-based fungicides such as mepanipyrim, cyprodinil and pyrimethanil;
natural product fungicides such as rape seed oil and machine oil;
inorganic fungicides such as sulfur, lime sulfur mixture, zinc sulfate, fentin, sodium hydrogen carbonate, potassium hydrogen carbonate and hypochlorite salts;
morpholine-based fungicides such as dimethomorph, fenpropidin, fenpropimorph, spiroxamine, tridemorph, dodemorph and flumorph;
acaricides such as chlorobenzilate, fenisobromolate, tetradifon, CPCBS, BPPS, chinomethionat, amitraz, benzomate, hexythiazox, fenbutatin oxide, cyhexatin, dienochlor, clofentezine, pyridaben, fenpyroximate, fenazaquin, tebufenpyrad, pyrimidifen, acequinocyl, bifenazate, etoxazol, spirodiclofen, spiromesifen, amidoflumet, diflovidazin and kelthane;
insecticides and fungicides other than those described above such as pymetrozine, fipronil, buprofezin, fenoxycarb, pyriproxyfen, methoprene, hydroprene, kinoprene, endosulfan, triazuron, tebufenozide, benzoepin, emamectin benzoate, emamectin benzoate, flupyrazofos, fluacrypyrim, flufenzine, indoxacarb, tolfenpyrad, gamma-cyhalothrin, ethiprole, acetoprole, amidoflumet, chlorfenapyr, flonicamid, flufenerim, pyridalyl, sodium oleate, potassium oleate, azadirachtin, carbam, sodium carbam, propargite, azocyclotin, benzoximate, metaldehyde, protrifenbute, benclothiaz, flubendiamide, metaflumizole, nicotine sulfate, lime nitrogen, machine oil, carbam, sodium carbam, bensultap, oxolinic acid, pseudomonas CAB-02, trichoderma atroviride, fludioxonil, DPC, 4-[3-(3,4-dimethoxyphenyl)-3-(4-fluorophenyl)acryloyl] morpholi ne, anilazine, iprovalicarb, imazalil-S, iminoctadine albesilate, quinoxyfen, chinomethionat, metallic silver, quintozene, guazatine, chlorothalonil, chloroneb, cyazofamid, diethofencarb, dichlofluanide, dicloran, dithianon, diflumetorim, dimethirimol, cymoxanil, silthiofam, spiroxamine, zoxamide, thiadiazine, dodine, triforine, tolylfluanid, nitrothalisopropyl, famoxadone, fenamidone, fenitropan, fenpiclonil, fenhexamid, folpet, fluazinam, fluoroimide, propamocarb, propamocarb hydrochloride, propylene glycol fatty acid ester, prohexadione-calcium, benthiazole, benthiavalicarbisopropyl, myclobutanil, organonickel, resveratrol, (RS)-N-[2-(1,3-dimethylbutyl)thiophene-3-yl]-1-methyl-3-triflu oromethyl-1H-pirazole-4-carboxamide, diclomezine, iminoctadine acetate, isoprothiolane, tiadinil, probenazole, acibenzolar-S-methyl and mandipropamide,

a compound represented by the formula (2) (This compound is disclosed in Japanese Patent Laid-open Publication No. 2001-131141, while an insecticidal activity and a production method are also disclosed),

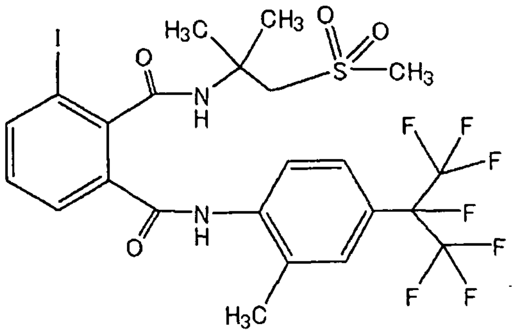

(2)

a compound represented by the formula (3),

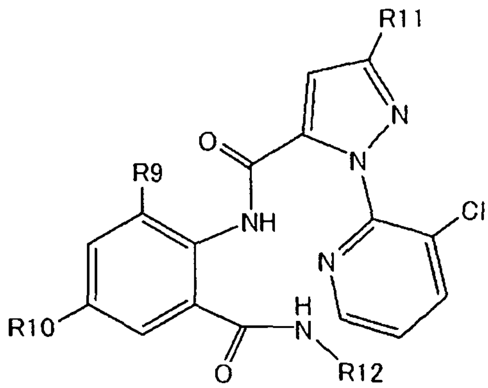

(3)

wherein, in the formula, R9 represents a methyl group or a chloro group; R10 represents a methyl group, a chloro group, a bromo group or a cyano group; R11 represents a chloro group, a bromo group, a trifluoromethyl group or a cyanomethoxy group; and R12 represents a methyl group or an isopropyl group,

a compound represented by the formula (4),

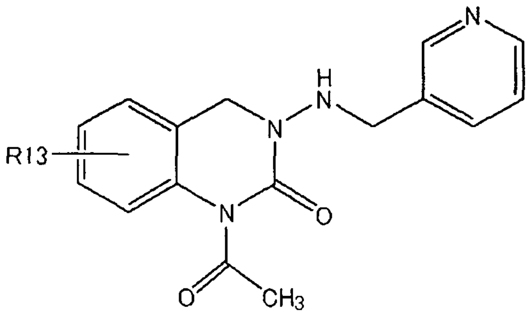

(4)

wherein, in the formula, R13 represents a 1,1,1,3,3,3,2-heptafluoro-2-propyl group or a 3,3,3,2,2,1,1-heptafluoro-1-propyl group,
a compound represented by the formula (5),

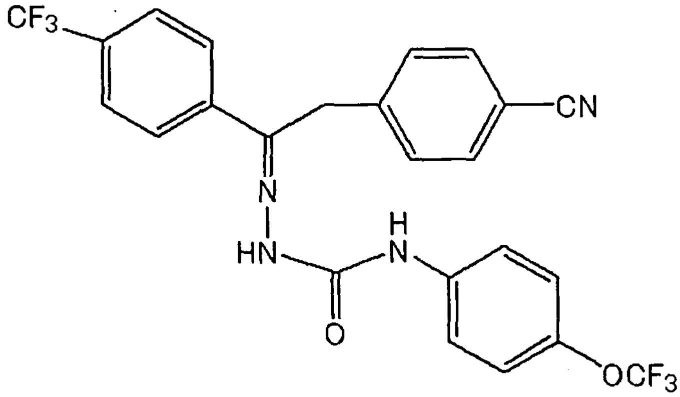

(5)

a compound represented by the formula (6),

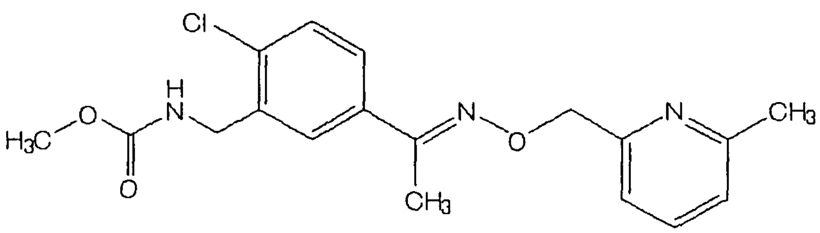

(6)

a compound represented by the formula (7),

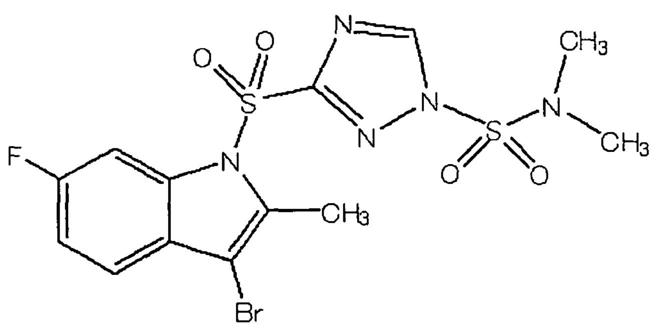

(7)

a compound represented by the formula (8),

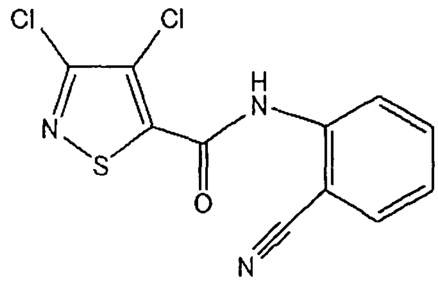

(8)

a compound represented by the formula (9), and

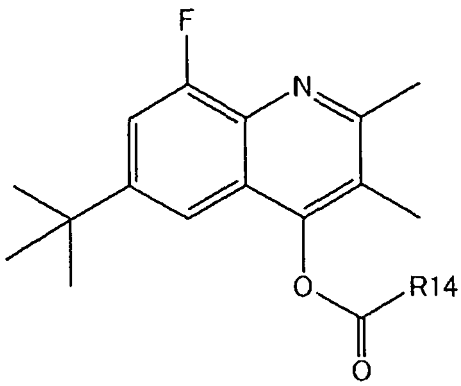

(9)

wherein, R14 represents a methyl group or a methoxymethyl group, a compound represented by the formula (10); and

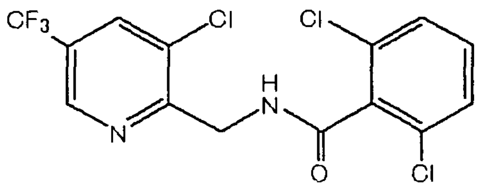

(10)

[3] a method for preventing pests using the composition for preventing harmful organisms as set forth in [1].

The composition for preventing harmful organisms according to the present invention exhibits an excellent control effect against plant diseases and/or insecticidal effect.

BEST MODE FOR CARRYING OUT THE INVENTION

The present invention will be illustrated in detail below.

The diamine derivative represented by the formula (1) is not restricted to the following, but representative examples of the substituents include the following.

Examples of the hydrocarbon having 1 to 6 carbon atoms which is substituted with halogen include chlorine substituted alkyl groups such as a chloromethyl group, a 2-chloroethyl group, a 2,2,2-trichloroethyl group, a 3-chloro-1-propyl group, a 4-chloro-1-butyl group and the like;

fluorine substituted alkyl groups such as a 2-fluoroethyl group, a 2,2,2-trifluoroethyl group, a 1,1,1,3,3,3-hexafluoro-2-propyl group, a 1,3-difluoro-2-propyl group, a 5-fluoro-1-pentyl group, a 6,6,6,5,5,4,4,3,3-nonafluoro-1-hexyl group, a 1-ethoxy-2,2,2-trifluoroethyl group and the like;

bromine substituted alkyl groups such as a 2-bromoethyl group, a 1,3-dibromo-2-propyl group and the like; iodine substituted alkyl groups such as a 2-iodoethyl group and the like;

alkyl groups containing two or more kinds of halogens such as a 3-bromo-1,1,1-trifluoro-2-propyl group and the like;

chlorine substituted cycloalkyl groups such as a chlorocyclopropyl group, a 2-chlorocyclobutyl group, a 2-chlorocyclopentyl group, a 2-chlorocyclohexyl group, a 3-chlorocyclohexyl group, a 4-chlorocyclohexyl group and the like;
fluorine substituted cycloalkyl groups such as a 2-fluorocyclohexyl group, a 2,2,3,3-tetrafluorocyclopropyl group and the like;
bromine substituted cycloalkyl groups such as a 2-bromocyclohexyl group and the like;
iodine substituted cycloalkyl groups such as a 2-iodocyclohexyl group and the like;
chlorine substituted alkenyl groups such as a 2-chloro-2-propenyl group, a 5-chloro-4-pentenyl group and the like;
fluorine substituted alkenyl groups such as a 4,4,4-trifluoro-2-butenyl group, a 6,6,6-trifluoro-5-hexenyl group and the like;
chlorine substituted cycloalkenyl groups such as a 2-chloro-2-cyclopropenyl group, a 3-chloro-3-cyclopentenyl group, a 2-chloro-2-cyclohexenyl group and the like; and
fluorine substituted cycloalkenyl groups such as a 2-fluoro-2-cyclobutenyl group and the like.

Examples of the hydrocarbon having 1 to 6 carbon atoms include a methyl group, an ethyl group, a propyl group, a butyl group, a pentyl group, a hexyl group, a cyclopropyl group, a cyclobutyl group, a cyclopentyl group, a cyclohexyl group, a vinyl group, a propenyl group, a butenyl group, a pentenyl group, a hexenyl group, a cyclopropenyl group, a cyclobutenyl group, a cyclopentenyl group, a cyclohexenyl group, an ethinyl group, a propynyl group, a butynyl group, a pentynyl group, a hexynyl group, a phenyl group, a naphthyl group and the like.
Examples of the heteroaryl group include a pyridyl group, a pyrimidyl group, a thienyl group, a furanyl group, a pyrazolyl group, an imidazolyl group, an isothiazolyl group, an isoxazolyl group, an indolyl group, a quinolyl group, a benzofuranyl group, a benzothienyl group, a benzoxazolyl group, a benzisoxazolyl group, a benzimidazolyl group, a benzothiazolyl group, a benzisothiazolyl group and the like.
Examples of the acyl group include an alkylcarbonyl group such as an acetyl group and the like or an arylcarbonyl group such as a benzoyl group and the like.
Examples of the substituent of the aryl group and the heteroaryl group include alkyl groups such as a methyl group, an ethyl group, a propyl group, a butyl group or the like;
cycloalkyl groups such as a cyclopropyl group, a cyclobutyl group, a cyclopentyl group, a cyclohexyl group or the like;
halogen substituted alkyl groups such as a trifluoromethyl group, a difluoromethyl group, a bromodifluoromethyl group, a trifluoroethyl group or the like;
alkoxy groups such as a methoxy group, an ethoxy group, a propoxy group, a butoxy group or the like;
halogen substituted alkoxy groups such as a trifluoromethoxy group, a difluoromethoxy group, a trifluoroethoxy group or the like;
alkoxycarbonyl groups such as a methoxycarbonyl group, an ethoxycarbonyl group, a propoxycarbonyl group, a butoxycarbonyl group or the like; aryloxycarbonyl groups such as a phenoxycarbonyl group or the like;
alkylamino groups such as a methylamino group, an ethylamino group, a propylamino group, a butylamino group, a dimethylamino group or the like;
cycloalkylamino groups such as a cyclopropylamino group, a cyclobutylamino group, a cyclopentylamino group, a cyclohexylamino group, a dicyclopropylamino group or the like;
alkylcarbamoyl groups such as a methylcarbamoyl group, an ethylcarbamoyl group, a propylcarbamoyl group, a butylcarbamoyl group, a dimethylcarbamoyl group or the like; cycloalkylcarbamoyl groups such as a cyclopropylcarbamoyl group, a cyclobutylcarbamoyl group, a cyclopentylcarbamoyl group, a cyclohexylcarbamoyl group, a dicyclopropylcarbamoyl group or the like;
alkylcarbonylamino groups such as a methylcarbonylamino group, an ethylcarbonylamino group, a propylcarbonylamino group, a butylcarbonylamino group or the like;
cycloalkylcarbonylamino groups such as a cyclopropylcarbonylamino group, a cyclobutylcarbonylamino group, a cyclopentylcarbonylamino group, a cyclohexylcarbonylamino group or the like;
alkyloxycarbonylamino groups such as a methyloxycarbonylamino group, an ethyloxycarbonylamino group, a propyloxycarbonylamino group, a butyloxycarbonylamino group or the like;
cycloalkyloxycarbonylamino groups such as a cyclopropyloxycarbonylamino group, a cyclobutyloxycarbonylamino group, a cyclopentyloxycarbonylamino group, a cyclohexyloxycarbonylamino group or the like;
alkylthio groups such as a methylthio group, an ethylthio group, a propylthio group, a butylthio group or the like;
halogen substituted alkylthio groups such as a trifluoromethylthio group, a difluoromethylthio group, a trifluoroethylthio group or the like;
alkylsulfinyl groups such as a methanesulfinyl group, an ethanesulfinyl group, a propanesulfinyl group, a butanesulfinyl group or the like;
halogen substituted alkylsulfinyl groups such as a trifluoromethanesulfinyl group, a difluoromethanesulfinyl group, a trifluoroethanesulfinyl group or the like;
alkylsulfonyl groups such as a methanesulfonyl group, an ethanesulfonyl group, a propanesulfonyl group, a butanesulfonyl group or the like;
halogen substituted alkylsulfonyl groups such as a trifluoromethanesulfonyl group, a difluoromethanesulfonyl group, a

trifluoroethanesulfonyl group or the like;
alkylsulfonamide groups such as a methanesulfonamide group, an ethanesulfonamide group, a propanesulfonamide group, a butanesulfonamide group or the like;
halogen substituted alkylsulfonamide groups such as a trifluoromethanesulfonamide group, a difluoromethanesulfonamide group, a trifluoroethanesulfonamide group or the like;
halogen atoms such as a fluorine atom, a chlorine atom, a bromine atom or an iodine atom; and
acyl groups such as an acetyl group, a benzoyl group or the like.

The compound represented by the formula (1) is a novel compound and the diamine derivative represented by the formula (1) can be produced according to the method as described in the reaction formula (1),

Reaction Formula (1)

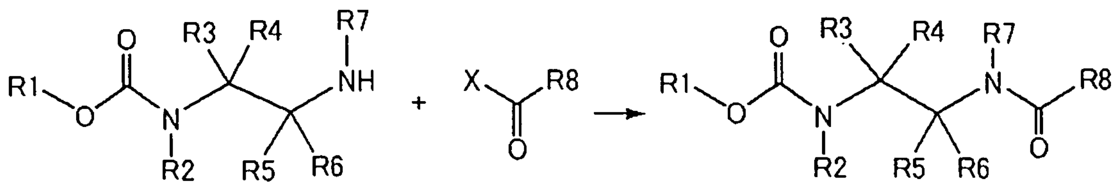

(11) (12) (1)

wherein, in the formula, R1, R2, R3, R4, R5, R6, R7 and R8 represent the same as those described above; and X represents a leaving group.
In the reaction formula (1), by reacting a diamine derivative represented by the formula (11) or its salts with a known carbonyl compound represented by the formula (12) without a solvent or in a solvent in the absence or presence of a base, the diamine derivative represented by the formula (1) can be produced.

In the compound represented by the formula (12), as the leaving group represented by X, there can be exemplified, for example, a halogen atom such as a chlorine atom, an alkoxy group such as a methoxy group and an ethoxy group, an aryloxy group such as a phenoxy group and a 4-nitrophenyl group, an acyloxy group such as an acetyloxy group and a benzoyloxy group, an alkoxycarbonyloxy group such as a methoxycarbonyloxy group, an arylcarbonyloxy group such as a phenylcarbonyloxy group, an alkylthio group such as a methylthio group, a 2,5-dioxopyrrolidinyloxy group, a benzotriazolyloxy group and an imidazolyl group, respectively.

As the base which can be used in the reaction represented by the reaction formula (1), there can be exemplified, for example, alkali metal hydroxides such as sodium hydroxide, potassium hydroxide and the like; alkaline earth metal hydroxides such as magnesium hydroxide, calcium hydroxide and the like; alkali metal hydrides such as sodium hydride, potassium hydride and the like; alkali metal alcoholates such as sodium methoxide, sodium ethoxide and the like; alkali metal oxides such as sodium oxide and the like; carbonates such as potassium carbonate, sodium carbonate and the like; phosphates such as tri-potassium phosphate, tri-sodium phosphate, di-potassium hydrogen phosphate, di-sodium hydrogen phosphate and the like; acetates such as sodium acetate, potassium acetate and the like; and organic bases such as pyridine, 4-(dimethylamino)pyridine (DMAP), triethylamine, 1,8-diazabicyclo[5.4.0]-undecene-7-en (DBU) and the like.

The amount of these bases used is not particularly restricted, and when any of the above organic bases is used, it can also be used as a solvent.

Examples of the solvent which can be used in the reaction represented by the reaction formula (1) include water; halogenated hydrocarbons such as dichloromethane, chloroform and the like; aromatic hydrocarbons such as benzene, toluene, xylene and the like; aliphatic hydrocarbons such as hexane, heptane and the like; polar aprotic solvents such as dimethylformamide (DMF), dimethylacetamide (DMA), dimethyl sulfoxide (DMSO), 1,3-dimethyl-2-imidazolidinone (DMI), 1-methyl-2-pyrrolidone (NMP) and the like; ethers such as diethyl ether, diisopropyl ether, 1,2-dimethoxyethane (DME), tetrahydrofuran (THF), dioxane and the like; and nitriles such as acetonitrile, propionitrile and the like as far as they are not particularly reacted with the formulae (1), (11) and (12).

The equivalent of the carbonyl compound represented by the formula (12) is preferably from 1 to 2 equivalents and more preferably from 1 to 1.2 equivalents, based on the compound represented by the formula (11).

The reaction temperature and reaction time in the above reaction can be changed over a wide range. Generally, the reaction temperature is preferably from -20 to 200 degree centigrade and more preferably from 0 to 100 degree

centigrade. The reaction time is preferably from 0.01 hour to 50 hours and more preferably from 0.1 hour to 15 hours.

The diamine derivative represented by the formula (11) and the salts thereof in the reaction formula (1), in addition to commercially available ones, can be easily produced by the methods such as Gabriel's synthesis; Delepine reaction; well known amine synthesis in which a cyano group, amide, imine, oxime or the like is reduced; or a method described in Tetrahedron Asymmetry, vol. 11, p. 1907 (2000).

The compound represented by the formula (12) of the reaction formula (1) can be produced by the usual method which comprises reacting a known carboxylic acid derivative represented by the formula (13) with thionyl chloride, oxalyl chloride, phosgene, phosphorus oxychloride, phosphorus trichloride, phosphorus pentachloride, thionyl bromide, phosphorus tribromide, diethylaminosulfur trifluoride, 1,1'-carbonylbis-1H-imidazole or the like,

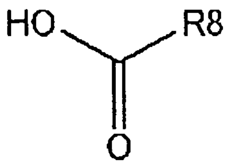

(13)

wherein, in the formula, R8 represents the same as those described above.

The compound represented by the formula (12) of the reaction formula (1) can be produced by the usual method which comprises reacting a known carboxylic acid derivative represented by the formula (13) with alcohols such as methyl alcohol, ethyl alcohol and the like, or phenols such as phenol, nitrophenol and the like.

The compound represented by the formula (12) of the reaction formula (1) can be produced by the usual method which comprises reacting a known carboxylic acid derivative represented by the formula (13) with chloroformate esters such as methyl chloroformate, phenyl chloroformate and the like.

The compound represented by the formula (12) of the reaction formula (1) can be produced by the usual method which comprises reacting a known carboxylic acid derivative represented by the formula (13) with N-hydroxysuccinimide, 1-hydroxybenzotriazole and the like.

The diamine derivative represented by the formula (1) can also be produced by the method as described in the reaction formula (2),

Reaction Formula (2)

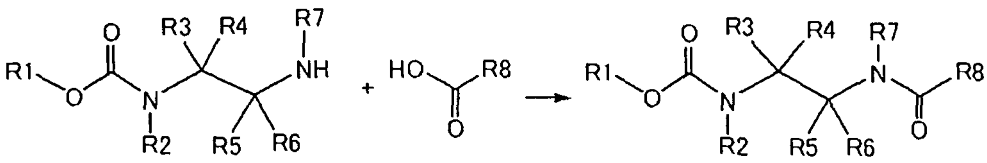

(11) (13) (1)

wherein, in the formula, R1, R2, R3, R4, R5, R6, R7 and R8 represent the same as those described above. In the reaction formula (2), by condensing the diamine derivative represented by the formula (11) or the salts thereof with a known carboxylic acid derivative represented by the formula (13) without a solvent or in a solvent, the diamine derivative represented by the formula (1) can be produced.

As a condensation agent in this case, N,N'-dicyclohexylcarbodiimide, 1,1'-carbonylbis-1H-imidazole, 1-ethyl-3-(3-dimethylaminopropyl)carbodiimide hydrochloride, 2-chloro-1, 3-dimethylimidazorium chloride or the like can be used.

The amount of the condensation agent used is from 1 to 2 equivalents and preferably from 1 to 1.2 equivalents, based on the compound represented by the formula (13).

Furthermore, as the organic solvent in this case, the same organic solvents as those used in the method illustrated in the reaction formula (1) can be used as far as they are not particularly reacted with the formulae (1), (11) and (13).

The amount of the carboxylic acid derivative represented by the formula (13) is from 1 to 2 equivalents and

preferably from 1 to 1.2 equivalents, based on the diamine derivative represented by the formula (11).

The reaction temperature and reaction time in the above reaction can be changed over a wide range. Generally, the reaction temperature is from -20 to 200 degree centigrade and preferably from 0 to 100 degree centigrade. The reaction time is from 0.01 hour to 50 hours and preferably from 0.1 hour to 15 hours.

The compound represented by the formula (1) of the present invention can also be produced according to the method as described in the reaction formula (3),

Reaction Formula (3)

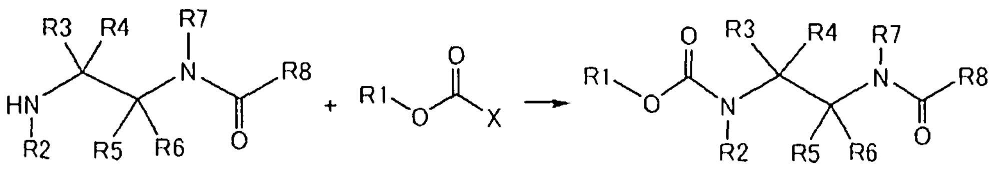

(14) (15) (1)

wherein, in the formula, R1, R2, R3, R4, R5, R6, R7 and R8 represent the same as those described above; and X represents a leaving group.

In the reaction formula (3), by reacting a diamine derivative represented by the formula (14) or the salts thereof with a known compound represented by the formula (15) without a solvent or in a solvent in the absence or presence of a base, the diamine derivative represented by the formula (1) can be produced.

In the compound represented by the formula (15), as the leaving group represented by X, there can be exemplified, for example, a halogen atom such as a chlorine atom, an alkoxy group such as a methoxy group and an ethoxy group, an aryloxy group such as a phenoxy group and a 4-nitrophenyl group, an acyloxy group such as an acetyloxy group and a benzoyloxy group, an alkoxycarbonyloxy group such as a methoxycarbonyloxy group, an arylcarbonyloxy group such as a phenylcarbonyloxy group, an alkylthio group such as a methylthio group, a 2,5-dioxopyrrolidinyloxy group, a benzotriazolyloxy group, an imidazolyl group and the like, respectively.

The compound represented by the formula (15) of the reaction formula (3) can be produced by the usual method which comprises reacting corresponding alcohols with phosgenes such as phosgene, triphosgene and the like, or chloroformate esters such as phenyl chloroformate, 4-nitrophenyl chloroformate and the like.

Furthermore, as the base in this case, the same bases as those used in the method illustrated in the reaction formula (1) can be used. The amount of these bases used is not particularly restricted, and when any of the above organic bases is used, it can also be used as a solvent.

Furthermore, as the organic solvent in this case, the same organic solvents as those used in the method illustrated in the reaction formula (1) can be used as far as they are not particularly reacted with the formulae (1), (14) and (15).

The amount of the compound represented by the formula (15) used is from 1 to 4 equivalents and preferably from 1 to 2 equivalents, based on the diamine derivative represented by the formula (14).

The reaction temperature and reaction time in the above reaction can be changed over a wide range. Generally, the reaction temperature is from -20 to 200 degree centigrade and preferably from 0 to 100 degree centigrade. The reaction time is from 0.01 hour to 50 hours and preferably from 0.1 hour to 15 hours.

There exist asymmetric carbon atoms in the diamine derivatives represented by the formula (1), depending on the type of substituent(s), and the derivatives can exist as an optical isomer, diastereoisomer, racemic modification or mixture thereof at an arbitrary rate. Accordingly, all isomers of these types and the mixture thereof are also included in the present invention.

The composition for preventing harmful organisms of the present invention can be used in combination with the diamine derivative represented by the formula (1) and one or more compounds selected from the group consisting of other fungicides, insecticides and acaricides.

Examples of the fungicides include carboxamide-based fungicides such as thifluzamide, flutolanil, mepronil, pencycuron, ethaboxam, oxycarboxin, carboxin, silthiofam and the like;

melanin biosynthesis inhibitor-based fungicides such as carpropamid, diclocymet, tricyclazole, pyroquilon, fenoxanil, fthalide and the like;

strobilurin-based fungicides such as azoxystrobin, metominostrobin, orysastrobin, kresoxim-methyl, fluoxastrobin, trifloxystrobin, dimoxystrobin, pyraclostrobin, picoxystrobin and the like;
antibiotic fungicides such as kasugamycin, validamycin, blasticidin-S-benzylaminobenzenesulfonate, polyoxin, tecloftalam, oxytetracycline, streptomycin, blasticidin-S, mildiomycin, polyoxins and the like;
pyrimidine-based fungicides such as ferimzone, fenarimol, pyrifenox, nuarimol, bupirimate and the like;
azole-based fungicides such as simeconazole, furametpyr, ipconazole, triflumizole, prochloraz, pefurazoate, imazalil, imibenconazole, etridiazole, epoxiconazole, oxpoconazole fumarate, diniconazole, difenoconazole, cyproconazole, thifluzamide, tetraconazole, tebuconazole, triadimenol, triadimefon, triticonazole, bitertanol, hymexazole, fenbuconazole, fluquinconazole, flusilazole, flutriafol, prothioconazole, propiconazole, bromuconazole, hexaconazole, penconazole, metconazole and the like;
copper fungicides such as copper, copper nonylphenolsulfonate, basic copper chloride, basic copper sulfate, oxine copper, DBEDC, anhydrous copper sulfate, copper (II) hydroxide and the like;
benzimidazole-based fungicides such as thiophanate-methyl, benomyl, thiabendazole, thiophanate, carbendazim, fuberidazole and the like;
organophosphate-based fungicides such as EDDP, IBP, tolclofos-methyl, fosetyl, dinocap, pyrazophos and the like;
acylalanine-based fungicides such as metalaxyl, oxadixyl, benalaxyl, metalaxyl-M and the like;
dicarboximide-based fungicides such as iprodione, procymidone, vinclozolin, chlozolinate and the like;
dithiocarbamate-based fungicides such as thiuram, manzeb, propineb, zineb, metiram, maneb, ziram, ambam and the like;
soil fungicides such as hydroxyisoxazole, methasulfocarb, chloropicrin, flusulfamide, dazomet, methyl isothiocyanate, potassium hydroxyisoxazole, echlomezol, 1,3-dichloropropene, carbam and the like; organochlorine-based fungicides such as TPN, captan and the like;
anilinopyrimidine-based fungicides such as mepanipyrim, cyprodinil, pyrimethanil and the like;
natural product fungicides such as rape seed oil, machine oil and the like;
inorganic fungicides such as sulfur, lime sulfur mixture, zinc sulfate, fentin, sodium hydrogen carbonate, potassium hydrogen carbonate, hypochlorite salts and the like;
morpholine-based fungicides such as dimethomorph, fenpropidin, fenpropimorph, spiroxamine, tridemorph, dodemorph, flumorph and the like; and
fungicides such as an oxolinic acid, pseudomonas CAB-02, trichoderma atroviride, fludioxonil, DPC, anilazine, iprovalicarb, imazalil-S, iminoctadine albesilate, quinoxyfen, chinomethionat, metallic silver, quintozene, guazatine, chlorothalonil, chloroneb, cyazofamid, diethofencarb, dichlofluanide, dicloran, dithianon, diflumetorim, dimethirimol, cymoxanil, silthiofam, spiroxamine, zoxamide, thiadiazine, dodine, triforine, tolylfluanid, nitrothalisopropyl, famoxadone, fenamidone, fenitropan, fenpiclonil, fenhexamid, folpet, fluazinam, fluoroimide, propamocarb, propamocarb hydrochloride, propylene glycol fatty acid ester, prohexadione-calcium, benthiazole, benthiavalicarbisopropyl, myclobutanil, organonickel, resveratrol, diclomezine, iminoctadine acetate, isoprothiolane, tiadinil, probenazole, acibenzolar-S-methyl, mandipropamide and the like. Of these, all of those described with concrete examples have a structure known in the art and can be produced as needed.
Further, some of them are available from the market.

As the fungicide which can be used in combination with the diamine derivative represented by the formula (1), 4-[3-(3,4-dimethoxyphenyl)-3-(4-fluorophenyl)acryloyl]morpholi ne can be cited. This compound is described in US6020332, while a fungicidal activity and a production method are also disclosed.

As the fungicide which can be used in combination with the diamine derivative represented by the formula (1), (RS)-N-[2-(1,3-dimethylbutyl)thiophene-3-yl]-1-methyl-3-triflu oromethyl-1H-pirazole-4-carboxamide (General name applied for: PENTHIOPYRAD) can be cited. This compound is disclosed in Japanese Patent No. 3164762, while a fungicidal activity and a production method are also disclosed.
As the compound which can be used in combination with the diamine derivative represented by the formula (1), a compound represented by the formula (6) can be cited,

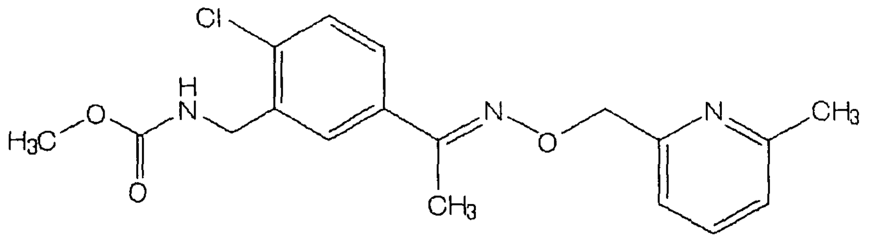

(6)

This compound is described in WO0110825, while a fungicidal activity and a production method are also disclosed.

As the compound which can be used in combination with the diamine derivative represented by the formula (1), a compound represented by the formula (7) can be cited,

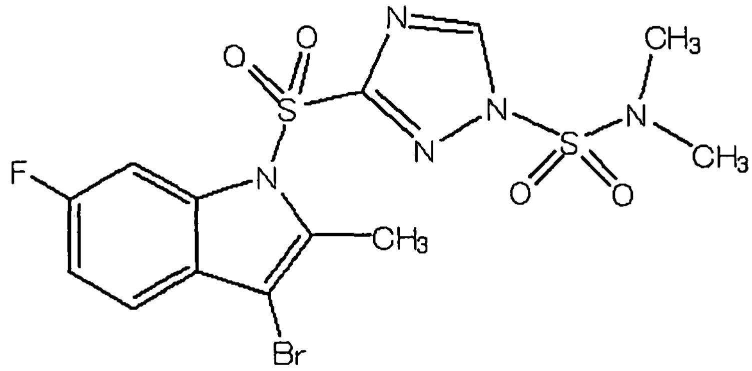

(7)

This compound is described in US6620812, while a fungicidal activity and a production method are also disclosed.

As the compound which can be used in combination with the diamine derivative represented by the formula (1), a compound represented by the formula (8) can be cited,

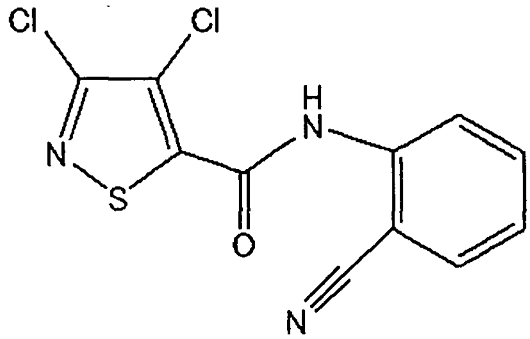

(8)

This compound is described in WO9924413, while a fungicidal activity and a production method are also disclosed.

As the compound which can be used in combination with the diamine derivative represented by the formula (1), a compound represented by the formula (9) can be cited,

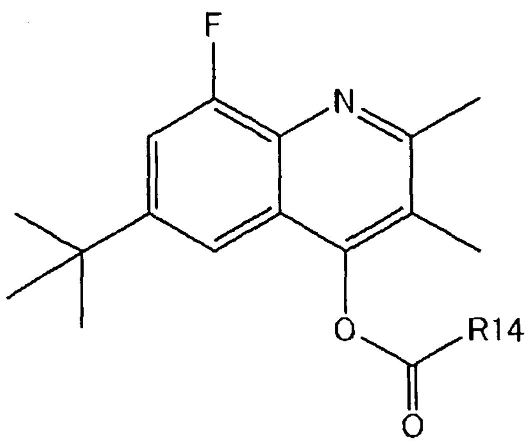

(9)

wherein, in the formula, R14 represents a methyl group or a methoxymethyl group. This compound is described in WO0192231, while a fungicidal activity and a production method are also disclosed.

As the compound which can be used in combination with the diamine derivative represented by the formula (1), a

compound represented by the formula (10) can be cited,

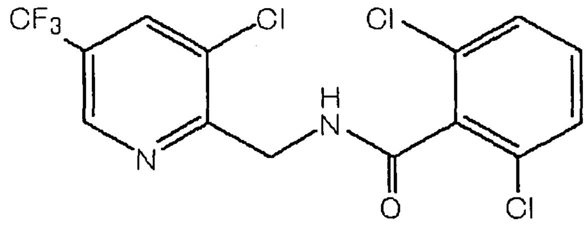

(10)

This compound is described in WO03079788, while a fungicidal activity and a production method are also disclosed.

Furthermore, examples of the insecticide which can be used in combination with the diamine derivative represented by the formula (1) include pyrethroid-based insecticides such as allethrin, tetramethrin, resmethrin, phenothrin, furamethrin, permethrin, cypermethrin, deltamethrin, cyhalothrin, cyfluthrin, fenpropathrin, tralomethrin, cycloprothrin, flucythrinate, fluvalinate, acrinathrin, tefluthrin, bifenthrin, empenthrin, beta-cyfluthrin, cypermethrin, fenvalerate, esfenvalerate, flubrocythrinate, metofluthrin, profluthrin, dimefluthrin, flubrocythrinate, silafluofen, pyrethrum extract, etofenprox, halfenprox and the like;
organophosphate-based insecticides such as DDVP, cyanophos, fenthion, fenitrothion, tetrachlorvinphos, dimethylvinphos, propaphos, methyl parathion, temephos, phoxim, acephate, isofenphos, salithion, DEP, EPN, ethion, mecarbam, pyridafenthion, diazinon, pirimiphos-methyl, etrimfos, isoxathion, quinalphos, chlorpyrifos-methyl, chlorpyrifos, phosalone, phosmet, methidathion, oxydeprofos, vamidothion, malathion, phenthoate, dimethoate, formothion, thiometon, ethylthiometon, phorate, terbufos, profenofos, prothiofos, sulprofos, pyraclofos, monocrotophos, naled, fosthiazate, trichlorphon, ethoprophos, cadusafos, chlorfenvinphos, dichlofenthion, ethylthiometon, methamidophos, dichlorvos, tebupirimfos, omethoate, triazophos, oxydemeton-methyl, azinphos-methyl, chlorethoxyphos, dicrotophos, disulfoton, fenamiphos, phosphamidon, trichlorphon, chlormephos, demeton-S-methyl, mevinphos, parathion, tebupirimfos, MEP, malathion, PHC, DCIP, MPP and the like;
carbamate-based insecticides such as NAC, MTMC, MIPC, BPMC, XMC, PHC, MPMC, ethiofencarb, bendiocarb, pirimicarb, carbosulfan, benfuracarb, methomyl, oxamyl, aldicarb, thiodicarb, alanycarb, carbofuran, methiocarb, fenothiocarb, formetanate, xylylmethylcarbamate, propoxur, isoprocarb, furathiocarb and the like;
neonicotinoid-based insecticides such as imidacloprid, nitenpyram, acetamiprid, dinotefuran, thiamethoxam, thiacloprid, clothianidin and the like;
organochlorine-based insecticides such as bromopropylate, dicofol, endosulfan, linden and the like;
insect growth regulators such as diflubenzuron, chlorfluazuron, teflubenzuron, triflumuron, flufenoxuron, flucycloxuron, hexaflumuron, fluazuron, diafenthiuron, novaluron, noviflumuron, bistrifluron, chromafenozide, halofenozide, methoxyfenozide, lufenuron, cyromazine, triazamate, tebufenozide, buprofezin, isoprothiolane and the like;
natural product insecticides such as nicotine sulfate, polynactin complex, abamectin, milbemectin, lepimectin, BT agent, spinosad, rotenone and the like;
nereistoxin-based insecticides such as cartap, thiocyclam, bensultap and the like; and
insecticides such as pymetrozine, fipronil, buprofezin, fenoxycarb, pyriproxyfen, methoprene, hydroprene, kinoprene, endosulfan, triazuron, tebufenozide, benzoepin, emamectin benzoate, emamectin benzoate, flupyrazofos, fluacrypyrim, flufenzine, indoxacarb, tolfenpyrad, gamma-cyhalothrin, ethiprole, acetoprole, amidoflumet, chlorfenapyr, flonicamid, flufenerim, pyridalyl, sodium oleate, potassium oleate, azadirachtin, carbam, sodium carbam, propargite, azocyclotin, benzoximate, metaldehyde, protrifenbute, benclothiaz, flubendiamide, metaflumizole, nicotine sulfate, lime nitrogen, machine oil, carbam, sodium carbam, bensultap and the like. Of these, all of those described with concrete examples have a structure known in the art and can be produced as needed. Further, some of them are available from the market.

As the compound which can be used in combination with the diamine derivative represented by the formula (1), a compound represented by the formula (2) can be cited,

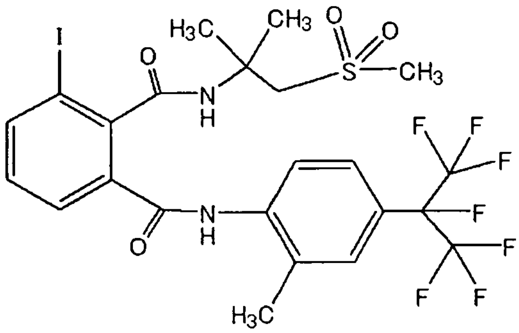

(2)

This compound is described in Japanese Patent Laid-open Publication No. 2001-131141, while an insecticidal activity and a production method are also disclosed.

As the compound which can be used in combination with the diamine derivative represented by the formula (1), a compound represented by the formula (3) can be cited,

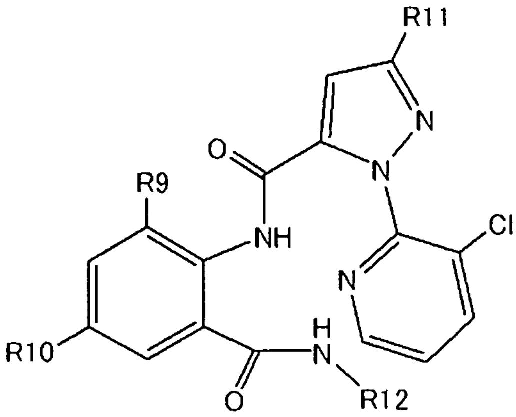

(3)

wherein, in the formula, R9 represents a methyl group or a chloro group; R10 represents a methyl group, a chloro group, a bromo group or a cyano group; R11 represents a chloro group, a bromo group, a trifluoromethyl group or a cyanomethoxy group; and R12 represents a methyl group or an isopropyl group. This compound is described in WO200315519, while an insecticidal activity and a production method are also disclosed.

As the compound which can be used in combination with the diamine derivative represented by the formula (1), a compound represented by the formula (4) can be cited,

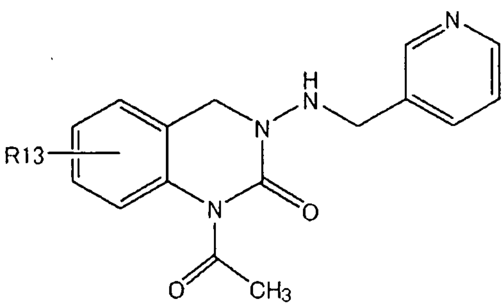

(4)

wherein, in the formula, R13 represents a 1,1,1,2,3,3,3-heptafluoro-2-propyl group or a 1,1,2,2,3,3,3-heptafluoro-1-propyl group. This compound is described in Japanese Patent Laid-open Publication No. 2001-342186, while an insecticidal activity and a production method are also disclosed.

As the compound which can be used in combination with the diamine derivative represented by the formula (1), a compound represented by the formula (5) can be cited,

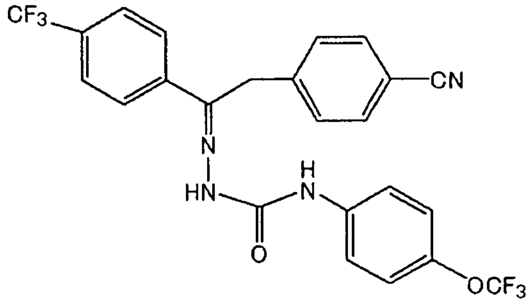

(5)

This compound is described in US5543573, while an insecticidal activity and a production method are also disclosed.

Furthermore, examples of the acaricide which can be used in combination with the diamine derivative represented by the formula (1) include chlorobenzilate, fenisobromolate, tetradifon, CPCBS, BPPS, chinomethionat, amitraz, benzomate, hexythiazox, fenbutatin oxide, cyhexatin, dienochlor, clofentezine, pyridaben, fenpyroximate, fenazaquin, tebufenpyrad, pyrimidifen, acequinocyl, bifenazate, etoxazol, spirodiclofen, spiromesifen, amidoflumet, diflovidazin and kelthane. Of these, all of those described with concrete examples have a structure known in the art and can be produced as needed. Further, some of them are available from the market. Fungicides, insecticides and acaricides which can be used in combination with the diamine derivative represented by the formula (1) are not restricted thereto.

The composition for preventing harmful organisms of the present invention exhibits an excellent control effect against plant diseases and/or insecticidal effect, and exerts an accurate control effect against harmful pests.

Examples of such a pest include TYLENCHIDA such as ANGUINIDAE including bent grass nematode (Anguina agrostis), ear-cockle nematode (Anguina tritici), potato rot nematode (Ditylenchus destructor) and the like, TYLENCHORYNCHIDAE including tobacco stunt nematode (Tylenchorhynchus claytoni), sugar cane stylet nematode (Tylenchorhynchus martini), stunt nematode (Tylenchorhynchus sp.) and the like, PRATYLENCHIDAE including rice root nematode (Hirschmanniella imamuri), rice root nematode (Hirschmanniella oryzae), coffee root-lesion nematode (Pratylenchus coffeae), lesion nematode (Pratylenchus convallariae), root lesion nematode (Pratylenchus fallax), root lesion nematode of tea (Pratylenchus loosi), California root lesion nematode (Pratylenchus neglectus), Cobb's root lesion nematode (Pratylenchus penetrans), plant root lesion nematode (Pratylenchus sp.) and the like, HOPLOLAMIDAE including Steiner's spiral nematode (Helicotylenchus dihystera), grass spiral nematode (Helicotylenchus erythrinae), spiral nematode (Helicotylenchus sp.), lance nematode (Hopolaimus sp.), reniform nematode (Rotylenchulus reniformis), British spiral nematode (Scutellonema brachyurum) and the like, HETERODERIDAE including oat nematode (Bidera avenae), cactus cyst nematode (Cactodera cacti), cyst nematode (Cryphodera sp.), gold-plated nematode (Globodera rostochiensis), Japanese cyst nematode (Heterodera elachista), soybean cyst nematode (Heterodera glycines), clover cyst nematode (Heterodera trifolii) and the like, MELOIDOGYNIDAE including peanut root-knot nematode (Meloidogyne arenaria), camellia root-knot nematode (Meloidogyne camelliae), root-knot nematode (Meloidogyne graminis), northern root-knot nematode (Meloidogyne hapla), southern root-knot nematode (Meloidogyne incognita), root-knot nematode (Meloidogyne sp.) and the like;

DORYLAIMIDA such as LONGIDORIDAE including needle nematode (Longidorus martini), needle nematode (Longidorus sp.), American dagger nematode (Xiphinema americanum), dagger nematode (Xiphinema sp.) and the like, TRICHODORIDAE including stubby root nematode (Trichodorus sp.) and the like;

ACARINA such as TARSONEMIDAE including broad mite (Polyphagotarsonemus latus), cyclamen mite (Steneotarsonemus pallidus), fungus mite (Tarsonemus waitei) and the like, PYEMOTIDAE including straw itch mite (Pyemotes ventricosus) and the like, EUPODIDAE including blue oat mite (Penthaleus major) and the like, TENUIPALPIDAE including citrus flat mite (Brevipalpus lewisi), privet.mite (Brevipalpus obovatus), pineapple flat mite (Dolichotetranychus floridanus), persimmon false spider mite (Tenuipalpus zhizhilashviliae) and the like, TUCKERELLIDAE including Tuckerellid mite (Tuckerella pavoniformis) and the like, TETRANYCHIDAE including clover mite (Bryobia praetiosa), brown almond mite (Bryobia rubrioculus), apricot spider mite (Eotetranychus boreus), spider mite (Eotetranychus geniculatus), spider mite (Eotetranychus pruni), 6-spotted mite (Eotetranychus sexmanaculatus), tetranychid mite (Eotetranychus smithi), red spider mite (Eotetranychus uncatus), sugi spider mite (Oligonychus hondoensis), southern red mite (Oligonychus ilicis), larch mite (Oligonychus karamatus), citrus red mite (Panonychus citri), European red mite (Panonychus ulmi), carmine spider mite (Tetranychus cinnabarinus), tea red spider mite (Tetranychus kanzawai), 2-spotted spider mite (Tetranychus urticae), hawthorn spider mite (Tetranychus viennensis) and the like, ERIOPHIDAE including pink tea rust mite (Acaphylla theae), tulip bulb mite (Aceria tulipae), pink citrus rust mite (Aculops pelekassi), plum rust mite (Aculus

fockeui), apple rust mite (Aculus schlechtendali), ribbed tea mite (Calacarus carinatus), grape leaf rust mite (Calepitrimerus vitis), pear rust mite (Epitrimerus pyri), Japanese pear rust mite (Eriophyes chibaensis) and the like, ACARIDAE including flour mite (Acarus siro), brown legged grain mite (Aleuroglyphus ovatus), bulb mite (Rhizoglyphus robini), mould mite (Tyrophagus putrescentiae) and the like;

THYSANURA such as LEPISMATIDAE including oriental silverfish (Ctenolepisma villosa), silverfish (Lepisma saccharina), firebrat (Thermobia domestica) and the like;

Orthoptera such as BLATTIDAE including American cockroach (Periplaneta americana), smokybrown cockroach (Periplaneta fuliginosa), Japanese cockroach (Periplaneta japonica) and the like, BLATTELLIDAE including German cockroach (Blattella germanica), wild cockroach (Blattella lituricollis) and the like, TETTIGONIIDAE including Northern coneheaded long horn grasshopper (Homorocoryphus jezoensis), walker (Homorocoryphus lineosus) and the like, GRYLLOTALPIDAE including mole cricket (Gryllotalpa sp.) and the like, ACRIDIDAE including small rice grasshopper (Oxya hyla intricata), rice grasshopper (Oxya yezoensis) and the like;

ISOPTERA such as drywood termite (Cryptotermes domesticus), Formosan subterranean termite (Coptotermes formosanus), Japanese subterranean termite (Reticulitermes formosanus), fungus-growing termite (Odontotermes formosanus) and the like;

THYSANOPTERA such as THRIPIDAE including grass thrips (Anaphothrips obscurus), cocksfoot thrips (Chirothrips manicatus), black tea thrips (Dendrothrips minowai), flower thrips (Frankliniella intonsa), thrips (Frankliniella lilivora), greenhouse thrips (Heliothrips haemorrhoidalis), composite thrips (Microcephalothrips abdominalis), oriental soybean thrips (Mycterothrips glycines), mulberry thrips (Pseudodendrothrips mori), yellow tea thrips (Scirtothrips dorsalis), redbanded thrips (Selenothrips rubrocinctus), oriental rice thrips (Stenchaetothrips biformis), thrips (Thrips alliorum), loquat thrips (Thrips coloratus), Eurasian yellow flower thrips (Thrips flavus), banana flower thrips (Thrips hawaiiensis), chrysanthemum thrips (Thrips nigropilosus), melon thrips (Thrips palmi), western flower thrips (Frankliniella occidentalis), light brown soybean thrips (Thrips setosus), gladiolus thrips (Thrips simplex), onion thrips (Thrips tabaci) and the like, PHLAEOTHRIPIDAE including rye thrips (Haplothrips aculeatus), Chinese thrips (Haplothrips chinensis), predatory thrips (Haplothrips kurdjumovi), red clover thrips (Haplothrips niger), thrips (Leeuwenia pasanii), Camphor thrips (Liothrips floridensis), lily thrips (Liothrips vaneeckei), thrips (Litotetothrips pasaniae), Japanese gall-forming thrips (Ponticulothrips diospyrosi) and the like;

HEMIPTERA such as PENTATOMIDAE including black-shouldered shield bug (Carpocoris purpureipennis), bloe bug (Dolycoris baccarum), cabbage bug (Eurydema pulchrum), cabbage bug (Eurydema rugosum), 2-spotted sesame bug (Eysarcoris guttiger), whitespotted larger spined bug (Eysarcoris lewisi), whitespotted bug (Eysarcoris parvus), whitespotted stink bug (Eysarcoris ventralis), fruit-piercing stink bug (Glaucias subpunctatus), red-striped stink bug (Graphosoma rubrolineatum), brown marmorated stink bug (Halyomorpha mista), rice stink bug (Lagynotomus elongatus), eastern green stink bug (Nezara antennata), southern green stink bug (Nezara viridula), redbanded shield bug (Piezodorus hybneri), brownwinged green bug (Plautia stali), black rice bug (Scotinophara lurida), shield bug (Stariodes iwasakii) and the like, COREIDAE including winter cherry bug (Acanthocoris sordidus), coreid bug (Anacanthocoris striicornis), narrow squash bug (Cletus punctiger), slender rice bug (Cletus trigonus), leaf-footed bug (Molipteryx fuliginosa) and the like, ALYDIDAE including paddy bug (Leptocorisa acuta), rice bug (Leptocorisa chinensis), rice bug (Leptocorisa oratorius), bean bug (Riptortus clavatus) and the like, RHOPALIDAE including carrot bug (Aeschynteles maculatus), plant bug (Liorhyssus hyalinus) and the like, LYGAEIDAE including oriental chinch bug (Cavelerius saccharivorus), chinch bug (Macropes obnubilus), ground bug (Pachybrachius luridus), lygaeid bug (Paromius exguus), seed bug (Togo hemipterus) and the like, PYRRHOCORIDAE including red cotton bug (Dysdercus cingulatus), red bug (Dysdercus poecilus) and the like, TINGIDAE including chrysanthemum lace bug (Galeatus spinifrons), lace bug (Metasalis populi), silver magnolia lace bug (Stephanitis fasciicarina), pear lace bug (Stephanitis nashi), azalea lace bug (Stephanitis pyrioides), chestnut lace bug (Uhlerites debilis), walnut lace bug (Uhlerites latius) and the like, MIRIDAE including alfalfa plant bug (Adelphocoris lineolatus), plant bug (Adelphocoris triannulatus), green leaf bug (Apolygus lucorum), pale green plant bug (Apolygus spinolai), sweet potato yellow bug (Creontiades pallidifer), tobacco leaf bug (Cyrtopeltis tenuis), plant bug (Ectometopterus micantulus), plant bug (Halticiellus insularis), apple leaf bug (Heterocordylus flavipes), mirid bug (Lygus disponsi), lygus bug (Lygus saundersi), mirid bug (Orthotylus flavosparsus), plant bug (Stenodema calcaratum), mired plant bug (Stenotus binotatus), sorghum plant bug (Stenotus rubrovittatus), broken back bug (Taylorilygus pallidulus), rice leaf bug (Trigonotylus coelestialium) and the like, CICADIDAE including large brown cicada (Graptopsaltria nigrofuscata) and the like, APHROPHORIDAE including spittle bug (Aphrophora costalis), pine spittle bug (Aphrophora flavipes), spittle bug (Aphrophora intermedia), spittle bug (Clovia punctata), meadow spittle bug (Philaenus spumarius) and the like, TETTIGELLIDAE including black-tipped leafhopper (Bothrogonia japonica), green leafhopper (Cicadella viridis) and the like, CICADELLIDAE including oak leafhopper (Aguriahana quercus), polyphagous leafhopper (Alnetoidia alneti), citrus leafhopper (Apheliona ferruginea), grape leafhopper (Arboridia apicalis), small green leafhopper (Edwardsiana flavescens), rose leafhopper (Edwardsiana rosae), spruce leafhopper (Empoasca abietis), tea green leafhopper (Empoasca onukii), yellow rice leafhopper (Thaia subrufa), small citrus leafhopper (Zyginella citri) and the like, DELTOCEPHALIDAE including aster leafhopper (Macrosteles fascifrons), green rice leafhopper (Nephotettix cincticeps), green

rice leafhopper (Nephotettix nigropictus), green leafhopper (Nephotettix virescens), apple leafhopper (Orientus ishidai), zigzag leafhopper (Recilia dorsalis), wheat leafhopper (Sorhoanus tritici), leafhopper (Speudotettix subfusculus) and the like, DELPHACIDAE including small brown planthopper (Laodelphax striatellus), brown planthopper (Nilaparvata lugens), planthopper (Numata muiri), maize planthopper (Peregrinus maidis), sugarcane planthopper (Perkinsiella saccharicida), white backed planthopper (Sogatella furcifera), panicum planthopper (Sogatella panicicola) and the like, PSYLLIDAE including mulberry psyllid (Anomoneura mori), psyllid (Calophya nigridorsalis), Asian citrus psyllid (Diaphorina citri), psyllid (Mesohomotoma camphorae), abies sucker (Psylla abieti), jumping plant louse (Psylla alni), Japanese louse (Psylla jamatonica), apple psyllid (Psylla mali), black apple sucker (Psylla malivorella), larger pear sucker (Psylla pyrisuga), tobira sucker (Psylla tobirae), camphor sucker (Trioza camphorae), sucker (Trioza quercicola) and the like, ALEYRODIDAE including spiny whitefly (Aleurocanthus spiniferus), grape whitefly (Aleurolobus taonabae), sweet potato whitefly (Bemisia tabaci), citrus whitefly (Dialeurodes citri), greenhouse whitefly (Trialeurodes vaporariorum), silver leaf whitefly (Bemisia argentifolii) and the like, PHYLLOXERIDAE including grape phylloxera (Viteus vitifolii) and the like, PEMPHIGIDAE including root aphid (Aphidounguis mali), woolly apple aphid (Eriosoma lanigerum), sugarcane root aphid (Geoica lucifuga) and the like, APHIDIDAE including pea aphid (Acyrthosiphon pisum), spiraea aphid (Aphis citricola), cowpea aphid (Aphis craccivora), willow aphid (Aphis farinosa yanagicola), cotton-melon aphid (Aphis gossypii), foxglove aphid (Aulacorthum solani), leafcurl plum aphid (Brachycaudus helichrysi), cabbage aphid (Brevicoryne brassicae), tulip bulb aphid (Dysaphis tulipae), European birch aphid (Euceraphis punctipennis), mealy plum aphid (Hyalopterus pruni), mustard aphid (Lipaphis erysimi), chrysanthemum aphid (Macrosiphoniella sanborni), potato aphid (Macrosiphum euphorbiae), bean aphid (Megoura crassicauda), pear aphid (Melanaphis siphonella), apple leaf-curling aphid (Myzus malisuctus), plum aphid (Myzus mumecola), green peach aphid (Myzus persicae), onion aphid (Neotoxoptera formosana), apple aphid (Ovatus malicolens), waterlily aphid (Rhopalosiphum nymphaeae), wheat aphid (Rhopalosiphum padi), rice root aphid (Rhopalosiphum rufiabdominalis), wormwood root aphid (Sappaphis piri), pear aphid (Schizaphis piricola), corn leaf aphid (Sitobion akebiae), rose aphid (Sitobion ibarae), black citrus aphid (Toxoptera aurantii), black citrus aphid (Toxoptera citricidus), peach aphid (Tuberocephalus momonis), formosan lettuce aphid (Uroleucon formosanum) and the like, MARGARODIDAE including giant mealybug (Drosicha corpulenta), cottony cushion scale (Icerya purchasi) and the like, PSEUDOCOCCIDAE including Matsumoto mealybug (Crisicoccus matsumotoi), pine mealybug (Crisicoccus pini), pear mealybug (Dysmicoccus wistariae), citrus mealybug (Planococcus citri), Japanese mealybug (Planococcus kraunhiae), citrus mealybug (Pseudococcus citriculus), comstock mealybug (Pseudococcus comstocki) and the like, COCCIDAE including Indian white wax scale (Ceroplastes ceriferus), pink wax scale (Ceroplastes rubens), soft scale (Coccus discrepans), brown soft scale (Coccus hesperidum), citricola scale (Coccus pseudomagnoliarum), Chinese white-wax scale (Ericerus pela), European fruit scale (Lecanium corni), European peach scale (Lecanium persicaef), citrus cottony scale (Pulvinaria aurantii), cottony citrus scale (Pulvinaria citricola), cottony mulberry scale (Pulvinaria kuwacola) and the like, DIASPIDIDAE including citrus scale (Andaspis kashicola), California red scale (Aonidiella aurantii), citrus yellow scale (Aonidiella citrina), coconut scale (Aspidiotus destructor), oleander scale (Aspidiotus hederae), Florida red scale (Chrysomphalus ficus), San Jose scale (Comstockaspis perniciosa), dupla scale (Duplaspidiotus claviger), purple scale (Lepidosaphes beckii), oystershell scale (Lepidosaphes ulmi), pear scale (Lepholeucaspis japonica), pear scale (Parlatoreopsis pyri), armored scale (Parlatoria camelliae), tea black scale (Parlatoria theae), black parlatoria scale (Parlatoria ziziphi), fern scale (Pinnaspis aspidistrae), camphor scale (Pseudaonidia duplex), Japanese camellia scale (Pseudaonidia paeoniae), white peach scale (Pseudaulacaspis pentagona), white prunicola Scale (Pseudaulacaspis prunicola), arrowhead scale (Unaspis yanonensis) and the like;

LEPIDOPTERA such as swift moth (Endoclita excrescens), grape tree-borer (Endoclyta sinensis), swift moth (Palpifer sexnotata), Strawberry tortrix moth (Acleris comariana), summer fruit tortrix moth (Adoxophyes orana fasciata), small tea tortrix moth (Adoxophyes sp.), asiatic leafroller (Archips breviplicanus), apple tortrix (Archips fuscocupreanus), brown oak tortrix (Archips xylosteanus), tortrix moth (Bactra furfurana), tobacco leaf worm (Cnephasia cinereipalpana), nut fruit tortrix (Cydia kurokoi), greenish chestnut moth (Eucoenogenes aestuosa), oriental fruit moth (Grapholita molesta), oriental tea tortrix moth (Homona magnanima), pale brownish-ochreous moth (Choristoneura adumbratana), soybean pod borer (Leguminivora glycinivorella), adzuki bean podworm (Matsumuraeses azukivora), soybean podworm (Matsumuraeses falcana), soybean podworm (Matsumuraeses phaseoli), apple fruit licker (Spilonota lechriaspis), eye-spotted bud moth (Spilonota ocellana), European grape berry moth (Eupoecillia ambiguella), arrowhead moth (Phalonidia mesotypa), mugwort moth (Phtheochroides clandestine), mulberry bagworm (Bambalina sp.), giant bagworm (Eumeta japonica), tea bagworm (Eumeta minuscule), European grain moth (Nemapogon granellus), case making clothes moth (Tinea translucens), pear leaf miner (Bucculatrix pyrivorella), peach leaf miner (Lyonetia clerkella), apple leaf miner (Lyonetia prunifoliella), soybean leafroller (Caloptilia soyella), tea leafroller (Caloptilia theivora), apple leaf miner (Caloptilia zachrysa), persimmon leaf miner (Cuphodes diospyrosella), apple leaf miner (Phyllonorycter ringoniella), pear bark miner (Spulerina astaurota), citrus leaf miner (Phyllocnistis citrella), grape leaf miner (Phyllocnistis toparcha), allium leaf miner (Acrolepiopsis sapporensis), yam leaf miner (Acrolepiopsis suzukiella), diamondback moth (Plutella xylostella), apple fruit moth (Argyresthia conjugella), grape clearwing moth (Paranthrene regalis), cherry tree borer (Synanthedon hector), persimmon fruit moth (Stathmopoda masinissa), sweet potato leaf folder (Brachmia triannulella), peach fruit

moth (Carposina niponensis), pear leaf worm (Illiberis pruni), Chinese cochlid (Latoia sinica), oriental moth (Monema flavescens), pear stinging caterpillar (Narosoideus flavidorsalis), green stinging caterpillar (Parasa consocia), persimmon cochlid (Scopelodes contracus), rice striped stem borer (Chilo suppressalis), rice leaffolder (Cnaphalocrocis medinalis), yellow peach moth (Conogethes punctiferalis), cucumber moth (Diaphania indica), pear fruit moth (Ectomyelois pyrivorella), Mediterranean flour moth (Ephestia kuehniella), limabean pod borer (Etiella zinckenella), persimmon bark borer (Euzophera batangensis), mulberry pyralid (Glyphodes pyloalis), cabbage webworm (Hellulla undalis), rice leafroller (Marasmia exigua), legume pod borer (Maruca testulalis), cotton leaf roller (Notarcha derogate), Asian corn borer (Ostrinia furnacalis), adzuki bean borer (Ostrinia scapulalis), butterbur borer (Ostrinia zaguliaevi), bluegrass webworm moth (Parapediasia teterrella), peppered moth (Pleuroptya ruralis), yellow stem borer (Scirpophaga incertulas), common straight swift butterfly (Parnara guttata), large swallowtail butterfly (Papilio helenus), papilionid butterfly (Papilio machaon hippocrates), citrus swallowtail butterfly (Papilio xuthus), pierid butterfly (Colias erate poliographus), small white butterfly (Pieris rapae crucivora), long-tailed pea-blue (Lampides boeticus), orange moth (Angerona prunaria), Japanese giant looper (Ascotis selenaria), giant geometrid moth (Biston robustum), plum cankerworm (Cystidia couaggaria), pine moth (Dendrolimus spectabilis), tent moth (Malacosoma neustria testacea), apple caterpillar (Odonestis pruni japonensis), coffee hawk moth (Cephonodes hylas), hawk moth (Acosmeryx castanea), scarce chocolate-tip (Clostera anachoreta), poplar tip moth (Clostera anastomosis), black-marked prominent (Phalera flavescens), drab-brown moth (Phalerodonta manleyi), lobster moth (Stauropus fagi persimilis), tea tussock moth (Euproctis pseudoconspersa), gold tail moth (Euproctis similes), oriental tussock moth (Euproctis subflava), Asian gypsy moth (Lymantria dispar), white-spotted tussock moth (Orgyia thyellina), fall webworm moth (Hyphantria cunea), mulberry tiger moth (Spilosoma imparilis), three-spotted plusia (Acanthoplusia agnate), sweet potato leaf worm (Aedia leucomelas), black cutworm (Agrotis ipsilon), turnip moth (Agrotis segetum), hibiscus looper (Anomis mesogona), beet semi-looper (Autographa nigrisigna), tiger moth (Trichoplusia ni), American boll worm (Helicoverpa armigera), oriental tobacco budworm (Helicoverpa assulta), flax budworm (Heliothis maritime), cabbage moth (Mamestra brassicae), green rice semilooper (Naranga aenescens), growth-blocking peptide (Pseudaletia separate), pink stem borer (Sesamia inferens), Japanese lawngrass cutworm (Spodoptera depravata), beet armyworm (Spodoptera exigua), oriental leafworm moth (Spodoptera litura), apple dagger moth (Trianea intermedia), sorrel cutworm (Viminia rumicis), spotted cutworm moth (Xestia c-nigrum) and the like;

COLEOPTERA such as brown chafer (Adoretus tenuimaculatus), cupreous chafer (Anomala cuprea), soybean beetle (Anomala rufocuprea), flower chafer (Eucetonia pilifera), flower beetle (Eucetonia roelofsi), yellowish elongate chafer (Heptophylla picea), cockchafer (Melolontha japonica), Japanese cockchafer (Mimela splendens), smaller green flower chafer (Oxycetonia jucunda), Japanese beetle (Popillia japonica), variegated carpet beetle (Anthrenus verbasci), dermestid beetle (Attagenus unicolor japonicus), cigarette beetle (Lasioderma serricorne), powder post beetle (Lyctus brunneus), corn sap beetle (Carpophilus dimidiatus), dried fruit beetle (Carpophilus hemipterus), herbivorous ladybird beetle (Epilachna vigintioctomaculata), spotted ladybird beetle (Epilachna vigintioctopunctata), black fungus beetle (Alphitobius laevigatus), beetle (Neatus picipes), flour beetle (Palorus ratzeburgii), depressed flour beetle (Palorus subdepressus), yellow mealworm beetle (Tenebrio molitor), rust red flour beetle (Tribolium castaneum), red flour beetle (Tribolium confusum), Japanese blister beetle (Epicauta gorhami), long-horn beetle (Aeolesthes chrysothrix), white-spotted longicorn beetle (Anoplophora malasiaca), Japanese pine sawyer beetle (Monochamus alternatus), yellow-spotted longicorn beetle (Psacothea hilaris), grape borer (Xylotrechus pyrrhoderus), monkeypod roundheaded borer (Xystrocera globosa), Chinese bean weevil (Callosobruchus chinensis), cucurbit leaf beetle (Aulacophara femoralis), leaf beetle (Basilepta balyi), tortoise beetle (Cassida nebulosa), brown-blackish beetle (Chaetocnema concinna), Chrysomelid leaf beetle (Colasposoma dauricum), asparagus leaf beetle (Crioceris quatuordecimpunctata), rice rootworm (Donacia provosti), alder chrysomelid beetle (Linaeidea aenea), leaf beetle (Luperomorpha tenebrosa), two-striped leaf beetle (Medythia nigrobilineata), rice leaf beetle (Oulema oryzae), tropical legume leaf beetle (Pagria signata), daikon leaf beetles (Phaedon brassicae), crucifer flea beetle (Phyllotreta striolata), weevil (Involvulus cupreus), peach curculio (Rhynchites heros), sweet potato weevil (Cylas formicarius), apple blossom weevil (Anthonomus pomorum), weevil (Ceuthorhynchidius albosuturalis), chestnut weevil (Curculio sikkimensis), rice-plant weevil (Echinocnemus squameus), West Indian sweet potato weevil (Euscepes postfasciatus), lesser clover leaf weevil (Hypera nigrirostris), Alfalfa weevil (Hypera postica), rice water weevil (Lissorhoptrus oryzophilus), Australian tomato weevil (Listroderes costirostris), common leaf weevil (Phyllobius armatus), Japanese weevil (Sitona japonicus), rice weevil (Sitophilus oryzae), maize weevil (Sitophilus zeamais), hunting billbug (Sphenophrus venatus vestitus) and the like;

HYMENOPTERA such as cabbage sawfly (Athalia japonica), turnip sawfly (Athalia rosae ruficornis), apple argid sawfly (Arge mali), large rose sawfly (Arge pagana), oriental chestnut gall wasp (Dryocosmus kuriphilus) and the like; and

DIPTERA such as rice crane fly (Tipula aino), fungus gnat (Bradysia agrestis), soybean pod gall midge (Asphondylia sp.), melon fly (Dacus cucurbitae), oriental fruit fly (Dacus dorsalis), Japanese orange fly (Dacus tsuneonis), Japanese cherry fruit fly (Rhacochlaena japonica), rice leaf miner (Hydrellia griseola), rice whorl maggot (Hydrellia sasakii), fruit fly (Drosophila suzukii), rice stem maggot (Chlorops oryzae), wheat stem maggot (Meromyza nigriventris), rice leaf miner (Agromyza oryzae), garden pea leaf miner (Chromatomyia horticola), tomato leaf miner (Liriomyza bryoniae), stone leek leaf miner (Liriomyza chinensis), American serpentine leaf miner (Liriomyza trifolii), vegetable leaf miner (Liriomyza

sativae), pea leaf miner (Liriomyza huidobrensis), onion maggot (Delia antique), onion maggot (Delia platura), beet leaf miner (Pegomya cunicularia), house fly (Musca domestica), black blowfly (Phormia regina), mosquito (Culex pipiens pallens Coquillett), mosquito (Culex pipiens molestus Forskal), malaria vector (Anopheles(Anopheles)sinensis Wiedemann), Asian tiger mosquito (Aedes albopictus (Skuse)) and the like.

Furthermore, examples of the diseases which can be prevented by the composition for preventing harmful organisms of the present invention include rice blast (Pyricularia oryzae), heliinthosporium leaf spot (Cochliobolus miyabeanus), sheath blight (Rhizoctonia solani), rice pathogen (Gibberella fujikuroi), seedling blight due to pythium spp. (Pythium graminicola and the like), powdery mildew of wheats (Erysiphe graminis f.sp.hordei; f.sp.tritici), leaf stripe (Pyrenophora graminea), net blotch (Pyrenophora teres), Gibberella ear rot (Gibberella zeae), stripe rust (Puccinia striiformis; Puccinia. graminis; Puccinia. recondita; Puccinia. hordei), snow mold (Typhula incarnata; Typhula ishikariensis; Micronectriella nivalis; Microdochium nivale), loose smut (Ustilago tritici; U. nuda), eyespot (Pseudocercosporella herpotrichoides), scald (Rhynchosporium secalis), leaf spot (Septoria tritici), glume blotch (Leptosphaeria nodorum), browning root rot due to pythium spp. (Pythium iwayamai and the like), downy mildew of grapes (Plasmopara viticola), powdery mildew (Uncinula necator), anthracnose (Elsinoe ampelina), ripe rot (Glomerella cingulata), rust (Phakopsora ampelopsidis), black rot (Guignardia bidwellii), fusarium wilt (Phomopsis viticola), powdery mildew of apples (Podosphaera leucotricha), scab (Venturia inaequalis), alternaria blotch (Alternaria alternata (apple pathotype)), rust (Gymnosporangium yamadae), blossom blight (Sclerotinia mali), Valsa canker (Valsa ceratospema), black spot of pears Alternaria alternata (Japanese pear pathotype)), scab (Venturia nashicola), rust (Gymnosporangium haraeanum), blight of western pears (Phytophthora cactorum), brown rot of peaches (Sclerotinia cinerea), scab (Cladosporium carpophilum), Phomopsis rot (Phomopsis sp.), root/crown rot (Phytophthora sp.), anthracnose of persimmons (Colletotrichum gloeosporioides), leaf spot (Pseudocercospora kaki; Mycosphaerella nawae), downy mildew of melons (Pseudoperonospora cubensis), fruits rot (Phytophthora parasitica; Phytophthora melonis; Phytophthora nicotianae; Phytophthora drechsleri; Phytophthora capsici and the like), powdery mildew (Sphaerotheca fuliginea), anthracnose fungus (Colletotrichum lagenarium), gummy stem blight (Mycosphaerella melonis), late blight of tomatoes (Phytophthora infestans), seedling blight (Pythium vexans; Rhizoctonia solani), ring rot (Alternaria solani), leaf blight (Fluvia fulva), Pythium root rot (Pythium myriotylum; Pythium dissotocum), anthrax (Colletotrichum phomoides), powdery mildew of eggplants (Sphaerotheca fuliginea), late blight (Phytophthora infestans), brown mold (Phytophthora capsici), stem rot of oilseed rape (Sclerotinia scerotiorum), downy mildew (Peronospora brassicae), black spot of brassica vegetables (Alternaria japonica), white leaf spot (Pseudocercosporella capsellae), clubroot (Plasmodiophora brassicae), downy mildew (Peronospora brassicae), white blight of leeks (Phytophthora porri), rust (Puccinia allii), stem blight of soybeans (Phytophthora megasperma), downy mildew (Peronospora manshurica), purple seed stain (Cercospora kikuchii), Sphaceloma scab (Elsinoe glycines), stem blight (Diaporthe phaseololum), anthracnose of kidney beans (Colletotrichum lindemuthianum), black leaf blight of peanuts (Mycosphaerella berkeleyii), brown leaf spot (Mycosphaerella arachidis), powdery mildew of peas (Erysiphae pisi), downy mildew (Peronospora pisi), late blight of potatoes (Phytophthora infestans), early blight (Alternaria solani), net blister blight of tea (Exobasidium reticulatum), white scab (Elsinoe leucospila), rust of tobacco (Alternaria alternata (tabacco pathotype)), powdery mildew (Erysiphe cichoracearum), anthracnose (Colletotrichum tabacum), brown leaf spot of beets (Cercospora beticola), downy mildew (Peronospora schachtii), black spot of roses (Diplocarpon rosae), downy mildew (Peronospora sparsa), late blight (Phytophthora megasperma), powdery mildew (Sphaerotheca pannosa), brown leaf spot of chrysanthemum (Septoria chrysanthemi-indici), white rust (Puccinia horiana), late blight (Phytophthora cactorum), powdery mildew of strawberries (Sphaerotheca macularis), late blight (Phytophthora nicotianae), fruit mold (Pythium ultimum), anthrax (Colletotrichum fragariae), gray mold of cucumbers, tomatoes, strawberries, grapes and the like (Botrytis cinerea), stem rot (Sclerotinia sclerotiorum), brown patch of grasses (Rhizoctonia solani), dollar spot (Sclerotinia homoeocarpa), Curvularia leaf blight (Curvularia geniculata), rust (Puccinia zoysiae), Helminthosporium leaf blight (Cochliobolus sp.), scald (Rhynchosporium secalis), soil rot (Gaeumannomyces graminis), anthracnose (Colletotrichum graminicola), Typhula snow blight (Typhula incarnata), Typhula snow blight (Typhula ishikariensis), Sclerotinia snow blight (Sclerotinia borealis), fairy ring (Marasmius oreades and the like), Pythium fungus (Pythium aphanidermatum and the like) and the like.

The composition for preventing harmful organisms of the present invention can be applied, for example, by treating the top of the plants with a chemical, treating rootstocks and seeds with a chemical, soil treatment and the like.

As the application methods of the composition for preventing harmful organisms of the present invention, there can be exemplified, for example, application to the plant itself (foliage dispersion), application to the nursery box (nursery box application), application to the soil (soil treatment such as soil drenching, mixture into soil, side dressing application, soil dispersion, soil spraying or the like), application to the flooding water (submerged application or rice field application), application to the seed (seed treatment) and the like.

The composition for preventing harmful organisms of the present invention may be used as it is, but it is preferably applied in the form of a composition mixed with a carrier comprising a solid or liquid diluent. The carrier mentioned herein refers to a synthetic or natural, inorganic or organic material which is combined in order to assist application of the active ingredient to the site to be treated or to facilitate storage, transportation and handling of the

active ingredient compound.

Examples of the suitable solid carrier include clays such as montmorillonite, kaolinite, bentonite and the like; inorganic substances such as diatomaceous earth, clay, talc, vermiculite, gypsum, calcium carbonate, white carbon, ammonium sulfate and the like; vegetable organic materials such as soybean flour, wheat flour and the like; urea and the like.

Examples of the suitable liquid carrier include aromatic hydrocarbons such as toluene, xylene, cumene and the like; paraffin based hydrocarbons such as kerosene, mineral oil and the like; halogen based hydrocarbons such as carbon tetrachloride, chloroform, dichloroethane and the like; ketones such as acetone, methyl ethyl ketone and the like; ethers such as dioxane, tetrahydrofuran, diethylene glycol dimethyl ether and the like; alcohols such as methanol, ethanol, propanol, ethylene glycol and the like; polar aprotic solvents such as dimethylformamide, dimethyl sulfoxide, 1-methyl-2-pyrrolidone and the like; water and the like.

Further, in order to increase the effect of the composition for preventing harmful organisms of the present invention, the following various adjuvants can also be used singly or in combination in consideration of the formulation forms, the site of application and the like.

As the adjuvant for purposes of emulsification, dispersion, spreading, wetting, binding, stabilization and the like, there can be exemplified, for example, anionic surfactants such as lignin sulfonate, alkylbenzene sulfonate, alkylsulfate ester salt, polyoxyalkylene alkylsulfate, polyoxyalkylene alkylphosphate ester salt and the like; nonionic surfactants such as polyoxyalkylene alkyl ether, polyoxyalkylene alkyl aryl ether, polyoxyalkylene alkylamine, polyoxyalkylene alkylamide, polyoxyalkylene alkylthioether, polyoxyalkylene fatty acid ester, glycerin fatty acid ester, sorbitan fatty acid ester, polyoxyalkylene sorbitan fatty acid ester, polyoxypropylene polyoxyethylene block polymer and the like; lubricants such as calcium stearate, wax and the like; stabilizers such as isopropyl hydrogen phosphate and the like; and other materials such as methylcellulose, carboxymethylcellulose, casein, gum Arabic and the like. However, these ingredients are not restricted thereto.

The amount of the active ingredient of the composition for preventing harmful organisms of the present invention is, though not restricted to, usually from 0.5 weight % to 20 weight % for dust formulation, from 0.5 weight % to 50 weight % for emulsifiable concentrate, from 0.5 weight % to 90 weight % for wettable powder, from 0.1 weight % to 20 weight % for granule, and from 0.5 weight % to 90 weight % for flowable formulation. On the other hand, the amount of the carrier in each formulation is usually from 60 weight % to 99 weight % for dust formulation, from 40 weight % to 95 weight % for emulsifiable concentrate, from 10 weight % to 90 weight % for wettable powder, from 80 weight % to 99 weight % for granule, and from 10 weight % to 90 weight % for flowable formulation. Meanwhile, the amount of the adjuvant is usually from 0.1 weight % to 20 weight % for dust formulation, from 1 weight % to 20 weight % for emulsifiable concentrate, from 0.1 weight % to 20 weight % for wettable powder, from 0.1 weight % to 20 weight % for granule, and from 0.1 weight % to 20 weight % for flowable formulation. Incidentally, the amount of the carrier and the amount of the adjuvant are not restricted thereto, and can be properly adjusted in consideration of physical-chemical properties of the formulation, the site of application and the like.

Examples of the compound [1] represented by the formula (1) are hereinafter shown in Table 1 (Tables 1-1 to 1-3).

Incidentally, in Table 1, Me represents a methyl group, Et represents an ethyl group, n-Pr represents a normal propyl group, i-Pr represents an isopropyl group, i-Bu represents an isobutyl group, t-Bu represents a tertiary butyl group, cyclohexyl represents a cyclohexyl group, 2-butyl represents a 2-butyl group, cyclopentyl represents a cyclopentyl group, 3-pentyl represents a 3-pentyl group, 2-benzofuranyl represents a 2-benzofuranyl group, 2-benzothiazolyl represents a benzothiazolyl group, and 2-benzothiophenyl represents a 2-benzothiophenyl group.

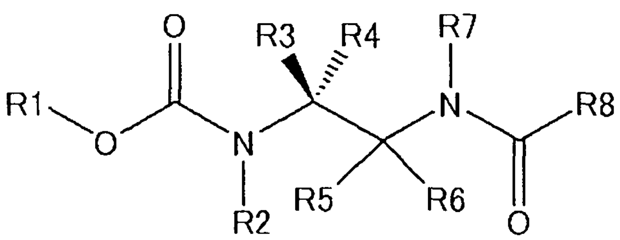

[1]

Table 1-1

| Compound No. | R1 | R2 | R3 | R4 | R5 | R6 | R7 | R8 |
|---|---|---|---|---|---|---|---|---|
| 1 | ClCH2 | H | i-Pr | H | H | H | H | 4-MeC6H4 |
| 2 | FCH2CH2 | H | i-Pr | H | H | H | H | 4-MeC6H4 |
| 3 | ClCH2CH2 | H | i-Pr | H | H | H | H | 4-MeC6H4 |
| 4 | BrCH2CH2 | H | i-Pr | H | H | H | H | 4-MeC6H4 |
| 5 | ICH2CH2 | H | i-Pr | H | H | H | H | 4-MeC6H4 |
| 6 | F3CCH2 | H | i-Pr | H | H | H | H | 4-MeC6H4 |
| 7 | Cl3CCH2 | H | i-Pr | H | H | H | H | 4-MeC6H4 |
| 8 | F3C(F3C)CH | H | i-Pr | H | H | H | H | 4-MeC6H4 |
| 9 | FCH2(FCH2)CH | H | i-Pr | H | H | H | H | 4-MeC6H4 |
| 10 | ClCH2CH2CH2 | H | i-Pr | H | H | H | H | 4-MeC6H4 |
| 11 | BrCH2(BrCH2)CH | H | i-Pr | H | H | H | H | 4-MeC6H4 |
| 12 | F3C(BrCH2)CH | H | i-Pr | H | H | H | H | 4-MeC6H4 |
| 13 | F3CCF2CF2CH2 | H | i-Pr | H | H | H | H | 4-MeC6H4 |
| 14 | F3CCF2CF 2CF2CH2CH2 | H | i-Pr | H | H | H | H | 4-MeC6H4 |
| 15 | CH2=C(Cl)CH2 | H | i-Pr | H | H | H | H | 4-MeC6H4 |
| 16 | 2-fluorocyclohexyl | H | i-Pr | H | H | H | H | 4-MeC6H4 |

Table 1-2

| Compound No. | R1 | R2 | R3 | R4 | R5 | R6 | R7 | R8 |
|---|---|---|---|---|---|---|---|---|
| 17 | 2-chlorocyclohexyl | H | i-Pr | H | H | H | H | 4-MeC6H4 |
| 18 | 2-iodocyclohexyl | H | i-Pr | H | H | H | H | 4-MeC6H4 |
| 19 | EtO(F3C)CH | H | i-Pr | H | H | H | H | 4-MeC6H4 |
| 20 | F3CCH2 | H | H | H | H | H | H | 4-MeC6H4 |
| 21 | F3CCH2 | H | Et | H | H | H | H | 4-MeC6H4 |
| 22 | F3CCH2 | H | n-Pr | H | H | H | H | 4-MeC6H4 |
| 23 | F3CCH2 | H | i-Bu | H | H | H | H | 4-MeC6H4 |
| 24 | F3CCH2 | H | t-Bu | H | H | H | H | 4-MeC6H4 |
| 25 | F3CCH2 | H | 2-butyl | H | H | H | H | 4-MeC6H4 |
| 28 | F3CCH2 | H | i-Pr | H | H | H | H | 2-benzofuranyl |
| 30 | F3C(CH3)C H | H | i-Pr | H | H | H | H | 4-MeC6H4 |

Table 1-3

| Compound No. | R1 | R2 | R3 | R4 | R5 | R6 | R7 | R8 |
|---|---|---|---|---|---|---|---|---|
| 31 | F3CCH2 | H | t-Bu | H | H | H | H | 2-benzofuranyl |
| 32 | F3CCH2 | H | 2-butyl | H | H | H | H | 2-benzofuranyl |

(continued)

| Compound No. | R1 | R2 | R3 | R4 | R5 | R6 | R7 | R8 |
|---|---|---|---|---|---|---|---|---|
| 33 | F3CCH2 | H | 2-butyl | H | H | H | H | 2-benzothiazolyl |
| 34 | F3CCH2 | H | i-Pr | H | H | H | H | 2-benzothiophenyl |
| 35 | F3CCH2 | H | t-Bu H | | H | H | H | 4-MeC6H4 |
| 36 | F3CCH2 | H | cyclo pentyl | H | H | H | H | 4-MeC6H4 |
| 37 | F3CCH2 | H | i-Pr | H | H | H | H | 6-fluoro-2-benzothiazolyl |
| 38 | F3CCH2 | H | i-Pr | H | H | H | H | 2-benzothiazolyl |
| 39 | F3CCH2 | H | 3-pentyl | H | H | H | H | 4-MeC6H4 |
| 40 | F3CCH2 | H | Me, H | | H | H | H | 2-benzofuranyl |

EXAMPLES

Formulation Examples and Test Examples Next, formulation examples of the composition for preventing harmful organisms according to the present invention and test examples of control activity against harmful organisms will be illustrated. In the following description, "part(s)" refers to "part(s) by weight."

Example 1

Granule Formulation

30 parts of the compound (1), 3 parts of dinotefuran, 22 parts of bentonite, 42 parts of talc and 3 parts of Sorpol 5060 (a surfactant: Toho Chemical Industry Co., Ltd., product name) were uniformly kneaded, granulated using a basket granulating machine, and then dried to obtain 100 parts of a granule.

Example 2

Granule Formulation

2 parts of etofenprox was uniformly dissolved in 12 parts of DIDP (diisodecyl phthalate), and subsequently 15 parts of the compound (2), 46 parts of bentonite, 21 parts of talc, 1 part of dodecylbenzenesulfonic acid sodium salt, 1 part of polyoxyethylene alkylaryl ether and 2 parts of lignin sulfonic acid sodium salt were added thereto. The resulting mixture was uniformly kneaded, granulated using a basket granulating machine, and then dried to obtain 100 parts of a granule.

Example 3

Wettable Powder

10 parts of etofenprox was uniformly dissolved in 10 parts of DIDP (diisodecyl phthalate), and subsequently 30 parts of the compound (3), 30 parts of diatomaceous earth, 5 parts of Sorpol 5039 (a mixture of an anionic surfactant and white carbon: Toho Chemical Industry, Co., Ltd., product name) and 15 parts of white carbon were uniformly mixed and pulverized to obtain 100 parts of a wettable powder.

Example 4

Wettable Powder

30 parts of the compound (4), 20 parts of dinotefuran, 43 parts of kaolinite, 5 parts of Sorpol 5039 (a mixture of an anionic surfactant and white carbon: Toho Chemical Industry, Co., Ltd., product name) and 2 parts of white carbon were uniformly mixed and pulverized to obtain 100 parts of a wettable powder.

Example 5

Emulsifiable Concentrate

20 parts of the compound (5), 20 parts of etofenprox, 55 parts of xylene and 5 parts of Sorpol 2680 (a surfactant) were uniformly mixed to obtain an emulsifiable concentrate.

Example 6

Flowable Formulation

10 parts of etofenprox was uniformly dissolved in 10 parts of DIDP (diisodecyl phthalate), and subsequently 2 parts of Sorpol 7290P (an anionic surfactant: Toho Chemical Industry Co., Ltd., product name), 5 parts of a 1% aqueous solution of Xanthan gum, 30 parts of water and 10 parts of ethylene glycol were uniformly dissolved. Subsequently, 30 parts of the compound (6) and 3 parts of Sorpol 3078 (a mixture of a nonionic surfactant and an anionic surfactant: Toho Chemical Industry, Co., Ltd., product name) were added thereto and the resulting mixture was well stirred, followed by wet grinding with a sand mill to obtain 100 parts of a flowable formulation.

Example 7

Dust Formulation

5 parts of the compound (7), 0.5 part of dinotefuran, 94.3 parts of clay and 0.2 part of Driless A were uniformly mixed to obtain 100 parts of a dust formulation.

Example 8

Granule Formulation

7.5 parts of the compound (8), 7 parts of flutolanil, 60.5 parts of bentonite, 21 parts of talc, 1 part of dodecylbenzenesulfonic acid sodium salt, 1 part of polyoxyethylene alkylaryl ether and 2 parts of lignin sulfonic acid sodium salt were mixed, and then water in an appropriate amount was added thereto. The resulting mixture was uniformly kneaded, granulated using a basket granulating machine, and then dried to obtain 100 parts of a granule.

Example 9

Wettable Powder

30 parts of the compound (9), 25 parts of tricyclazole, 38 parts of kaolinite, 5 parts of Sorpol 5039 (a mixture of an anionic surfactant and white carbon: Toho Chemical Industry, Co., Ltd., product name) and 2 parts of white carbon were uniformly mixed and pulverized to obtain 100 parts of a wettable powder.

Example 10

Wettable Powder

30 parts of the compound (4), 63 parts of kaolinite, 5 parts of Sorpol 5039 (a mixture of an anionic surfactant and white carbon: Toho Chemical Industry, Co., Ltd., product name) and 2 parts of white carbon were uniformly mixed and pulverized to obtain 100 parts of a wettable powder.

Control Effect Test on Rice Blast (Reference Example)

A compound solution which was prepared to 60 ppm of an active ingredient was sprayed on a rice pot (cultivar: Koshihikari; 2 leaf stage) and air-dried. The plant was put into a growth chamber (set condition: 22 degree centigrade, 12-12 hr light-dark cycle) and a suspension of Pyricularia oryzae spore was spray-inoculated thereon. The growth chamber was kept under high humidity and the number of lesions of rice blasts was examined after 7 days. The control value was calculated according to the following equation and indicated according to criteria shown in the following Table 2. The results are shown in Table 3 (Tables 3-1 to 3-2).

Control Value (%) = (1 - severity in the treated plot / severity in the untreated plot) x 100

[Table 2]

| Effect | Control Value |
|---|---|
| A<br>B | Not less than 80%<br>Not less than 50% to less than 80% |
| C | Less than 50% |

Furthermore, those in the following formulae (16) and (17) included in a diamine derivative described in W02003008372 were used for reference compounds.

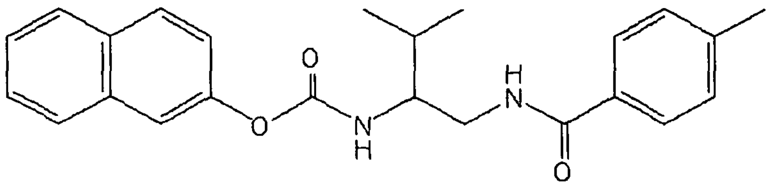

(16)

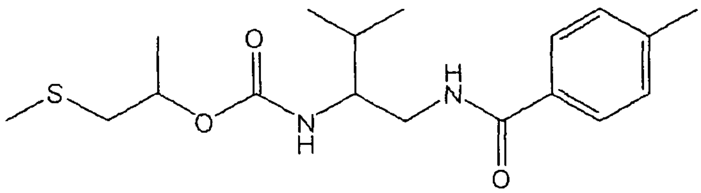

(17)

[Table 3-1]

| Compound No. | Effect |
|---|---|
| 2 | A |
| 3 | A |
| 4 | A |
| 5 | A |
| 6 | A |
| 7 | A |
| 8 | A |
| 9 | A |
| 10 | A |
| 11 | B |
| 13 | A |
| 14 | B |
| 15 | A |

(continued)

| Compound No. | Effect |
|---|---|
| 16 | A |
| 17 | A |
| 24 | A |
| 25 | A |
| 28 | A |

[Table 3-2]

| Compound No. | Effect |
|---|---|
| 30 | A |
| 31 | A |
| 32 | A |
| 33 | A |
| 34 | A |
| 35 | A |
| 36 | A |
| 37 | A |
| 38 | A |
| 39 | A |
| 40 | A |
| Formula (16) | C |
| Formula (17) | C |

Next, compounds represented by the formulae (2), (5), (8), (20) and (25) are shown in Table 4 as active ingredients of the control agent for preventing harmful organisms of the present invention, which can be used in combination with a diamine derivative.

[Table 4]

| | |
|---|---|
| Compound No. 101 | Compound represented by the formula (2) |
| Compound No. 102 | Compound represented by the formula (20) |
| Compound No. 103 | Compound represented by the formula (5) |
| Compound No. 104 | Compound represented by the formula (8) |
| Compound No. 105 | Compound represented by the formula (25) |

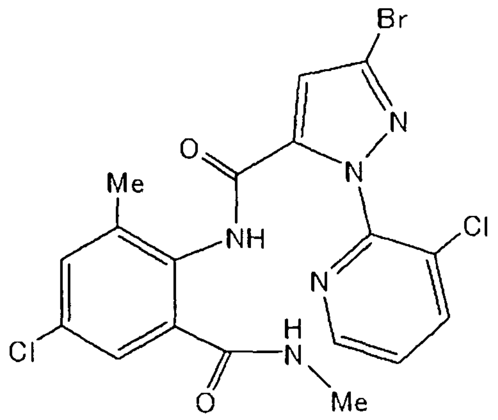

(20)

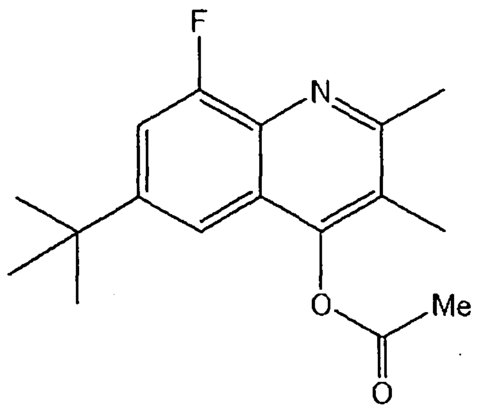

(25)

[Test Example 1]

Control Test on Paddy Rice Blast (Spraying)

A compound solution of a prescribed concentration was sprayed on three 1/5000a rice pots (cultivar: Koshihikari; 4 leaf stage). After one day from the spraying, the pots were put into a growth chamber (set condition: 25 degree centigrade, 12:12 hr light dark cycle) and a suspension of Pyricularia oryzae spore was spray-inoculated thereon. The growth chamber was kept under high humidity and the number of lesions of rice blasts was examined after 7 days. The control value was calculated according to the following equation (3 replications). The results are shown in Table 5 (Tables 5-1 to 5-5).

Control Value = (1 - number of lesions in the treated plot / number of lesions in the untreated plot) x 100

[Table 5-1]

| Supplied chemical | Treating concentration (ppm) | Control value |
|---|---|---|
| Compound 6 | 60 | 97 |
| Compound 15 | 60 | 94 |

(continued)

| Supplied chemical | Treating concentration (ppm) | Control value |
|---|---|---|
| Compound 17 | 60 | 95 |
| Compound 24 | 60 | 97 |
| Compound 28 | 60 | 97 |
| Compound 31 | 60 | 96 |
| Compound 32 | 60 | 95 |
| Compound 33 | 60 | 96 |
| Compound 34 | 60 | 97 |
| Compound 35 | 60 | 99 |
| Compound 37 | 60 | 98 |
| Compound 38 | 60 | 96 |
| Compound 40 | 60 | 97 |
| Tricyclazole | 200 | 99 |
| Fthalide | 300 | 97 |
| Kasugamycin | 20 | 97 |
| Ferimzone | 300 | 98 |
| EDDP | 300 | 97 |
| Penthiopyrad | 200 | 95 |
| Isoprothiolane | 400 | 98 |
| Compound 105 | 300 | 98 |

[Table 5-2]

| Supplied chemical | Treating concentration (ppm) | Control value |
|---|---|---|
| Compound 6 + Tricyclazole | 60 + 200 | 100 |
| Compound 6 + Fthalide | 60 + 300 | 100 |
| Compound 6 + Kasugamycin | 60 + 20 | 100 |
| Compound 6 + Ferimzone | 60 + 300 | 100 |
| Compound 6 + EDDP | 60 + 300 | 100 |
| Compound 6 + Penthiopyrad | 60 + 200 | 100 |
| Compound 6 + Isoprothiolane | 60 + 400 | 100 |
| Compound 6 + Compound 105 | 60 + 300 | 100 |
| Compound 15 + Tricyclazole | 60 + 200 | 100 |
| Compound 15 + Fthalide | 60 + 300 | 100 |
| Compound 15 + Kasugamycin | 60 + 20 | 100 |
| Compound 15 + Ferimzone | 60 + 300 | 100 |
| Compound 15 + EDDP | 60 + 300 | 100 |
| Compound 15 + Penthiopyrad | 60 + 200 | 100 |
| Compound 15 + Isoprothiolane | 60 + 400 | 100 |
| Compound 15 + Compound 105 | 60 + 300 | 100 |

(continued)

| Supplied chemical | Treating concentration (ppm) | Control value |
|---|---|---|
| Compound 17 + Tricyclazole | 60 + 200 | 100 |
| Compound 17 + Fthalide | 60 + 300 | 100 |
| Compound 17 + Kasugamycin | 60 + 20 | 100 |
| Compound 17 + Ferimzone | 60 + 300 | 100 |
| Compound 17 + EDDP | 60 + 300 | 100 |
| Compound 17 + Penthiopyrad | 60 + 200 | 100 |
| Compound 17 + Isoprothiolane | 60 + 400 | 100 |
| Compound 17 + Compound 105 | 60 + 300 | 100 |
| Compound 24 + Tricyclazole | 60 + 200 | 100 |
| Compound 24 + Fthalide | 60 + 300 | 100 |
| Compound 24 + Kasugamycin | 60 + 20 | 100 |
| Compound 24 + Ferimzone | 60 + 300 | 100 |
| Compound 24 + EDDP | 60 + 300 | 100 |
| Compound 24 + Penthiopyrad | 60 + 200 | 100 |
| Compound 24 + Isoprothiolane | 60 + 400 | 100 |
| Compound 24 + Compound 105 | 60 + 300 | 100 |

[Table 5-3]

| Supplied chemical | Treating concentration (ppm) | Control value |
|---|---|---|
| Compound 28 + Tricyclazole | 60 + 200 | 100 |
| Compound 28 + Fthalide | 60 + 300 | 100 |
| Compound 28 + Kasugamycin | 60 + 20 | 100 |
| Compound 28 + Ferimzone | 60 + 300 | 100 |
| Compound 28 + EDDP | 60 + 300 | 100 |
| Compound 28 + Penthiopyrad | 60 + 200 | 100 |
| Compound 28 + Isoprothiolane | 60 + 400 | 100 |
| Compound 28 + Compound 105 | 60 + 300 | 100 |
| Compound 31 + Tricyclazole | 60 + 200 | 100 |
| Compound 31 + Fthalide | 60 + 300 | 100 |
| Compound 31 + Kasugamycin | 60 + 20 | 100 |
| Compound 31 + Ferimzone | 60 + 300 | 100 |
| Compound 31 + EDDP | 60 + 300 | 100 |
| Compound 31 + Penthiopyrad | 60 + 200 | 100 |
| Compound 31 + Isoprothiolane | 60 + 400 | 100 |
| Compound 31 + Compound 105 | 60 + 300 | 100 |
| Compound 32 + Tricyclazole | 60 + 200 | 100 |
| Compound 32 + Fthalide | 60 + 300 | 100 |
| Compound 32 + Kasugamycin | 60 + 20 | 100 |

(continued)

| Supplied chemical | Treating concentration (ppm) | Control value |
|---|---|---|
| Compound 32 + Ferimzone | 60 + 300 | 100 |
| Compound 32 + EDDP | 60 + 300 | 100 |
| Compound 32 + Penthiopyrad | 60 + 200 | 100 |
| Compound 32 + Isoprothiolane | 60 + 400 | 100 |
| Compound 32 + Compound 105 | 60 + 300 | 100 |
| Compound 33 + Tricyclazole | 60 + 200 | 100 |
| Compound 33 + Fthalide | 60 + 300 | 100 |
| Compound 33 + Kasugamycin | 60 + 20 | 100 |
| Compound 33 + Ferimzone | 60 + 300 | 100 |
| Compound 33 + EDDP | 60 + 300 | 100 |
| Compound 33 + Penthiopyrad | 60 + 200 | 100 |
| Compound 33 + Isoprothiolane | 60 + 400 | 100 |
| Compound 33 + Compound 105 | 60 + 300 | 100 |

[Table 5-4]

| Supplied chemical | Treating concentration (ppm) | Control value |
|---|---|---|
| Compound 34 + Tricyclazole | 60 + 200 | 100 |
| Compound 34 + Fthalide | 60 + 300 | 100 |
| Compound 34 + Kasugamycin | 60 + 20 | 100 |
| Compound 34 + Ferimzone | 60 + 300 | 100 |
| Compound 34 + EDDP | 60 + 300 | 100 |
| Compound 34 + Penthiopyrad | 60 + 200 | 100 |
| Compound 34 + Isoprothiolane | 60 + 400 | 100 |
| Compound 34 + Compound 105 | 60 + 300 | 100 |
| Compound 35 + Tricyclazole | 60 + 200 | 100 |
| Compound 35 + Fthalide | 60 + 300 | 100 |
| Compound 35 + Kasugamycin | 60 + 20 | 100 |
| Compound 35 + Ferimzone | 60 + 300 | 100 |
| Compound 35 + EDDP | 60 + 300 | 100 |
| Compound 35 + Penthiopyrad | 60 + 200 | 100 |
| Compound 35 + Isoprothiolane | 60 + 400 | 100 |
| Compound 35 + Compound 105 | 60 + 300 | 100 |
| Compound 37 + Tricyclazole | 60 + 200 | 100 |
| Compound 37 + Fthalide | 60 + 300 | 100 |
| Compound 37 + Kasugamycin | 60 + 20 | 100 |
| Compound 37 + Ferimzone | 60 + 300 | 100 |
| Compound 37 + EDDP | 60 + 300 | 100 |
| Compound 37 + Penthiopyrad | 60 + 200 | 100 |

(continued)

| Supplied chemical | Treating concentration (ppm) | Control value |
|---|---|---|
| Compound 37 + Isoprothiolane | 60 + 400 | 100 |
| Compound 37 + Compound 105 | 60 + 300 | 100 |
| Compound 38 + Tricyclazole | 60 + 200 | 100 |
| Compound 38 + Fthalide | 60 + 300 | 100 |
| Compound 38 + Kasugamycin | 60 + 20 | 100 |
| Compound 38 + Ferimzone | 60 + 300 | 100 |
| Compound 38 + EDDP | 60 + 300 | 100 |
| Compound 38 + Penthiopyrad | 60 + 200 | 100 |
| Compound 38 + Isoprothiolane | 60 + 400 | 100 |
| Compound 38 + Compound 105 | 60 + 300 | 100 |

[Table 5-5]

| Supplied chemical | Treating concentration (ppm) | Control value |
|---|---|---|
| Compound 40 + Tricyclazole | 60 + 200 | 100 |
| Compound 40 + Fthalide | 60 + 300 | 100 |
| Compound 40 + Kasugamycin | 60 + 20 | 100 |
| Compound 40 + Ferimzone | 60 + 300 | 100 |
| Compound 40 + EDDP | 60 + 300 | 100 |
| Compound 40 + Penthiopyrad | 60 + 200 | 100 |
| Compound 40 + Isoprothiolane | 60 + 400 | 100 |
| Compound 40 + Compound 105 | 60 + 300 | 100 |

[Test Example 2]

Control Test on Paddy Rice Blast (Submerged Application)

A granule formulation in a prescribed amount was used in a submerged application on three 1/5000a rice pots (cultivar: Koshihikari; 4 leaf stage). After 14 days from the treatment, the pots were put into a growth chamber (set condition: 25 degree centigrade, 12:12 hr light dark cycle) and a suspension of Pyricularia oryzae spore was spray-inoculated thereon. The growth chamber was kept under high humidity and the number of lesions of rice blasts was examined after 7 days. The control value was calculated according to the following equation (3 replications). The results are shown in Table 6. In the table, gai represents the amount of effective ingredients (g).

Control Value = (1 - number of lesions in the treated plot / number of lesions in the untreated plot) x 100

[Table 6]

| Supplied chemical | Amount of treating chemical (gai/10a) | Control value |
|---|---|---|
| Compound 6 | 225 | 95 |

(continued)

| Supplied chemical | Amount of treating chemical (gai/10a) | Control value |
|---|---|---|
| Compound 15 | 225 | 95 |
| Compound 24 | 225 | 94 |
| Compound 25 | 225 | 95 |
| Compound 28 | 225 | 96 |
| Compound 30 | 225 | 97 |
| Compound 31 | 225 | 94 |
| Metominostrobin | 150 | 98 |
| Oryzastrobin | 100 | 99 |
| Compound 6 + Metominostrobin | 225 + 150 | 100 |
| Compound 6 + Oryzastrobin | 225 + 100 | 100 |
| Compound 15 + Metominostrobin | 225 + 150 | 100 |
| Compound 15 + Oryzastrobin | 225 + 100 | 100 |
| Compound 24 + Metominostrobin | 225 + 150 | 100 |
| Compound 24 + Oryzastrobin | 225 + 100 | 100 |
| Compound 25 + Metominostrobin | 225 + 150 | 100 |
| Compound 25 + Oryzastrobin | 225 + 100 | 100 |
| Compound 28 + Metominostrobin | 225 + 150 | 100 |
| Compound 28 + Oryzastrobin | 225 + 100 | 100 |
| Compound 30 + Metominostrobin | 225 + 150 | 100 |
| Compound 30 + Oryzastrobin | 225 + 100 | 100 |
| Compound 31 + Metominostrobin | 225 + 150 | 100 |
| Compound 31 + Oryzastrobin | 225 + 100 | 100 |

[Test Example 3]

Control Test on Paddy Rice Blast (Nursery Box Application)

Rices (cultivar: Koshihikari) cultivated in a nursery box were treated with a granule formulation in a prescribed amount, and then 4 rice seedlings in the nursery box were transplanted to a 1/5000a pot. After 30 days from the treatment, the pot was put into a growth chamber (set condition: 25 degree centigrade, 12:12 hr light dark cycle) and a suspension of Pyricularia oryzae spore was spray-inoculated thereon. The growth chamber was kept under high humidity and the number of lesions of rice blasts was examined after 7 days. The control value was calculated according to the following equation (4 replications). The results are shown in Table 7 (Tables 7-1 to 7-2).

Control Value = (1 - number of lesions in the treated plot / number of lesions in the untreated plot) x 100

[Table 7-1]

| Supplied chemical | Amount of treating chemical (gai/box) | Control value |
|---|---|---|
| Compound 6 | 7.5 | 96 |

(continued)

| Supplied chemical | Amount of treating chemical (gai/box) | Control value |
|---|---|---|
| Compound 15 | 7.5 | 95 |
| Compound 24 | 7.5 | 96 |
| Compound 28 | 7.5 | 96 |
| Compound 31 | 7.5 | 97 |
| Diclocymet | 1.5 | 97 |
| Tricyclazole | 2 | 96 |
| Tiadinil | 6 | 95 |
| Probenazole | 12 | 98 |
| Acibenzolar-S-methyl | 1 | 96 |
| Compound 104 | 1.5 | 98 |
| Compound 6 + Diclocymet | 7.5 + 1.5 | 100 |
| Compound 6 + Tricyclazole | 7.5 + 2 | 100 |
| Compound 6 + Tiadinil | 7.5 + 6 | 100 |
| Compound 6 + Probenazole | 7.5 + 12 | 100 |
| Compound 6 + Acibenzolar-S-methyl | 7.5 + 1 | 100 |
| Compound 6 + Compound 104 | 7.5 + 1.5 | 100 |
| Compound 15 + Diclocymet | 7.5 + 1.5 | 100 |
| Compound 15 + Tricyclazole | 7.5 + 2 | 100 |
| Compound 15 + Tiadinil | 7.5 + 6 | 100 |
| Compound 15 + Probenazole | 7.5 + 12 | 100 |
| Compound 15 + Acibenzolar-S-methyl | 7.5 + 1 | 100 |
| Compound 15 + Compound 104 | 7.5 + 1.5 | 100 |

[Table 7-2]

| Supplied chemical | Amount of Amount of treating chemical (gai/box) | Control value |
|---|---|---|
| Compound 24 + Diclocymet | 7.5 + 1.5 | 100 |
| Compound 24 + Tricyclazole | 7.5 + 2 | 100 |
| Compound 24 + Tiadinil | 7.5 + 6 | 100 |
| Compound 24 + Probenazole | 7.5 + 12 | 100 |
| Compound 24 + Acibenzolar-S-methyl | 7.5 + 1 | 100 |
| Compound 24 + Compound 104 | 7.5 + 1.5 | 100 |
| Compound 28 + Diclocymet | 7.5 + 1.5 | 100 |
| Compound 28 + Tricyclazole | 7.5 + 2 | 100 |
| Compound 28 + Tiadinil | 7.5 + 6 | 100 |
| Compound 28 + Probenazole | 7.5 + 12 | 100 |
| Compound 28 + Acibenzolar-S-methyl | 7.5 + 1 | 100 |
| Compound 28 + Compound 104 | 7.5 + 1.5 | 100 |
| Compound 31 + Diclocymet | 7.5 + 1.5 | 100 |

(continued)

| Supplied chemical | Amount of Amount of treating chemical (gai/box) | Control value |
|---|---|---|
| Compound 31 + Tricyclazole | 7.5 + 2 | 100 |
| Compound 31 + Tiadinil | 7.5 + 6 | 100 |
| Compound 31 + Probenazole | 7.5 + 12 | 100 |
| Compound 31 + Acibenzolar-S-methyl | 7.5 + 1 | 100 |
| Compound 31 + Compound 104 | 7.5 + 1.5 | 100 |

[Test Example 4]

Control Test on Paddy Rice Sheath Blight (Spraying)

A compound solution of a prescribed concentration was sprayed on three 1/5000a rice pots (cultivar: Koshihikari; 4 leaf stage). After one day from the spraying, Rhizoctonia solani cultured on a rice chaff/bran medium was inoculated on the basal of the rice plant. After 10 days from the inoculation, the extended lesion length of sheath blight of the whole stem was examined. The control value was calculated according to the following equation (3 replications). The results are shown in Table 8 (Tables 8-1 to 8-4).

Control Value = (1 - average lesion length per a stem in the treated plot / average lesion length per a stem in the untreated plot) x 100

[Table 8-1]

| Supplied chemical | Treating concentration (ppm) | Control value |
|---|---|---|
| Compound 6 | 60 | 3 |
| Compound 15 | 60 | 4 |
| Compound 17 | 60 | 5 |
| Compound 24 | 60 | 2 |
| Compound 28 | 60 | 6 |
| Compound 31 | 60 | 4 |
| Compound 32 | 60 | 5 |
| Compound 33 | 60 | 6 |
| Compound 34 | 60 | 7 |
| Compound 35 | 60 | 4 |
| Compound 37 | 60 | 3 |
| Compound 38 | 60 | 3 |
| Compound 40 | 60 | 4 |
| Flutolanil | 250 | 94 |
| Mepronil | 750 | 94 |
| Pencycuron | 167 | 95 |
| Azoxystrobin | 80 | 93 |

(continued)

| Supplied chemical | Treating concentration (ppm) | Control value |
|---|---|---|
| Validamycin | 60 | 94 |
| Furametpyr | 100 | 95 |
| Diclomezine | 20 | 95 |

[Table 8-2]

| Supplied chemical | Treating concentration (ppm) | Control value |
|---|---|---|
| Compound 6 + Flutolanil | 60 + 250 | 98 |
| Compound 6 + Mepronil | 60 + 750 | 98 |
| Compound 6 + Pencycuron | 60 + 167 | 96 |
| Compound 6 + Azoxystrobin | 60 + 80 | 97 |
| Compound 6 + Validamycin | 60 + 60 | 98 |
| Compound 6 + Furametpyr | 60 + 100 | 98 |
| Compound 6 + Diclomezine | 60 + 20 | 97 |
| Compound 15 + Flutolanil | 60 + 250 | 98 |
| Compound 15 + Mepronil | 60 + 750 | 97 |
| Compound 15 + Pencycuron | 60 + 167 | 98 |
| Compound 15 + Azoxystrobin | 60 + 80 | 98 |
| Compound 15 + Validamycin | 60 + 60 | 97 |
| Compound 15 + Furametpyr | 60 + 100 | 96 |
| Compound 15 + Diclomezine | 60 + 20 | 98 |
| Compound 17 + Flutolanil | 60 + 250 | 97 |
| Compound 17 + Mepronil | 60 + 750 | 96 |
| Compound 17 + Pencycuron | 60 + 167 | 98 |
| Compound 17 + Azoxystrobin | 60 + 80 | 98 |
| Compound 17 + Validamycin | 60 + 60 | 98 |
| Compound 17 + Furametpyr | 60 + 100 | 98 |
| Compound 17 + Diclomezine | 60 + 20 | 97 |
| Compound 24 + Flutolanil | 60 + 250 | 97 |
| Compound 24 + Mepronil | 60 + 750 | 98 |
| Compound 24 + Pencycuron | 60 + 167 | 97 |
| Compound 24 + Azoxystrobin | 60 + 80 | 98 |
| Compound 24 + Validamycin | 60 + 60 | 98 |
| Compound 24 + Furametpyr | 60 + 100 | 98 |
| Compound 24 + Diclomezine | 60 + 20 | 96 |
| Compound 28 + Flutolanil | 60 + 250 | 96 |
| Compound 28 + Mepronil | 60 + 750 | 98 |
| Compound 28 + Pencycuron | 60 + 167 | 98 |
| Compound 28 + Azoxystrobin | 60 + 80 | 97 |

(continued)

| Supplied chemical | Treating concentration (ppm) | Control value |
|---|---|---|
| Compound 28 + Validamycin | 60 + 60 | 98 |
| Compound 28 + Furametpyr | 60 + 100 | 98 |
| Compound 28 + Diclomezine | 60 + 20 | 97 |

[Table 8-3]

| Supplied chemical | Treating concentration (ppm) | Control value |
|---|---|---|
| Compound 31 + Flutolanil | 60 + 250 | 98 |
| Compound 31 + Mepronil | 60 + 750 | 98 |
| Compound 31 + Pencycuron | 60 + 167 | 97 |
| Compound 31 + Azoxystrobin | 60 + 80 | 97 |
| Compound 31 + Validamycin | 60 + 60 | 98 |
| Compound 31 + Furametpyr | 60 + 100 | 98 |
| Compound 31 + Diclomezine | 60 + 20 | 96 |
| Compound 32 + Flutolanil | 60 + 250 | 97 |
| Compound 32 + Mepronil | 60 + 750 | 97 |
| Compound 32 + Pencycuron | 60 + 167 | 96 |
| Compound 32 + Azoxystrobin | 60 + 80 | 98 |
| Compound 32 + Validamycin | 60 + 60 | 98 |
| Compound 32 + Furametpyr | 60 + 100 | 98 |
| Compound 32 + Diclomezine | 60 + 20 | 98 |
| Compound 33 + Flutolanil | 60 + 250 | 98 |
| Compound 33 + Mepronil | 60 + 750 | 98 |
| Compound 33 + Pencycuron | 60 + 167 | 98 |
| Compound 33 + Azoxystrobin | 60 + 80 | 98 |
| Compound 33 + Validamycin | 60 + 60 | 98 |
| Compound 33 + Furametpyr | 60 + 100 | 96 |
| Compound 33 + Diclomezine | 60 + 20 | 97 |
| Compound 34 + Flutolanil | 60 + 250 | 97 |
| Compound 34 + Mepronil | 60 + 750 | 96 |
| Compound 34 + Pencycuron | 60 + 167 | 98 |
| Compound 34 + Azoxystrobin | 60 + 80 | 98 |
| Compound 34 + Validamycin | 60 + 60 | 98 |
| Compound 34 + Furametpyr | 60 + 100 | 98 |
| Compound 34 + Diclomezine | 60 + 20 | 98 |
| Compound 35 + Flutolanil | 60 + 250 | 98 |
| Compound 35 + Mepronil | 60 + 750 | 98 |
| Compound 35 + Pencycuron | 60 + 167 | 97 |
| Compound 35 + Azoxystrobin | 60 + 80 | 98 |

(continued)

| Supplied chemical | Treating concentration (ppm) | Control value |
|---|---|---|
| Compound 35 + Validamycin | 60 + 60 | 98 |
| Compound 35 + Furametpyr | 60 + 100 | 96 |
| Compound 35 + Diclomezine | 60 + 20 | 98 |

[Table 8-4]

| Supplied chemical | Treating concentration (ppm) | Control value |
|---|---|---|
| Compound 37 + Flutolanil | 60 + 250 | 96 |
| Compound 37 + Mepronil | 60 + 750 | 98 |
| Compound 37 + Pencycuron | 60 + 167 | 98 |
| Compound 37 + Azoxystrobin | 60 + 80 | 98 |
| Compound 37 + Validamycin | 60 + 60 | 97 |
| Compound 37 + Furametpyr | 60 + 100 | 98 |
| Compound 37 + Diclomezine | 60 + 20 | 98 |
| Compound 38 + Flutolanil | 60 + 250 | 97 |
| Compound 38 + Mepronil | 60 + 750 | 96 |
| Compound 38 + Pencycuron | 60 + 167 | 98 |
| Compound 38 + Azoxystrobin | 60 + 80 | 98 |
| Compound 38 + Validamycin | 60 + 60 | 98 |
| Compound 38 + Furametpyr | 60 + 100 | 98 |
| Compound 38 + Diclomezine | 60 + 20 | 98 |
| Compound 40 + Flutolanil | 60 + 250 | 97 |
| Compound 40 + Mepronil | 60 + 750 | 98 |
| Compound 40 + Pencycuron | 60 + 167 | 98 |
| Compound 40 + Azoxystrobin | 60 + 80 | 98 |
| Compound 40 + Validamycin | 60 + 60 | 98 |
| Compound 40 + Furametpyr | 60 + 100 | 98 |
| Compound 40 + Diclomezine | 60 + 20 | 98 |

[Test Example 5]

Control Test on Paddy Rice Sheath Blight (Submerged Application)

A granule formulation in a prescribed amount was used in a submerged application on three 1/5000a rice pots (cultivar: Koshihikari; 4 leaf stage). After 14 days from the treatment, Rhizoctonia solani cultured on a rice chaff/bran medium was inoculated on the basal of the rice plant. After 10 days from the inoculation, the extended lesion length of sheath blight of the whole stem was examined. The control value was calculated according to the following equation (3 replications). The results are shown in Table 9 (Tables 9-1 to 9-2).

Control Value = (1 - average lesion length per a stem in the treated plot / average lesion length per a stem in the untreated plot) x 100

[Table 9-1]

| Supplied chemical | Amount of treating chemical (gai/10a) | Control value |
|---|---|---|
| Compound 6 | 225 | 5 |
| Compound 15 | 225 | 5 |
| Compound 24 | 225 | 4 |
| Compound 25 | 225 | 5 |
| Compound 28 | 225 | 6 |
| Compound 30 | 225 | 7 |
| Compound 31 | 225 | 4 |
| Thifluzamide | 60 | 95 |
| Flutolanil | 210 | 96 |
| Metominostrobin | 150 | 95 |
| Oryzastrobin | 100 | 95 |
| Furametpyr | 45 | 96 |
| Compound 6 + Thifluzamide | 225 + 60 | 97 |
| Compound 6 + Flutolanil | 225 + 210 | 98 |
| Compound 6 + Metominostrobin | 225 + 150 | 98 |
| Compound 6 + Oryzastrobin | 225 + 100 | 98 |
| Compound 6 + Furametpyr | 225 + 45 | 98 |
| Compound 15 + Thifluzamide | 225 + 60 | 98 |
| Compound 15 + Flutolanil | 225 + 210 | 98 |
| Compound 15 + Metominostrobin | 225 + 150 | 97 |
| Compound 15 + Oryzastrobin | 225 + 100 | 98 |
| Compound 15 + Furametpyr | 225 + 45 | 98 |

[Table 9-2]

| Supplied chemical | Amount of treating chemical (gai/10a) | Control value |
|---|---|---|
| Compound 24 + Thifluzamide | 225 + 60 | 98 |
| Compound 24 + Flutolanil | 225 + 210 | 98 |
| Compound 24 + Metominostrobin | 225 + 150 | 98 |
| Compound 24 + Oryzastrobin | 225 + 100 | 98 |
| Compound 24 + Furametpyr | 225 + 45 | 98 |
| Compound 25 + Thifluzamide | 225 + 60 | 98 |

(continued)

| Supplied chemical | Amount of treating chemical (gai/10a) | Control value |
|---|---|---|
| Compound 25 + Flutolanil | 225 + 210 | 98 |
| Compound 25 + Metominostrobin | 225 + 150 | 98 |
| Compound 25 + Oryzastrobin | 225 + 100 | 97 |
| Compound 25 + Furametpyr | 225 + 45 | 98 |
| Compound 28 + Thifluzamide | 225 + 60 | 98 |
| Compound 28 + Flutolanil | 225 + 210 | 97 |
| Compound 28 + Metominostrobin | 225 + 150 | 98 |
| Compound 28 + Oryzastrobin | 225 + 100 | 98 |
| Compound 28 + Furametpyr | 225 + 45 | 98 |
| Compound 30 + Thifluzamide | 225 + 60 | 98 |
| Compound 30 + Flutolanil | 225 + 210 | 98 |
| Compound 30 + Metominostrobin | 225 + 150 | 98 |
| Compound 30 + Oryzastrobin | 225 + 100 | 98 |
| Compound 30 + Furametpyr | 225 + 45 | 98 |
| Compound 31 + Thifluzamide | 225 + 60 | 98 |
| Compound 31 + Flutolanil | 225 + 210 | 98 |
| Compound 31 + Metominostrobin | 225 + 150 | 98 |
| Compound 31 + Oryzastrobin | 225 + 100 | 98 |
| Compound 31 + Furametpyr | 225 + 45 | 99 |

[Test Example 6]

Control Test on Paddy Rice Sheath Blight (Nursery Box Application)

Rices (cultivar: Koshihikari) cultivated in a nursery box were treated with a granule formulation in a prescribed amount, and then 4 rice seedlings in the nursery box were transplanted to a 1/5000a pot. After 30 days from the treatment, Rhizoctonia solani cultured on a rice chaff/bran medium was inoculated on the basal of the rice plant. After 10 days from the inoculation, the extended lesion length of sheath blight of the whole stem was examined. The control value was calculated according to the following equation (3 replications). The results are shown in Table 10.

Control Value = (1 - average lesion length per a stem in the treated plot / average lesion length per a stem in the untreated plot) x 100

[Table 10]

| Supplied chemical | Amount of treating chemical (gai/box) | Control value |
|---|---|---|
| Compound 6 | 7.5 | 4 |
| Compound 15 | 7.5 | 3 |
| Compound 24 | 7.5 | 4 |
| Compound 28 | 7.5 | 5 |

(continued)

| Supplied chemical | Amount of treating chemical (gai/box) | Control value |
|---|---|---|
| Compound 31 | 7.5 | 2 |
| Thifluzamide | 1 | 95 |
| Oryzastrobin | 3.5 | 94 |
| Furametpyr | 2 | 96 |
| Compound 6 + Thifluzamide | 7.5 + 1 | 98 |
| Compound 6 + Oryzastrobin | 7.5 + 3.5 | 99 |
| Compound 6 + Furametpyr | 7.5 + 2 | 98 |
| Compound 15 + Thifluzamide | 7.5 + 1 | 97 |
| Compound 15 + Oryzastrobin | 7.5 + 3.5 | 98 |
| Compound 15 + Furametpyr | 7.5 + 2 | 98 |
| Compound 24 + Thifluzamide | 7.5 + 1 | 98 |
| Compound 24 + Oryzastrobin | 7.5 + 3.5 | 98 |
| Compound 24 + Furametpyr | 7.5 + 2 | 97 |
| Compound 28 + Thifluzamide | 7.5 + 1 | 98 |
| Compound 28 + Oryzastrobin | 7.5 + 3.5 | 97 |
| Compound 28 + Furametpyr | 7.5 + 2 | 98 |
| Compound 31 + Thifluzamide | 7.5 + 1 | 99 |
| Compound 31 + Oryzastrobin | 7.5 + 3.5 | 98 |
| Compound 31 + Furametpyr | 7.5 + 2 | 98 |

[Test Example 7]

Control Test on Rice Bankanae Disease

150 g of dry rice seeds of naturally infected with rice Bakanae disease (cultivar: Nihonbare) was immersed in a compound solution which was diluted with water to have a prescribed concentration at a volume ratio of 1:1 for 24 hours (liquid temperature; 20 degree centigrade) and air-dried. Subsequently, the seeds were soaked in water at 15 degree centigrade for 4 days and subjected to a sprouting in water at 30 degree centigrade for 24 hours, and then sowed in a nursery box. After the sowing, the seeds were incubated at 30 degree centigrade for 2 days and grown in a greenhouse. After 21 days from the sowing, the number of seedlings showing symptoms of Bankanae disease for 300 seedlings per each chemical was examined. The control value was calculated according to the following equation. The results are shown in Table 11.

Control Value = (1 - number of infected seedlings in the treated plot / number of infected seedlings in the untreated plot) x 100

[Table 11]

| Supplied chemical | Treating concentration (ppm) | Control value |
|---|---|---|
| Compound 32 | 60 | 12 |
| Compound 33 | 60 | 8 |

(continued)

| Supplied chemical | Treating concentration (ppm) | Control value |
|---|---|---|
| Benomyl | 1000 | 98 |
| Fludioxonil | 250 | 99 |
| Compound 32 + Benomyl | 60 + 1000 | 100 |
| Compound 32 + Fludioxonil | 60 + 250 | 100 |
| Compound 33 + Benomyl | 60 + 1000 | 100 |
| Compound 33 + Fludioxonil | 60 + 250 | 100 |

[Test Example 8]

Control Test on Seedling Blight (Rhizopus sp)

150 g of rice seeds (cultivar: Nihonbare) per a box was sowed in a commercial nursery box. After the sowing, the box was treated by irrigation with a compound solution which was diluted to the prescribed concentration at a ratio of 500 ml per a box before covering the seeds with soil. Infected soil, which was made by adding sterilized water to Rhizopus chinensis cultured on a PDA medium and pulverizing whole medium and mixing to a commercial soil was used for a bed soil. For covering the seeds, a commercial soil was used as it was. After covering the seeds with soil, the seeds were incubated at 32 degree centigrade for 2 days and then grown in a greenhouse.
After 18 days from the sowing, the severity index for 300 seedlings per each compound was examined in the following criteria. The control value was calculated according to the following equation from the average severity obtained by averaging the severity index of each seedling. The results are shown in Table 12.

Severity index 0: No lesion

1: Root browning or fat root observed

2: Defective growth

3: Withered to death

Control Value = (1 - average severity in the treated plot / average severity in the untreated plot) x 100

[Table 12]

| Supplied chemical | Treating concentration (ppm) | Control value |
|---|---|---|
| Compound 17 | 60 | 3 |
| Compound 34 | 60 | 3 |
| Iprodione | 1000 | 89 |
| TPN | 800 | 87 |
| Compound 17 + Iprodione | 60 + 1000 | 92 |
| Compound 17 + TPN | 60 + 800 | 91 |
| Compound 34 + Iprodione | 60 + 1000 | 91 |
| Compound 34 + TPN | 60 + 800 | 92 |

[Test Example 9]

Control Test on Seedling Blight (Pythium sp)

150 g of rice seeds of rice (cultivar: Nihonbare) per a box was sowed on a commercial nursery box. After the sowing, the box was treated by irrigation with a compound solution which was diluted to the prescribed concentration at a ratio of 500 ml per a box before covering the seeds with soil. Infected soil, which was made by adding sterilized water to Pythium sp cultured on a PDA medium and pulverizing whole medium and mixing to a commercial soil, was used for a bed soil. After covering the seeds with soil, the seeds were incubated at 30 degree centigrade for 2 days and then arranged under a condition of 5 degree centigrade for 2 days to enhance disease emergence. After the low temperature treatment, the seeds were grown in a greenhouse.
After 18 days from the sowing, the number of infected seedlings exhibiting symptoms such as blight, wilt, defective growth or the like for 300 seedlings per each chemical was examined and the control value was calculated according to the following equation.

Control Value = (1 - number of infected seedlings in the treated plot / number of infected seedlings in the untreated plot) x 100

The results are shown in Table 13.

[Table 13]

| Supplied chemical | Treating concentration (ppm) | Control value |
|---|---|---|
| Compound 15 | 60 | 4 |
| Hydroxyisoxazole | 800 | 90 |
| Compound 15 + Hydroxyisoxazole | 60 + 800 | 92 |

[Test Example 10]

Control Test on Bacterial Seedling Blight

150 g of dry rice seeds of naturally infected with bacterial seedling blight (cultivar: Nihonbare) was immersed in a compound solution which was diluted with water to have a prescribed concentration at a volume ratio of 1:1 (liquid temperature; 20 degree centigrade) for 24 hours and air-dried. Subsequently, the seeds were soaked in water at 15 degree centigrade for 4 days and subjected to a sprouting in water at 30 degree centigrade for 24 hours, and then sowed in a nursery box. After the sowing, the seeds were incubated at 30 degree centigrade for 2 days and grown in a greenhouse. After 21 days from the sowing, the severity index for 300 seedlings per each compound was examined on the basis of the following criteria, and the control value was calculated according to the following equation from the average severity obtained by averaging the severity index of each seedling. The results are shown in Table 14.

Severity index 0: healthy seedling
1: yellowing or etiolated seedling
2: dead seedling (withered)

Control Value = (1 - average severity in the treated plot / average severity in the untreated plot) x 100

[Table 14]

| Supplied chemical | Treating concentration (ppm) | Control value |
|---|---|---|
| Compound 28 | 60 | 6 |
| Oxolinic acid | 500 | 89 |
| Compound 28+ Oxolinic acid | 60 + 500 | 90 |

[Test Example 11]

Control Test on Clubroot of Cabbages (Soil Treatment)

A dust formulation in a prescribed amount was mixed in soil and cabbage seedlings (cultivar: Shiki-dori) were planted in the field where was recognized to be infected by clubroot. After 60 days from the treatment, plants were picked out, and clubroot formation was examined according to the degree of severity. The control value was calculated according to the following equation from the average severity obtained by averaging the severity index in each plot. The results are shown in Table 15.

Severity index 0: No clubroot formed
1: Cluroot was formed at a portion of from not less than 1% to less than 25% of the whole root
2: Cluroot was formed at a portion of from not less than 25 % to less than 50 % of the whole root
3: Cluroot was formed at a portion of from not less than 50 % to less than 75 % of the whole root
4: Cluroot was formed at a portion of not less than 75 % of the whole root

Control Value = (1 - average severity in the treated plot / average severity in the untreated plot) x 100

[Table 15]

| Supplied chemical | Amount of treating chemical (gai/10a) | Control value |
|---|---|---|
| Compound 35 | 200 | 8 |
| Flusulfamide | 60 | 93 |
| Compound 35+ Flusulfamide | 200 + 60 | 95 |

[Test Example 12]

Insecticidal Test on Small Brown Planthopper (Spraying Test)

A compound solution which was prepared by diluting to the prescribed concentration was sprayed on rice seedlings (cultivar: Koshihikari) and air-dried. Then, rice seedlings were put into a glass test tube with water in it along with 10 larvae of small brown planthoppers (in third growth stage), and the glass test tube was cotton-plugged. After 6 days, the number of survived larvaes was examined and the mortality rate was calculated (2 duplications of 10 insects per a plot). The results are shown in Table 16 (Tables 16-1 to 16-5).

[Table 16-1]

| Supplied chemical | Treating concentration (ppm) | Mortality rate (%) |
|---|---|---|
| Compound 6 | 60 | 0 |
| Compound 15 | 60 | 0 |
| Compound 17 | 60 | 0 |
| Compound 24 | 60 | 0 |

(continued)

| Supplied chemical | Treating concentration (ppm) | Mortality rate (%) |
|---|---|---|
| Compound 28 | 60 | 0 |
| Compound 31 | 60 | 0 |
| Compound 32 | 60 | 5 |
| Compound 33 | 60 | 0 |
| Compound 34 | 60 | 0 |
| Compound 35 | 60 | 5 |
| Compound 37 | 60 | 0 |
| Compound 38 | 60 | 0 |
| Compound 40 | 60 | 0 |
| MEP | 500 | 95 |
| MPP | 500 | 90 |
| BPMC | 500 | 95 |
| Silafluofen | 95 | 95 |
| Etofenprox | 100 | 95 |
| Clothianidin | 40 | 95 |
| Dinotefuran | 67 | 95 |
| Buprofezin | 200 | 90 |
| Ethiprole | 100 | 95 |

[Table 16-2]

| Supplied chemical | Treating concentration (ppm) | Mortality rate (%) |
|---|---|---|
| Compound 6 + MEP | 60 + 500 | 100 |
| Compound 6 + MPP | 60 + 500 | 100 |
| Compound 6 + BPMC | 60 + 500 | 100 |
| Compound 6 + Silafluofen | 60 + 95 | 100 |
| Compound 6 + Etofenprox | 60 + 100 | 100 |
| Compound 6 + Clothianidin | 60 + 40 | 100 |
| Compound 6 + Dinotefuran | 60 + 67 | 100 |
| Compound 6 + Buprofezin | 60 + 200 | 100 |
| Compound 6 + Ethiprole | 60 + 100 | 100 |
| Compound 15 + MEP | 60 + 500 | 100 |
| Compound 15 + MPP | 60 + 500 | 100 |
| Compound 15 + BPMC | 60 + 500 | 100 |
| Compound 15 + Silafluofen | 60 + 95 | 100 |
| Compound 15 + Etofenprox | 60 + 100 | 100 |
| Compound 15 + Clothianidin | 60 + 40 | 100 |
| Compound 15 + Dinotefuran | 60 + 67 | 100 |
| Compound 15 + Buprofezin | 60 + 200 | 100 |

(continued)

| Supplied chemical | Treating concentration (ppm) | Mortality rate (%) |
|---|---|---|
| Compound 15 + Ethiprole | 60 + 100 | 100 |
| Compound 17 + MEP | 60 + 500 | 100 |
| Compound 17 + MPP | 60 + 500 | 100 |
| Compound 17 + BPMC | 60 + 500 | 100 |
| Compound 17 + Silafluofen | 60 + 95 | 100 |
| Compound 17 + Etofenprox | 60 + 100 | 100 |
| Compound 17 + Clothianidin | 60 + 40 | 100 |
| Compound 17 + Dinotefuran | 60 + 67 | 100 |
| Compound 17 + Buprofezin | 60 + 200 | 100 |
| Compound 17 + Ethiprole | 60 + 100 | 100 |
| Compound 24 + MEP | 60 + 500 | 100 |
| Compound 24 + MPP | 60 + 500 | 100 |
| Compound 24 + BPMC | 60 + 500 | 100 |
| Compound 24 + Silafluofen | 60 + 95 | 100 |
| Compound 24 + Etofenprox | 60 + 100 | 100 |
| Compound 24 + Clothianidin | 60 + 40 | 100 |
| Compound 24 + Dinotefuran | 60 + 67 | 100 |
| Compound 24 + Buprofezin | 60 + 200 | 100 |
| Compound 24 + Ethiprole | 60 + 100 | 100 |

[Table 16-3]

| Supplied chemical | Treating concentration (ppm) | Mortality rate (%) |
|---|---|---|
| Compound 28 + MEP | 60 + 500 | 100 |
| Compound 28 + MPP | 60 + 500 | 100 |
| Compound 28 + BPMC | 60 + 500 | 100 |
| Compound 28 + Silafluofen | 60 + 95 | 100 |
| Compound 28 + Etofenprox | 60 + 100 | 100 |
| Compound 28 + Clothianidin | 60 + 40 | 100 |
| Compound 28 + Dinotefuran | 60 + 67 | 100 |
| Compound 28 + Buprofezin | 60 + 200 | 100 |
| Compound 28 + Ethiprole | 60 + 100 | 100 |
| Compound 31 + MEP | 60 + 500 | 100 |
| Compound 31 + MPP | 60 + 500 | 100 |
| Compound 31 + BPMC | 60 + 500 | 100 |
| Compound 31 + Silafluofen | 60 + 95 | 100 |
| Compound 31 + Etofenprox | 60 + 100 | 100 |
| Compound 31 + Clothianidin | 60 + 40 | 100 |
| Compound 31 + Dinotefuran | 60 + 67 | 100 |

(continued)

| Supplied chemical | Treating concentration (ppm) | Mortality rate (%) |
|---|---|---|
| Compound 31 + Buprofezin | 60 + 200 | 100 |
| Compound 31 + Ethiprole | 60 + 100 | 100 |
| Compound 32 + MEP | 60 + 500 | 100 |
| Compound 32 + MPP | 60 + 500 | 100 |
| Compound 32 + BPMC | 60 + 500 | 100 |
| Compound 32 + Silafluofen | 60 + 95 | 100 |
| Compound 32 + Etofenprox | 60 + 100 | 100 |
| Compound 32 + Clothianidin | 60 + 40 | 100 |
| Compound 32 + Dinotefuran | 60 + 67 | 100 |
| Compound 32 + Buprofezin | 60 + 200 | 100 |
| Compound 32 + Ethiprole | 60 + 100 | 100 |
| Compound 33 + MEP | 60 + 500 | 100 |
| Compound 33 + MPP | 60 + 500 | 100 |
| Compound 33 + BPMC | 60 + 500 | 100 |
| Compound 33 + Silafluofen | 60 + 95 | 100 |
| Compound 33 + Etofenprox | 60 + 100 | 100 |
| Compound 33 + Clothianidin | 60 + 40 | 100 |
| Compound 33 + Dinotefuran | 60 + 67 | 100 |
| Compound 33 + Buprofezin | 60 + 200 | 100 |
| Compound 33 + Ethiprole | 60 + 100 | 100 |

[Table 16-4]

| Supplied chemical | Treating concentration (ppm) | Mortality rate (%) |
|---|---|---|
| Compound 34 + MEP | 60 + 500 | 100 |
| Compound 34 + MPP | 60 + 500 | 100 |
| Compound 34 + BPMC | 60 + 500 | 100 |
| Compound 34 + Silafluofen | 60 + 95 | 100 |
| Compound 34 + Etofenprox | 60 + 100 | 100 |
| Compound 34 + Clothianidin | 60 + 40 | 100 |
| Compound 34 + Dinotefuran | 60 + 67 | 100 |
| Compound 34 + Buprofezin | 60 + 200 | 100 |
| Compound 34 + Ethiprole | 60 + 100 | 100 |
| Compound 35 + MEP | 60 + 500 | 100 |
| Compound 35 + MPP | 60 + 500 | 100 |
| Compound 35 + BPMC | 60 + 500 | 100 |
| Compound 35 + Silafluofen | 60 + 95 | 100 |
| Compound 35 + Etofenprox | 60 + 100 | 100 |
| Compound 35 + Clothianidin | 60 + 40 | 100 |

(continued)

| Supplied chemical | Treating concentration (ppm) | Mortality rate (%) |
|---|---|---|
| Compound 35 + Dinotefuran | 60 + 67 | 100 |
| Compound 35 + Buprofezin | 60 + 200 | 100 |
| Compound 35 + Ethiprole | 60 + 100 | 100 |
| Compound 37 + MEP | 60 + 500 | 100 |
| Compound 37 + MPP | 60 + 500 | 100 |
| Compound 37 + BPMC | 60 + 500 | 100 |
| Compound 37 + Silafluofen | 60 + 95 | 100 |
| Compound 37 + Etofenprox | 60 + 100 | 100 |
| Compound 37 + Clothianidin | 60 + 40 | 100 |
| Compound 37 + Dinotefuran | 60 + 67 | 100 |
| Compound 37 + Buprofezin | 60 + 200 | 100 |
| Compound 37 + Ethiprole | 60 + 100 | 100 |
| Compound 38 + MEP | 60 + 500 | 100 |
| Compound 38 + MPP | 60 + 500 | 100 |
| Compound 38 + BPMC | 60 + 500 | 100 |
| Compound 38 + Silafluofen | 60 + 95 | 100 |
| Compound 38 + Etofenprox | 60 + 100 | 100 |
| Compound 38 + Clothianidin | 60 + 40 | 100 |
| Compound 38 + Dinotefuran | 60 + 67 | 100 |
| Compound 38 + Buprofezin | 60 + 200 | 100 |
| Compound 38 + Ethiprole | 60 + 100 | 100 |

[Table 16-5]

| Supplied chemical | Treating concentration (ppm) | Mortality rate (%) |
|---|---|---|
| Compound 40 + MEP | 60 + 500 | 100 |
| Compound 40 + MPP | 60 + 500 | 100 |
| Compound 40 + BPMC | 60 + 500 | 100 |
| Compound 40 + Silafluofen | 60 + 95 | 100 |
| Compound 40 + Etofenprox | 60 + 100 | 100 |
| Compound 40 + Clothianidin | 60 + 40 | 100 |
| Compound 40 + Dinotefuran | 60 + 67 | 100 |
| Compound 40 + Buprofezin | 60 + 200 | 100 |
| Compound 40 + Ethiprole | 60 + 100 | 100 |

[Test Example 13]

Insecticidal Test on Rice Stem Borer (Spraying Test)

A compound solution which was prepared to the prescribed concentration was sprayed on a rice pot (cultivar: Koshihikari; 4 leaf stage). 2 pots were air-dried and then foliage were cut off and put into a plastic cup along with 10

larvae of rice stem borers (in second growth stage). After 4 days, the number of survived larvae was examined and the mortality rate was calculated (2 replications). The results are shown in Table 17 (Table 17-1 to 17-3).

[Table 17-1]

| Supplied chemical | Treating concentration (ppm) | Mortality rate (%) |
|---|---|---|
| Compound 6 | 60 | 0 |
| Compound 15 | 60 | 0 |
| Compound 17 | 60 | 0 |
| Compound 24 | 60 | 5 |
| Compound 28 | 60 | 0 |
| Compound 31 | 60 | 0 |
| Compound 32 | 60 | 0 |
| Compound 33 | 60 | 0 |
| Compound 34 | 60 | 5 |
| Compound 35 | 60 | 0 |
| Compound 37 | 60 | 0 |
| Compound 38 | 60 | 0 |
| Compound 40 | 60 | 0 |
| Cartap | 500 | 95 |
| Tebufenozide | 100 | 95 |
| Compound 101 | 100 | 95 |
| Compound 102 | 25 | 95 |
| Compound 103 | 250 | 90 |
| Compound 6 + Cartap | 60 + 500 | 100 |
| Compound 6 + Tebufenozide | 60 + 100 | 100 |
| Compound 6 + Compound 101 | 60 + 100 | 100 |
| Compound 6 + Compound 102 | 60 + 25 | 100 |
| Compound 6 + Compound 103 | 60 + 250 | 100 |
| Compound 15 + Cartap | 60 + 500 | 100 |
| Compound 15 + Tebufenozide | 60 + 100 | 100 |
| Compound 15 + Compound 101 | 60 + 100 | 100 |
| Compound 15 + Compound 102 | 60 + 25 | 100 |
| Compound 15 + Compound 103 | 60 + 250 | 100 |

[Table 17-2]

| Supplied chemical | Treating concentration (ppm) | Mortality rate (%) |
|---|---|---|
| Compound 17 + Cartap | 60 + 500 | 100 |
| Compound 17 + Tebufenozide | 60 + 100 | 100 |
| Compound 17 + Compound 101 | 60 + 100 | 100 |
| Compound 17 + Compound 102 | 60 + 25 | 100 |

(continued)

| Supplied chemical | Treating concentration (ppm) | Mortality rate (%) |
|---|---|---|
| Compound 17 + Compound 103 | 60 + 250 | 100 |
| Compound 24 + Cartap | 60 + 500 | 100 |
| Compound 24 + Tebufenozide | 60 + 100 | 100 |
| Compound 24 + Compound 101 | 60 + 100 | 100 |
| Compound 24 + Compound 102 | 60 + 25 | 100 |
| Compound 24 + Compound 103 | 60 + 250 | 100 |
| Compound 28 + Cartap | 60 + 500 | 100 |
| Compound 28 + Tebufenozide | 60 + 100 | 100 |
| Compound 28 + Compound 101 | 60 + 100 | 100 |
| Compound 28 + Compound 102 | 60 + 25 | 100 |
| Compound 28 + Compound 103 | 60 + 250 | 100 |
| Compound 31 + Cartap | 60 + 500 | 100 |
| Compound 31 + Tebufenozide | 60 + 100 | 100 |
| Compound 31 + Compound 101 | 60 + 100 | 100 |
| Compound 31 + Compound 102 | 60 + 25 | 100 |
| Compound 31 + Compound 103 | 60 + 250 | 100 |
| Compound 32 + Cartap | 60 + 500 | 100 |
| Compound 32 + Tebufenozide | 60 + 100 | 100 |
| Compound 32 + Compound 101 | 60 + 100 | 100 |
| Compound 32 + Compound 102 | 60 + 25 | 100 |
| Compound 32 + Compound 103 | 60 + 250 | 100 |
| Compound 33 + Cartap | 60 + 500 | 100 |
| Compound 33 + Tebufenozide | 60 + 100 | 100 |
| Compound 33 + Compound 101 | 60 + 100 | 100 |
| Compound 33 + Compound 102 | 60 + 25 | 100 |
| Compound 33 + Compound 103 | 60 + 250 | 100 |
| Compound 34 + Cartap | 60 + 500 | 100 |
| Compound 34 + Tebufenozide | 60 + 100 | 100 |
| Compound 34 + Compound 101 | 60 + 100 | 100 |
| Compound 34 + Compound 102 | 60 + 25 | 100 |
| Compound 34 + Compound 103 | 60 + 250 | 100 |

[Table 17-3]

| Supplied chemical | Treating concentration (ppm) | Mortality rate (%) |
|---|---|---|
| Compound 35 + Cartap | 60 + 500 | 100 |
| Compound 35 + Tebufenozide | 60 + 100 | 100 |
| Compound 35 + Compound 101 | 60 + 100 | 100 |
| Compound 35 + Compound 102 | 60 + 25 | 100 |

(continued)

| Supplied chemical | Treating concentration (ppm) | Mortality rate (%) |
|---|---|---|
| Compound 35 + Compound 103 | 60 + 250 | 100 |
| Compound 37 + Cartap | 60 + 500 | 100 |
| Compound 37 + Tebufenozide | 60 + 100 | 100 |
| Compound 37 + Compound 101 | 60 + 100 | 100 |
| Compound 37 + Compound 102 | 60 + 25 | 100 |
| Compound 37 + Compound 103 | 60 + 250 | 100 |
| Compound 38 + Cartap | 60 + 500 | 100 |
| Compound 38 + Tebufenozide | 60 + 100 | 100 |
| Compound 38 + Compound 101 | 60 + 100 | 100 |
| Compound 38 + Compound 102 | 60 + 25 | 100 |
| Compound 38 + Compound 103 | 60 + 250 | 100 |
| Compound 40 + Cartap | 60 + 500 | 100 |
| Compound 40 + Tebufenozide | 60 + 100 | 100 |
| Compound 40 + Compound 101 | 60 + 100 | 100 |
| Compound 40 + Compound 102 | 60 + 25 | 100 |
| Compound 40 + Compound 103 | 60 + 250 | 100 |

[Test Example 14]

Insecticidal Test on Small Brown Planthopper (Submerged Application)

A granule formulation in a prescribed amount was used in a submerged application on a 1/5000a rice pot (cultivar: Koshihikari; 4 leaf stage). After 7 days from the treatment, the chemical treated rice was put into a glass test tube with water in it along with 10 larvae of small brown planthoppers (in third growth stage), and the glass test tubu was cotton-plugged. After 6 days, the number of survived larvae was examined and the mortality rate was calculated (two replications of 10 insects per a plot). The results are shown in Table 18 (Tables 18-1 to 18-2).

[Table 18-1]

| Supplied chemical | Amount of treating chemical (gai/10a) | Mortality rate (%) |
|---|---|---|
| Compound 6 | 225 | 5 |
| Compound 15 | 225 | 5 |
| Compound 24 | 225 | 0 |
| Compound 25 | 225 | 5 |
| Compound 28 | 225 | 0 |
| Compound 30 | 225 | 0 |
| Compound 31 | 225 | 0 |
| Diazinon | 90 | 90 |
| Etofenprox | 45 | 95 |
| Dinotefuran | 30 | 95 |
| Clothianidin | 15 | 95 |
| Buprofezin | 60 | 95 |

(continued)

| Supplied chemical | Amount of treating chemical (gai/10a) | Mortality rate (%) |
|---|---|---|
| Ethiprole | 45 | 95 |
| Compound 6 + Diazinon | 225 + 90 | 100 |
| Compound 6 + Etofenprox | 225 + 45 | 100 |
| Compound 6 + Dinotefuran | 225 + 30 | 100 |
| Compound 6 + Clothianidin | 225 + 15 | 100 |
| Compound 6 + Buprofezin | 225 + 60 | 100 |
| Compound 6 + Ethiprole | 225 + 45 | 100 |
| Compound 15 + Diazinon | 225 + 90 | 100 |
| Compound 15 + Etofenprox | 225 + 45 | 100 |
| Compound 15 + Dinotefuran | 225 + 30 | 100 |
| Compound 15 + Clothianidin | 225 + 15 | 100 |
| Compound 15 + Buprofezin | 225 + 60 | 100 |
| Compound 15 + Ethiprole | 225 + 45 | 100 |

[Table 18-2]

| Supplied chemical | Amount of treating chemical (gai/10a) | Mortality rate (%) |
|---|---|---|
| Compound 24 + Diazinon | 225 + 90 | 100 |
| Compound 24 + Etofenprox | 225 + 45 | 100 |
| Compound 24 + Dinotefuran | 225 + 30 | 100 |
| Compound 24 + Clothianidin | 225 + 15 | 100 |
| Compound 24 + Buprofezin | 225 + 60 | 100 |
| Compound 24 + Ethiprole | 225 + 45 | 100 |
| Compound 25 + Diazinon | 225 + 90 | 100 |
| Compound 25 + Etofenprox | 225 + 45 | 100 |
| Compound 25 + Dinotefuran | 225 + 30 | 100 |
| Compound 25 + Clothianidin | 225 + 15 | 100 |
| Compound 25 + Buprofezin | 225 + 60 | 100 |
| Compound 25 + Ethiprole | 225 + 45 | 100 |
| Compound 28 + Diazinon | 225 + 90 | 100 |
| Compound 28 + Etofenprox | 225 + 45 | 100 |
| Compound 28 + Dinotefuran | 225 + 30 | 100 |
| Compound 28 + Clothianidin | 225 + 15 | 100 |
| Compound 28 + Buprofezin | 225 + 60 | 100 |
| Compound 28 + Ethiprole | 225 + 45 | 100 |
| Compound 30 + Diazinon | 225 + 90 | 100 |
| Compound 30 + Etofenprox | 225 + 45 | 100 |
| Compound 30 + Dinotefuran | 225 + 30 | 100 |
| Compound 30 + Clothianidin | 225 + 15 | 100 |

(continued)

| Supplied chemical | Amount of treating chemical (gai/10a) | Mortality rate (%) |
|---|---|---|
| Compound 30 + Buprofezin | 225 + 60 | 100 |
| Compound 30 + Ethiprole | 225 + 45 | 100 |
| Compound 31 + Diazinon | 225 + 90 | 100 |
| Compound 31 + Etofenprox | 225 + 45 | 100 |
| Compound 31 + Dinotefuran | 225 + 30 | 100 |
| Compound 31 + Clothianidin | 225 + 15 | 100 |
| Compound 31 + Buprofezin | 225 + 60 | 100 |
| Compound 31 + Ethiprole | 225 + 45 | 100 |

[Test Example 15]

Insecticidal Test on Rice Stem Borer (Submerged Application)

A granule formulation in a prescribed amount was used in a submerged application on a 1/5000a rice pot (cultivar: Koshihikari; 4 leaf stage). After 7 days from the treatment, the foliage were cut off and put into a plastic cup along with 10 larvae of rice stem borers (in second growth stage). After 4 days, the number of survived larvae was examined and the mortality rate was calculated (two replications). The results are shown in Table 19.

[Table 19]

| Supplied chemical | Amount of treating chemical (gai/10a) | Mortality rate (%) |
|---|---|---|
| Compound 6 | 225 | 0 |
| Compound 15 | 225 | 0 |
| Compound 24 | 225 | 5 |
| Compound 25 | 225 | 0 |
| Compound 28 | 225 | 0 |
| Compound 30 | 225 | 0 |
| Compound 31 | 225 | 5 |
| Cartap | 120 | 95 |
| Compound 6 + Cartap | 225 + 120 | 100 |
| Compound 15 + Cartap | 225 + 120 | 100 |
| Compound 24 + Cartap | 225 + 120 | 100 |
| Compound 25 + Cartap | 225 + 120 | 100 |
| Compound 28 + Cartap | 225 + 120 | 100 |
| Compound 30 + Cartap | 225 + 120 | 100 |
| Compound 31 + Cartap | 225 + 120 | 100 |

[Test Example 16]

Insecticidal Test on Small Brown Planthopper (Nursery Box Application)

Rices (cultivar: Koshihikari) grown in a nursery box were treated with a granule formulation in a prescribed amount and then 4 rice seedlings in the nursery box were transplanted to a 1/5000a pot. After 14 days from the treatment, the chemical treated rice was put into a glass test tube with water in it along with 10 larvae of small brown planthoppers (in third growth stage), and the glass test tubu was cotton-plugged. After 6 days, the number of survived larvae was

examined and the mortality rate was calculated (2 replications of 10 insects per a plot). The results are shown in Table 20 (Tables 20-1 to 20-2).

[Table 20-1]

| treating chemical Supplied chemical | Amount of treating chemical (gai/box) | Mortality rate (%) |
|---|---|---|
| Compound 6 | 7.5 | 0 |
| Compound 15 | 7.5 | 0 |
| Compound 24 | 7.5 | 5 |
| Compound 28 | 7.5 | 0 |
| Compound 31 | 7.5 | 0 |
| Propaphos | 4 | 95 |
| Benfuracarb | 4 | 95 |
| Dinotefuran | 1 | 95 |
| Imidacloprid | 1 | 95 |
| Clothianidin | 0.8 | 95 |
| Thiamethoxam | 1 | 95 |
| Fipronil | 0.5 | 95 |
| Pymetrozine | 1.5 | 95 |
| Compound 6 + Propaphos | 7.5 + 4 | 100 |
| Compound 6 + Benfuracarb | 7.5 + 4 | 100 |
| Compound 6 + Dinotefuran | 7.5 + 1 | 100 |
| Compound 6 + Imidacloprid | 7.5 + 1 | 100 |
| Compound 6 + Clothianidin | 7.5 + 0.8 | 100 |
| Compound 6 + Thiamethoxam | 7.5 + 1 | 100 |
| Compound 6 + Fipronil | 7.5 + 0.5 | 100 |
| Compound 6 + Pymetrozine | 7.5 + 1.5 | 100 |
| Compound 15 + Propaphos | 7.5 + 4 | 100 |
| Compound 15 + Benfuracarb | 7.5 + 4 | 100 |
| Compound 15 + Dinotefuran | 7.5 + 1 | 100 |
| Compound 15 + Imidacloprid | 7.5 + 1 | 100 |
| Compound 15 + Clothianidin | 7.5 + 0.8 | 100 |
| Compound 15 + Thiamethoxam | 7.5 + 1 | 100 |
| Compound 15 + Fipronil | 7.5 + 0.5 | 100 |
| Compound 15 + Pymetrozine | 7.5 + 1.5 | 100 |

[Table 20-2]

| Supplied chemical | Amount of treating chemical (gai/box) | Mortality rate (%) |
|---|---|---|
| Compound 24 + Propaphos | 7.5 + 4 | 100 |
| Compound 24 + Benfuracarb | 7.5 + 4 | 100 |
| Compound 24 + Dinotefuran | 7.5 + 1 | 100 |

(continued)

| Supplied chemical | Amount of treating chemical (gai/box) | Mortality rate (%) |
|---|---|---|
| Compound 24 + Imidacloprid | 7.5 + 1 | 100 |
| Compound 24 + Clothianidin | 7.5 + 0.8 | 100 |
| Compound 24 + Thiamethoxam | 7.5 + 1 | 100 |
| Compound 24 + Fipronil | 7.5 + 0.5 | 100 |
| Compound 24 + Pymetrozine | 7.5 + 1.5 | 100 |
| Compound 28 + Propaphos | 7.5 + 4 | 100 |
| Compound 28 + Benfuracarb | 7.5 + 4 | 100 |
| Compound 28 + Dinotefuran | 7.5 + 1 | 100 |
| Compound 28 + Imidacloprid | 7.5 + 1 | 100 |
| Compound 28 + Clothianidin | 7.5 + 0.8 | 100 |
| Compound 28 + Thiamethoxam | 7.5 + 1 | 100 |
| Compound 28 + Fipronil | 7.5 + 0.5 | 100 |
| Compound 28 + Pymetrozine | 7.5 + 1.5 | 100 |
| Compound 31 + Propaphos | 7.5 + 4 | 100 |
| Compound 31 + Benfuracarb | 7.5 + 4 | 100 |
| Compound 31 + Dinotefuran | 7.5 + 1 | 100 |
| Compound 31 + Imidacloprid | 7.5 + 1 | 100 |
| Compound 31 + Clothianidin | 7.5 + 0.8 | 100 |
| Compound 31 + Thiamethoxam | 7.5 + 1 | 100 |
| Compound 31 + Fipronil | 7.5 + 0.5 | 100 |
| Compound 31 + Pymetrozine | 7.5 + 1.5 | 100 |

[Test Example 17]

Insecticidal Test on Rice Stem Borer (Nursery Box Application)

Rices (cultivar: Koshihikari) grown in a nursery box were treated with a granule formulation in a prescribed amount and then 4 rice seedlings in the nursery box were transplanted to a 1/5000a pot. After 14 days from the treatment, the foliage were cut off and put into a plastic cup along with 10 larvae of rice stem borers (in second growth stage). After 4 days, the number of survived larvae was examined and the mortality rate was calculated (four replications). The results are shown in Table 21.

[Table 21]

| Suplied chemical | Amount of treating chemical (gai/box) | Mortality rate (%) |
|---|---|---|
| Compound 6 | 7.5 | 0 |
| Compound 15 | 7.5 | 0 |
| Compound 24 | 7.5 | 0 |
| Compound 28 | 7.5 | 5 |
| Compound 31 | 7.5 | 0 |
| Cartap | 4 | 95 |
| Spinosad | 0.4 | 95 |

(continued)

| Suplied chemical | Amount of treating chemical (gai/box) | Mortality rate (%) |
|---|---|---|
| Compound 6 + Cartap | 7.5 + 4 | 100 |
| Compound 6 + Spinosad | 7.5 + 0.4 | 100 |
| Compound 15 + Cartap | 7.5 + 4 | 100 |
| Compound 15 + Spinosad | 7.5 + 0.4 | 100 |
| Compound 24 + Cartap | 7.5 + 4 | 100 |
| Compound 24 + Spinosad | 7.5 + 0.4 | 100 |
| Compound 28 + Cartap | 7.5 + 4 | 100 |
| Compound 28 + Spinosad | 7.5 + 0.4 | 100 |
| Compound 31 + Cartap | 7.5 + 4 | 100 |
| Compound 31 + Spinosad | 7.5 + 0.4 | 100 |

Preparation Examples of compounds will be specifically described below.

[Preparation Example 1]

Synthesis Method of N-(chloromethyloxycarbonyl)-N'-(4-methylbenzoyl)-3-methyl-1,2-butanediamine (Compound No. 1)

To 6 ml of dichloromethane solution containing 0.50 g of N-(4-methylbenzoyl)-3-methyl-1,2-butanediamine hydrochloride was added 0.39 g of triethylamine under an ice-cooled condition, and then a 2 ml dichloromethane solution containing 0.25 g of chloromethyl chloroformate was added thereto under an ice-cooled condition and stirred at room temperature for 4 hours. The reaction solution was purified by silica gel column chromatography (ethyl acetate / hexane) to obtain 0.43 g of the title compound as a white crystal.

[Preparation Example 2]

Synthesis Method of N-(2,2,2-trifluoroethyloxycarbonyl)-N'-(4-methylbenzoyl)-3-methyl-1,2-butanediamine (Compound No. 6)

To a mixture of 0.42 g of 2,2,2-trifluoroethanol and 0.43 g of triethylamine was added 6 ml of dichloromethane solution containing 0.78 g of 4-nitrophenyl chloroformate under an ice-cooled condition. The reaction solution was stirred under an ice-cooled condition for 1 hour, and then 0.50 g of N-(4-methylbenzoyl)-3-methyl-1,2-butanediamine hydrochloride was added thereto under an ice-cooled condition. 0.21 g of triethylamine was added thereto under an ice-cooled condition, and then the reaction solution was stirred under an ice-cooled condition for 1 hour and at room temperature for 2 hours. The reaction solution was allowed to stand at room temperature overnight, and then concentrated under a reduced pressure to obtain a residue. To the resulting residue was added 50 ml of ethyl acetate and the resulting mixture was washed with water. The organic layer was dried over anhydrous magnesium sulfate, and then concentrated under a reduced pressure to obtain a solid. The resulting solid was washed with diisopropyl ether, and then purified by silica gel column chromatography (ethyl acetate / hexane) to obtain 0.34 g of the title compound as a white crystal.

[Preparation Example 3]

Synthesis Method of N-(2,2,2-trichloroethyloxycarbonyl)-N'-(4-methylbenzoyl)-3-methyl-1,2-butanediamine (Compound No. 7)

To 5 ml of dichloromethane solution containing 0.50 g of N-(4-methylbenzoyl)-3-methyl-1,2-butanediamine hydrochloride was added 0.43 g of triethylamine under an ice-cooled condition, and then 0.41 g of 2,2,2-trichloroethyl chloroformate was added thereto under an ice-cooled condition and the resulting mixture was stirred at room temperature for 4 hours. The reaction solution was purified by silica gel column chromatography (ethyl acetate / hexane) to obtain 0.52 g of the title compound as a white crystal.

[Preparation Example 4]

Synthesis Method of N-(1,1,1,3,3,3-hexafluoro-2-propyloxycarbonyl)-N'-(4-methylbenzoyl)-3-methyl-1,2-butanediamine (Compound No. 8)

To 6 ml of dichloromethane solution containing 0.78 g of 4-nitrophenyl chloroformate was added a mixture of 0.65 g of 1,1,1,3,3,3-hexafluoro-2-propanol and 0.43 g of triethylamine under an ice-cooled condition. The reaction solution was stirred under an ice-cooled condition for 1 hour, and then 0.50 g of N-(4-methylbenzoyl)-3-methyl-1,2-butanediamine hydrochloride was added thereto under an ice-cooled condition. The reaction solution was stirred under an ice-cooled condition for 15 minutes, and then 0.21 g of triethylamine was added thereto under an ice-cooled condition. The reaction solution was stirred under an ice-cooled condition for 1 hour and at room temperature for 1 hour, and then allowed to stand overnight. 50 ml of dichloromethane was added to the reaction solution and the resulting mixture was washed with water. The organic layer was dried over anhydrous magnesium sulfate, and then concentrated under a reduced pressure to obtain a solid. The resulting solid was purified by silica gel column chromatography (ethyl acetate / hexane) to obtain 0.38 g of the title compound as a white crystal.

[Preparation Example 5]

Synthesis Method of N-(2-chlorocyclohexyloxycarbonyl)-N'-(4-methylbenzoyl)-3-methyl-1,2-butanediamine (Compound No. 17)

To 50 ml of dichloromethane solution containing 3.33 g of 2-chlorocyclohexanol and 1.96 g of pyridine was added a solution of 5.00 g of 4-nitrophenyl chloroformate in 25 ml of dichloromethane under an ice-cooled condition. The reaction solution was stirred at room temperature for 3.5 hours, and then 100 ml of dichloromethane was added thereto and the resulting mixture was washed with a saturated aqueous sodium hydrogen carbonate solution. The organic layer was dried over anhydrous magnesium sulfate, and then concentrated under a reduced pressure to obtain oil. The resulting oil was purified by silica gel column chromatography (dichloromethane / hexane) to obtain 4.43 g of (2-chlorocyclohexyl)-(4-nitrophenyl) carbonate as yellow oil.

To 50 ml of tetrahydrofuran solution containing 4.43 g of (2-chlorocyclohexyl)-(4-nitrophenyl)carbonate was added 2.00 g of N-(4-methylbenzoyl)-3-methyl-1,2-butanediamine hydrochloride under an ice-cooled condition. 0.78 g of triethylamine was added thereto under an ice-cooled condition, and then the reaction solution was stirred under an ice-cooled condition for 1 hour and at room temperature for 2 hours. The reaction solution was allowed to stand at room temperature overnight, and then concentrated under a reduced pressure to obtain a residue. To the resulting residue was added 200 ml of ethyl acetate and the resulting mixture was washed with water. The organic layer was dried over anhydrous magnesium sulfate, and then concentrated under a reduced pressure to obtain oil. The resulting oil was purified by silica gel column chromatography (ethyl acetate / hexane) to obtain 1.38 g of the title compound as a white crystal.

In accordance with the above Preparation Examples, the diamine derivatives represented by the formula (1) described in the aforementioned Table 1 were synthesized. Physical properties of the synthesized compounds were shown in Table 22 (Tables 22-1 to 22-9).

Table 22-1

| Compound No. | Physical Properties |
|---|---|
| 1 | $^1$H NMR ($CDCl_3$, ppm): 1.00 (3H, d, J=7.3 Hz), 1.02 (3H, d, J=7.1 Hz), 1.85-1.94 (1H, m), 2.39 (3H, s), 3.45-3.51 (1H, m), 3.63-3.76 (2H, m), 5.24 (1H, d, J=8.5 Hz), 5.66 (1H, d, J=6.1 Hz), 5.72 (1H, d, J= 6.1 Hz). 6.59 (1H, br-s), 7.22 (2H, d, J=7.8 Hz). 7.66 (2H, d, J=8.1 Hz). |
| 2 | $^1$H NMR ($CDCl_3$, ppm): 1.00 (3H, d, J=7.3 Hz), 1.02 (3H, d, J=6.8 Hz), 1.88-1.89 (1H, m), 2.39 (3H, s), 3.52-3.72 (2H, m), 3.69-3.72 (1H, m), 4.23-4.25 (1H, m), 4.30-4.45 (1H, m), 4.44-4.80 (1H, m), 4.56-4.60 (1H, m). 4.97 (1H, br-d, J=8.8 Hz), 6.78 (1H, br-s), 7.23 (2H, d, J=8.0 Hz), 7.67 (2H, d, J=8.3Hz). |

(continued)

| Compound No. | Physical Properties |
|---|---|
| 3 | $^1$H NMR ($CDCl_3$, ppm): 0.97 (3H, d, J=6.3 Hz), 0.99 (3H, d, J=6.3 Hz), 1.83-1.88 (1H, m), 2.38 (3H, s), 3.43-3.71 (5H, m), 4.19-4.24 (2H, m), 5.38 (1H, br-d, J=6.8 Hz), 7.06 (1H, br-s), 7.17 (2H, d, J=7.8 Hz). 7.66 (2H, d, J=7.8 Hz). |
| 4 | $^1$H NMR ($CDCl_3$. ppm): 1.00 (3H, d, J=6.8 Hz), 1.02 (3H, d, J=6.9 Hz), 1.87-1.89 (1H, m), 2.40 (3H, s), 3.38-3.41 (2H, m), 3.51-3.71 (3H, m), 4.25-4.33 (2H, m), 4.98 (1H, br-d, J=7.8Hz), 6.75 (1H, br-s), 7.23 (2H, d, J=7.8 Hz), 7.67 (2H, d, J=8.3 Hz). |

Table 22-2

| Compound No. | Physical Properties |
|---|---|
| 5 | $^1$H NMR ($CDCl_3$, ppm): 1.00 (3H, d, J=7.6 Hz), 1.02 (3H, d, J=6.8 Hz), 1.87-2.05 (1H, m), 2.41 (3H, s), 3.13-3.17 (2H, m), 3.46-3.50 (1H, m), 3.59-3.70 (2H, m), 4.22-4.28 (2H, m), 4.93 (1H, br-d, J=8.8 Hz), 6.73 (1H, br-s), 7.23 (2H, d, J=7.8 Hz), 7.67 (2H, d, J=8.3 Hz). |
| 6 | $^1$H NMR ($CDCl_3$, ppm): 0.96-1.03 (6H, m), 1.85-1.91 (1H, m), 2.39(3H, s), 3.46-3.51 (1H, m), 3.61-3.72 (2H, m), 4.35-4.46 (2H, m), 5.36 (1H, d, J=8.3 Hz), 6.63 (1H, br-s), 7.21-7.23 (2H, m), 7.63-7.65 (2H, m) |
| 7 | $^1$H NMR ($CDCl_3$, ppm): 1.02 (3H, d, J=5.9 Hz), 1.03 (3H, d, J=6.6 Hz), 1.86-1.94 (1H, m), 2.39 (3H, s), 3.48-3.53 (1H, m), 3.63-3.77 (2H, m), 4.64 (1H, d, J=12.0 Hz), 4.73 (1H, d, J=12.0 Hz), 5.25 (1H, d, J=8.3 Hz), 6.64 (1H, br-s), 7.21 (2H, d, J=7.8 Hz), 7.64 (2H, d, J=8.1Hz). |
| 8 | $^1$H NMR ($CDCl_3$, ppm): 1.01 (3H, d, J=6.8 Hz), 1.02 (3H, d, J=7.1 Hz), 1.86-1.94 (1H, m), 2.39 (3H, s), 3.46-3.52 (1H, m), 3.54-3.76 (2H, m), 5.56-5.67 (2H, m), 6.42 (1H, br-s), 7.22(2H, d, J=7.8 Hz), 7.70 (2H. J=8.1 Hz). |

Table 22-3

| Compound No. | Physical Properties |
|---|---|
| 9 | $^1$H NMR ($CDCl_3$, ppm): 1.00 (3H, d, J=6.8 Hz), 1.02 (3H, d, J=6.8 Hz), 1.84-1.92 (1H, m), 2.39 (3H, s), 3.47-3.52 (1H, m), 3.59-3.74 (2H, m), 4.34-4.36 (1H, m), 4.51-4.52 (1H, m), 4.62-4.64 (1H, m), 5.00-5.12 (2H, m), 6.69 (1H, br-s), 7.22 (2H, d, J=8.1 Hz), 7.66 (2H, d, J=8.1 Hz). |
| 10 | $^1$H NMR ($CDCl_3$, ppm): 0.99 (3H, d, J=6.8 Hz), 1.01 (3H, d, J=6.8Hz). 1.82-1.92 (1H. m), |

(continued)

| Compound No. | Physical Properties |
|---|---|
| | 2.39 (3H. s), 3.43-3.57 (3H. m), 3.60-3.73 (2H,m), 4.10-4.20 (2H. m). 4.92 (1H, d, J=8.3 Hz), 6.82 (1H. br-s), 7.22 (2H, d, J=8.3 Hz), 7.67 (2H. d, J=8.1 Hz), |
| 11 | $^1$H NMR ($CDCl_3$, ppm): 1.01 (3H, d, J=6.8 Hz), 1.02 (3H, d, J=6.8 Hz), 1.85-1.90 (1H, m), 2.39 (3H, s), 3.34-3.74 (7H, m), 4.97-5.04 (2H, m), 6.62 (1H. br-s), 7.23 (2H, d, J=7.8Hz), 7.66 (2H, dd, J=8.3 Hz, 2.2 Hz). |
| 12 | $^1$H NMR ($CDCl_3$, ppm): 1.00-1.04 (6H, m), 1.87-1.93 (1H, m), 2.39 (3H, s), 3.31-3.34 (1H, m), 3.43-3.52 (2H, m), 3.58-3.75(2H, m), 5.25-5.32 (1H, m), 5.41-5.47 (1H, m), 6.54-7.00 (1H, m), 7.21(2H, d. J=8.1 Hz), 7.62 (2H x 1/2, d, J=8.1 Hz), 7.66(2H x 1/2, d, J=8.3Hz). |

Table 22-4

| Compound No. | Physical Properties |
|---|---|
| 13 | $^1$H NMR ($CDCl_3$, ppm): 0.99 (3H, d, J=7.1Hz), 1.01 (3H, d, J=7.1Hz), 1.84-1.92 (1H, m), 2.39 (3H, s), 3.46-3.53 (1H, m), 3.61-3.73 (2H, m), 4.46-4.61 (2H, m), 5.21 (1H, br-d, J=7.6Hz), 6.55 (1H, br-s), 7.21 (2H, dd, J=8.1Hz, 0.5Hz), 7.63 (2H, d, J=8.1Hz). |
| 14 | $^1$H NMR ($CDCl_3$, ppm): 0.99 (3H, d, J=7.6Hz), 1.01 (3H, d, J=7.1Hz), 1.82-1.89 (1H, m), 2.21-2.40 (5H, m), 3.43-3.47 (1H, m), 3.60-3.69 (2H, m), 4.36-4.31 (2H, m), 4.95 (1H, br-d, J=8.5Hz), 6.67 (1H, br-s), 7.22 (2H. d, J=7.8Hz), 7.66 (2H. d, J=8.3Hz). |
| 15 | $^1$H NMR ($CDCl_3$, ppm): 1.00 (3H, d, J=7.1 Hz), 1.02 (3H, d, J=6.8 Hz), 1.84-1.92 (1H, m), 2.39 (3H, s), 3.45-3.50 (1H, m), 3.60-3.75 (2H, m), 4.56 (1H, d, J=13.9 Hz), 4.62 (1H, d, J=13.9 Hz), 5.06 (1H, d, J=8.3 Hz), 5.26 (1H, s), 5.34 (1H, d, J=1.5 Hz), 6.73 (1H, br-d, J=3.2Hz), 7.22 (2H,d,J=8.1 Hz), 7.65 (1H, d, J=8.3 Hz). |
| 16 | $^1$H NMR ($CDCl_3$, ppm): 0.99-1.02 (6H, m), 1.21-1.35 (3H, m), 1.71-1.90 (4H, m), 2.05-2.10 (2H, m), 2.38 (3H, s), 3.44-3.71 (3H, m),. 4.26-4.40 (1H, m), 4.67-4.85(2H, m), 6.84 (1H, brs), 7.21 (2H, d, J=7.1 Hz), 7.65-7.69 (2H, m). |

Table 22-5

| Compound No. | Physical Properties |
|---|---|
| 17 | $^1$H NMR ($CDCl_3$, ppm): 0.99-1.03 (6H, m), 1.24-1.39 (3H, m), 1.59-1.71 (3H, m), 1.84-1.88 (1H, m), 2.05-2.17 (2H, m), 2.38 (3H, d, J=1.5 Hz), 3.49-3.74 (4H, m), 4.62-4.74 (1H, m), |

(continued)

| Compound No. | Physical Properties |
|---|---|
| | 4.88 (1H, d, J=5.6Hz), 6.80 (1H, br-s), 7.20-7.22 (2H, m), 7.67 (2H, d, J=7.1 Hz). |
| 18 | $^1$H NMR ($CDCl_3$, ppm): 0.99-1.05 (6H, m), 1.19-2.38 (12H, m), 3.46-3.78 (3H, m), 3.89-4.04 (1H, m), 4.71-4.87 (2H, m), 6.79 (1H, br-s), 7.21 (2H, d, J=8.3 Hz), 7.66-7.70 (2H, m). |
| 19 | $^1$H NMR ($CDCl_3$, ppm): 0.96-1.03 (6H, m), 1.26 (3H, t, J= 7.1Hz), 1.8-1.9 (1H, m), 2.39 (3H, s), 3.47-3.72 (5H, m), 5.26-5.35 (1H, m), 5.89-5.91 (1H, m), 6.5-6.6 (1H, m), 7.20-7.22 (2H, m), 7.60-7.67 (2H, m). |
| 20 | $^1$H NMR ($CDCl_3$, ppm): 2.40 (3H, s), 3.46-3.50 (2H, m), 3.60-3.64 (2H, m), 4.43 (2H, q, J = 8.5 Hz), 5.57 (1H, br-s), 6.66 (1H, br-s), 7.23-7.26 (2H, m), 7.66-7.68 (2H, m). |
| 21 | $^1$H NMR ($CDCl_3$, ppm): 1.01 (3H, t, J=7.6 Hz), 1.50-1.71 (2H, m). 2.39 (3H. s), 3.49-3.62 (2H, m), 3.72-3.81 (1H, m), 4.34-4.50 (2H, m), 5.29 (1H, d, J=8.1 Hz), 6.66 (1H, br-s) 7.22-7.24 (2H, m), 7.65 (2H, d, J=8.3 Hz). |

Table 22-6

| No. | Physical Properties |
|---|---|
| 22 | $^1$H NMR ($CDCl_3$, ppm): 0.95 (3H, t, J=7.2 Hz), 1.37-1.58 (4H, m), 2.40 (3H, s), 3.48-3.61 (2H, m), 3.82-3.87 (1H, m), 4.36-4.47 (2H, m), 5.25 (1H, d, J=8.5 Hz), 6.68 (1H, br-s), 7.23 (2H, d, J=7.8 Hz), 7.65 (2H, d, J=8.3 Hz). |
| 23 | $^1$H NMR ($CDCl_3$, ppm): 0.95 (3H, d, J=6.3 Hz), 0.96 (3H, d, J=6.6 Hz), 1.36-1.47 (2H, m), 1.69-1.74 (1H, m), 2.39 (3H, s), 3.48-3.55 (2H, m), 3.90-3.95 (1H, m), 4.36-4.46(2H, m), 5.11 (1H, d, J=8.5 Hz), 6.65 (1H, br-s), 7.23 (2H, d, J=8.3 Hz), 7.65 (2H, d, J=8.1 Hz). |
| 24 | $^1$H NMR ($CDCl_3$, ppm): 1.04 (9H, s), 2.38 (3H, s), 3.50-3.53 (1H, m), 3.65-3.69(2H, m), 4.31-4.42 (2H, m), 5.21 (1H, br-d, J=8.8 Hz), 6.55 (1H, br-s), 7.19 (2H, d, J=8.1 Hz), 7.60-7.62 (2H, m). |
| 25 | $^1$H NMR ($CDCl_3$, ppm): 0.95(3H. t, J=7.3 Hz), 0.99 (3H, d, J= 6.8 Hz). 1.20-1.25 (1H, m), 1.53-1.67 (2H, m), 2.39 (3H, s), 3.46-3.51 (1H, m), 3.61-3.69 (1H, m), 3.73-3.78 (1H, m), 4.35-4.45 (2H, m), 5.25 (1H, d, J= 8.5 Hz), 6.60 (1H, br-s), 7.21-7.24 (2H, m), 7.64 (2H, d, J= 8.3Hz). |

Table 22-7

| Compound No. | Physical Properties |
|---|---|
| 28 | $^1$H NMR ($CDCl_3$, ppm): 1.01 (3H, d, J=7.1 Hz), 1.03 (3H, d. J=6.8 Hz), 1.88-1.93 (1H, m), 3.54-3.74 (3H, m), 4.36-4.48 (2H, m), 5.24 (1H, d, J=8.8 Hz), 6.95 (1H, br-s), 7.26-7.31 (1H, m), 7.39-7.50 (3H, m). 7.66 (1H, d, J=8.1 Hz) |
| 30 | $^1$H NMR ($CDCl_3$, ppm): 0.98 (3H, d, J=6.8Hz), 1.00 (3H, d, J=6.8Hz,. 1.18 (1/2H, d, J=6.8Hz), 1.36 (1/2H, d, J=6.8Hz), 1.84-1.86 (1H, m), 3.42-3.66 (2H, m) 3.67-3.70 (1H, m), 5.03-5.10 (1H, m), 5.22 (1H, br-s), 5.12-5.19 (1H, m), 6.58 (1H, br-s), 7.18-7.22 (2H, m), 7.60-7.65 (2H, m). |

Table 22-8

| Compound No. | Physical Properties |
|---|---|
| 31 | $^1$H NMR ($CDCl_3$, ppm): 0.97 (9H, s), 3.54-3.58 (1H, s), 3.61-3.70 (2H, m), 4.31-4.41 (2H. m), 5.18 (1H, br-s), 6.91 (1H, br-s), 7.23-7.27 (1H, m), 7.35-7.45 (1H, d, J=7.8Hz). |
| 32 | $^1$H NMR ($CDCl_3$, ppm): 0.92-1.00 (6H, m), 1.55-1.58 (1H, m), 3.54-3.54 (1H, m), 3.76-3.79 (1H, m), 4.37-4.42 (2H, m), 5.21 (1H, br-d, J=8.9Hz), 6.92 (1H, br-s), 7.26-7.38 (1H, m), 7.40-7.49 (3H, m), 7.65 (1H, d, J=7.6Hz). |
| 33 | $^1$H NMR ($CDCl_3$, ppm): 0.98-1.00 (3H, m), 0.92-0.96 (3H, m), 1.22-1.26 (2H, m), 1.60-1.70 (2H, m), 3.60-3.65 (2H, m), 3.66-3.70 (1H, m), 4.35-4.42 (1H, m), 7.46-7.56 (2H, m), 7.60-7.63 (1H, m), 7.96 (1H, d, J=7.6Hz), 8.06 (1H, d, J=8.4Hz). |
| 34 | $^1$H NMR ($CDCl_3$, ppm): 1.02 (6H, t, J=6.8Hz), 1.87-1.95 (1H, m), 3.53-3.76 (3H, m), 4.36-4.52 (2H, m), 5.20 (1H, d, J=8.8Hz), 6.78 (1H, br-s), 7.37-7.45 (2H, m), 7.73 (1H, s), 7.82-7.86 (2H, m). |
| 35 | $^1$H NMR ($CDCl_3$, ppm): 1.01 (9H, s), 2.39 (3H, s), 3.50-3.54 (1H, m), 3.61-3.69 (2H, m), 4.34-4.42 (2H, m), 5.12 (1H, d, J=8.8Hz), 6.48 (1H, br), 7.22 (2H, d, J=8.3Hz), 7.62 (2H, d, J=8.3Hz). |
| 36 | $^1$H NMR ($CDCl_3$, ppm): 1.27-1.36 (2H, m), 1.53-1.71 (4H, m), 1.79-1.86 (2H, m), 1.95-2.01 (1H, m), 2.39 (3H, s), 3.52-3.63 (2H, m), 3.68-3.74 (1H, m), 4.35-4.46 (2H, m), 5.22 (1H, d, J=8.3Hz), 6.68 (1H, br), 7.22 (2H, d, J=8.3Hz), 7.64 (2H, d, J=8.3Hz). |

Table 22-9

| Compound No. | Physical Properties |
|---|---|
| 37 | $^1$H NMR ($CDCl_3$. ppm): 1.01 (3H, d, J=6.8Hz), 1.04 (3H, d, J=6.8Hz), 1.86-1.95 (1H, m), 3.61-3.79 (3H, m), 4.34-4.49 (2H, m), 5.15 (1H, d, J=8.8Hz), 7.23-7.32 (1H, m), 7.63-7.65 (2H, m), 8.00-8.04 (1H, m). |

(continued)

| Compound No. | Physical Properties |
|---|---|
| 38 | $^{1}H$ NMR ($CDCl_3$, ppm): 1.01 (3H, d, J=6.8Hz), 1.04 (3H, d, J=6.8Hz), 1.84-1.94 (1H, m), 3.59-3.79 (3H, m), 4.34-4.49 (2H, m), 5.24 (1H, d, J=9.3Hz), 7.48-7.58 (2H, m), 7.74 (1H, br-s), 7.97 (1H, d, J=7.3Hz), 8.07 (1H, d, J=7.8Hz). |
| 39 | $^{1}H$ NMR ($CDCl_3$, ppm): 0.88-0.99 (6H, m), 1.29-1.51 (5H, m), 3.49-3.56 (1H. m), 3.64-3.72 (1H, m), 3.95-4.01 (1H, m), 4.36-4.46 (2H, m), 5.15 (1H, d, J=9.3), 6.99 (1H, br), 7.27-7.31 (1H, m), 7.39-7.51 (3H, m), 7.67 (1H, d, J=7.8Hz). |
| 40 | $^{1}H$ NMR ($CDCl_3$, ppm): =6.8Hz), =7.8Hz). 1.26 (3H, d, J= 6.8Hz), 3.52-3.62 (1H, m), 3.93-3.99 (1H, m), 4.35-4.49 (2H, m), 5.44 (1H, d, J7.01 (1H, br-s), 7.26-7.30 (1H, m), 7.39-7.43 (1H, m), 7.46-7.50 (1H, m), 7.66 (1H, d, J |

The composition for preventing harmful organisms according to the present invention exhibits an excellent control effect against plant diseases and/or insecticidal effect. From such a fact, it is useful as a pest control agent.

## Claims

1. A composition for preventing harmful organisms comprising a diamine derivative represented by the formula (1), and one or more compounds selected from the group consisting of other fungicides, insecticides and acaricides as active ingredients,

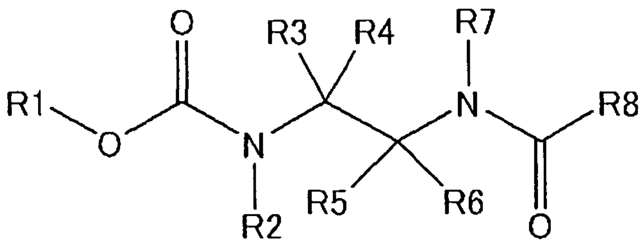

(1)

wherein, in the formula, R1 represents a hydrocarbon having 1 to 6 carbon atoms which is substituted with halogen; R2 and R7 each independently represent a hydrogen atom, a hydrocarbon having 1 to 6 carbon atoms or an acyl group; R3 and R4 each independently represent a hydrogen atom, a hydrocarbon having 1 to 6 carbon atoms which may be substituted or a heteroaryl group which may be substituted, or R3 and R4 represent a cycloalkyl group having 3 to 6 carbon atoms containing a carbon atom bonded thereto; R5 and R6 each independently represent a hydrogen atom or a hydrocarbon having 1 to 6 carbon atoms; and R8 represents an arylalkyl group which may be substituted, an aryl group which may be substituted or a heteroaryl group which may be substituted.

2. The composition for preventing harmful organisms as set forth in claim 1, wherein, in the formula (1), R1 represents a halogen-substituted alkyl group having 1 to 6 carbon atoms, a halogen-substituted cycloalkyl group having 3 to 6 carbon atoms, a halogen-substituted alkenyl group having 2 to 6 carbon atoms or a halogen-substituted cycloalkenyl group having 3 to 6 carbon atoms; R2 and R7 each independently represent a hydrogen atom, an alkyl group having 1 to 6 carbon atoms, a cycloalkyl group having 3 to 6 carbon atoms, an alkenyl group having 2 to 6 carbon atoms, a cycloalkenyl group having 3 to 6 carbon atoms, an alkynyl group having 2 to 6 carbon atoms, an arylalkyl group which may be substituted, an aryl group which may be substituted or an acyl group; R3 and R4 each independently represent a hydrogen atom, an alkyl group having 1 to 6 carbon atoms which may be substituted, a cycloalkyl group having 3 to 6 carbon atoms which may be substituted, an alkenyl group having 2 to 6 carbon atoms, a cycloalkenyl group having 3 to 6 carbon atoms, an alkynyl group having 2 to 6 carbon atoms, an arylalkyl group which may be substituted, a heteroarylalkyl group which may be substituted, an aryl group which may be substituted or a heteroaryl

group which may be substituted, or R3 and R4 represent a cycloalkyl group having 3 to 6 carbon atoms containing a carbon atom bonded thereto; R5 and R6 each independently represent a hydrogen atom, an alkyl group having 1 to 6 carbon atoms, a cycloalkyl group having 3 to 6 carbon atoms, an alkenyl group having 2 to 6 carbon atoms, a cycloalkenyl group having 3 to 6 carbon atoms, an alkynyl group having 2 to 6 carbon atoms, an arylalkyl group which may be substituted or an aryl group which may be substituted; and R8 represents an arylalkyl group which may be substituted, an aryl group which may be substituted or a heteroaryl group which may be substituted.

**3.** The composition for preventing harmful organisms as set forth in claim 2, wherein, in the formula (1), R2 and R7 each independently represent a hydrogen atom, an alkyl group having 1 to 6 carbon atoms, a cycloalkyl group having 3 to 6 carbon atoms, an arylalkyl group which may be substituted, an aryl group which may be substituted or an acyl group; R3 and R4 each independently represent a hydrogen atom, an alkyl group having 1 to 6 carbon atoms which may be substituted, a cycloalkyl group having 3 to 6 carbon atoms which may be substituted, an alkenyl group having 2 to 6 carbon atoms, an arylalkyl group which may be substituted, a heteroarylalkyl group which may be substituted, an aryl group which may be substituted or a heteroaryl group which may be substituted, or R3 and R4 represent a cycloalkyl group having 3 to 6 carbon atoms containing a carbon atom bonded thereto; and R5 and R6 each independently represent a hydrogen atom, an alkyl group having 1 to 6 carbon atoms, a cycloalkyl group having 3 to 6 carbon atoms, an arylalkyl group which may be substituted or an aryl group which may be substituted.

**4.** The composition for preventing harmful organisms as set forth in claim 3, wherein, in the formula (1), R2 and R7 each independently represent a hydrogen atom, an alkyl group having 1 to 6 carbon atoms or an acyl group; R3 and R4 each independently represent a hydrogen atom, an alkyl group having 1 to 6 carbon atoms which may be substituted, a cycloalkyl group having 3 to 6 carbon atoms which may be substituted, an arylalkyl group which may be substituted or an aryl group which may be substituted, or R3 and R4 represent a cycloalkyl group having 3 to 6 carbon atoms containing a carbon atom bonded thereto; and R5 and R6 each independently represent a hydrogen atom or an alkyl group having 1 to 6 carbon atoms.

**5.** The composition for preventing harmful organisms as set forth in claim 4, wherein, in the formula (1), R2, R5, R6 and R7 are hydrogen atoms.

**6.** The composition for preventing harmful organisms as set forth in any one of claims 1 to 5, wherein other fungicide, insecticide or acaricide is a compound selected from pyrethroid-based insecticides, organophosphate-based insecticides, carbamate-based insecticides, neonicotinoid-based insecticides, organochlorine-based insecticides, insect growth regulators, natural product insecticides, nereistoxin-based insecticides, carboxamide-based fungicides, melanin biosynthesis inhibitor-based fungicides, strobilurin-based fungicides, antibiotic fungicides, pyrimidine-based fungicides, azole-based fungicides, copper fungicides, benzimidazole-based fungicides, organophosphate-based fungicides, acylalanine-based fungicides, dicarboximide-based fungicides, dithiocarbamate-based fungicides, soil fungicides, organochlorine-based fungicides, anilinopyrimidine-based fungicides, natural product fungicides, inorganic fungicides, morpholine-based fungicides, acaricides, pymetrozine, fipronil, buprofezin, fenoxycarb, pyriproxyfen, methoprene, hydroprene, kinoprene, endosulfan, triazuron, tebufenozide, benzoepin, emamectin benzoate, emamectin benzoate, flupyrazofos, fluacrypyrim, flufenzine, indoxacarb, tolfenpyrad, gamma-cyhalothrin, ethiprole, acetoprole, amidoflumet, chlorfenapyr, flonicamid, flufenerim, pyridalyl, sodium oleate, potassium oleate, azadirachtin, carbam, sodium carbam, propargite, azocyclotin, benzoximate, metaldehyde, protrifenbute, benclothiaz, flubendiamide, metaflumizole, nicotine sulfate, lime nitrogen, machine oil, carbam, sodium carbam, bensultap, oxolinic acid, pseudomonas CAB-02, trichoderma atroviride, fludioxonil, DPC,
4-[3-(3,4-dimethoxyphenyl)-3-(4-fluorophenyl)acryloyl]morpholi ne, anilazine, iprovalicarb, imazalil-S, iminoctadine albesilate, quinoxyfen, chinomethionat, metallic silver, quintozene, guazatine, chlorothalonil, chloroneb, cyazofamid, diethofencarb, dichlofluanide, dicloran, dithianon, diflumetorim, dimethirimol, cymoxanil, silthiofam, spiroxamine, zoxamide, thiadiazine, dodine, triforine, tolylfluanid, nitrothalisopropyl, famoxadone, fenamidone, fenitropan, fenpiclonil, fenhexamid, folpet, fluazinam, fluoroimide, propamocarb, propamocarb hydrochloride, propylene glycol fatty acid ester, prohexadione-calcium, benthiazole, benthiavalicarbisopropyl, myclobutanil, organonickel, resveratrol,
(RS)-N-[2-(1,3-dimethylbutyl)thiophene-3-yl]-1-methyl-3-triflu oromethyl-1H-pirazole-4-carboxamide, diclomezine, iminoctadine acetate, isoprothiolane, tiadinil, probenazole, acibenzolar-S-methyl, mandipropamide, a compound represented by the formula (2),

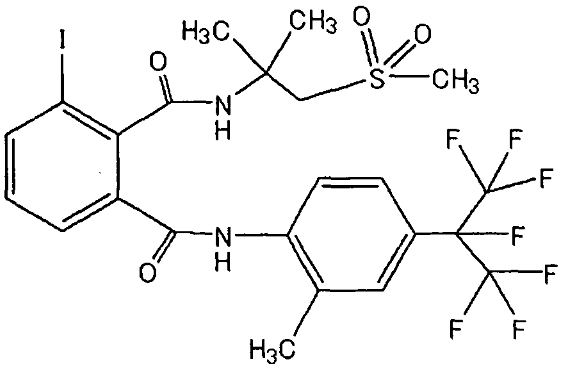

(2)

a compound represented by the formula (3),

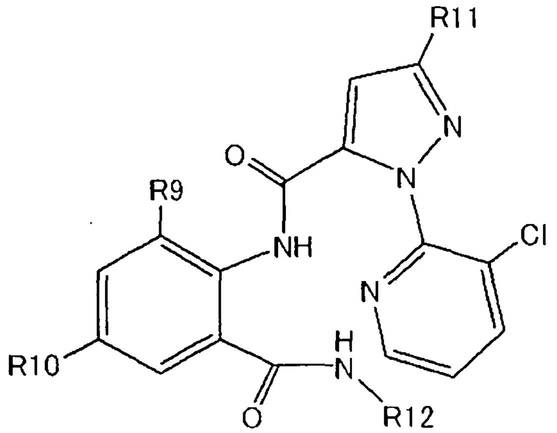

(3)

wherein, in the formula, R9 represents a methyl group or a chloro group; R10 represents a methyl group, a chloro group, a bromo group or a cyano group; R11 represents a chloro group, a bromo group, a trifluoromethyl group or a cyanomethoxy group; and R12 represents a methyl group or an isopropyl group,
a compound represented by the formula (4),

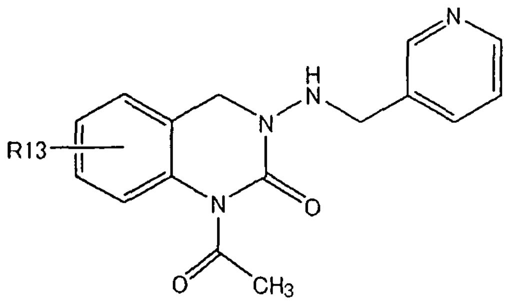

(4)

wherein, in the formula, R13 represents a 1,1,1,3,3,3,2-heptafluoro-2-propyl group or a 3,3,3,2,2,1,1-heptafluoro-1-propyl group,
a compound represented by the formula (5),

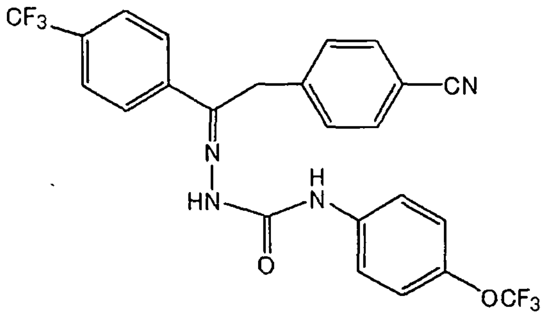

(5)

a compound represented by the formula (6),

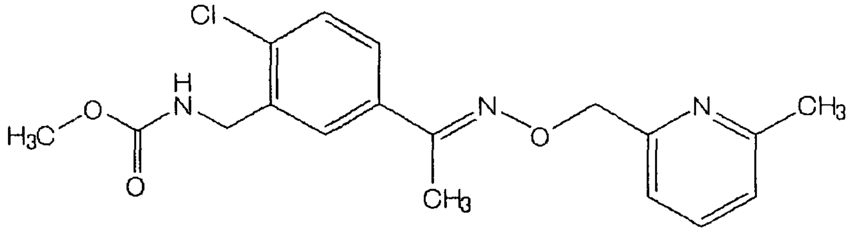

(6)

a compound represented by the formula (7),

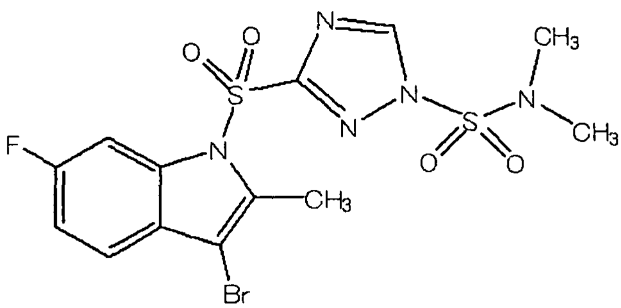

(7)

a compound represented by the formula (8),

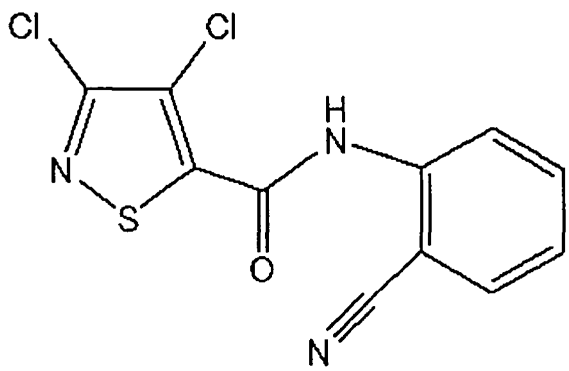

(8)

a compound represented by the formula (9), and

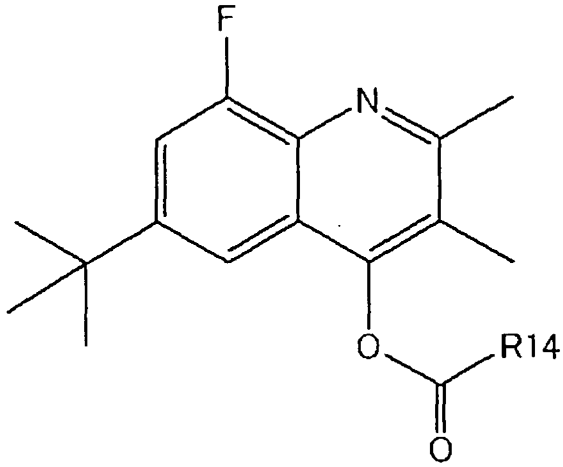

(9)

wherein, R14 represents a methyl group or a methoxymethyl group, a compound represented by the formula (10),

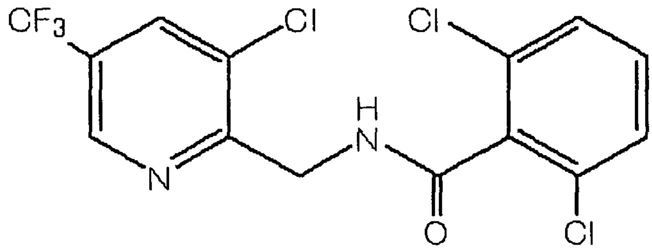

(10)

7. The composition for preventing harmful organisms as set forth in any one of claims 1 to 5, wherein other fungicide, insecticide or acaricide is a compound selected from pyrethroid-based insecticides such as allethrin, tetramethrin, resmethrin, phenothrin, furamethrin, permethrin, cypermethrin, deltamethrin, cyhalothrin, cyfluthrin, fenpropathrin, tralomethrin, cycloprothrin, flucythrinate, fluvalinate, acrinathrin, tefluthrin, bifenthrin, empenthrin, beta-cyfluthrin, cypermethrin, fenvalerate, esfenvalerate, flubrocythrinate, metofluthrin, profluthrin, dimefluthrin, flubrocythrinate, silafluofen, pyrethrum extract, etofenprox and halfenprox;
organophosphate-based insecticides such as DDVP, cyanophos, fenthion, fenitrothion, tetrachlorvinphos, dimethylvinphos, propaphos, methyl parathion, temephos, phoxim, acephate, isofenphos, salithion, DEP, EPN, ethion, mecarbam, pyridafenthion, diazinon, pirimiphos-methyl, etrimfos, isoxathion, quinalphos, chlorpyrifos-methyl, chlorpyrifos, phosalone, phosmet, methidathion, oxydeprofos, vamidothion, malathion, phenthoate, dimethoate, formothion, thiometon, ethylthiometon, phorate, terbufos, profenofos, prothiofos, sulprofos, pyraclofos, monocrotophos, naled, fosthiazate, trichlorphon, ethoprophos, cadusafos, chlorfenvinphos, dichlofenthion, ethylthiometon, methamidophos, dichlorvos, tebupirimfos, omethoate, triazophos, oxydemeton-methyl, azinphos-methyl, chlorethoxyphos, dicrotophos, disulfoton, fanamiphos, phosphamidon, trichlorphon, chlormephos, demeton-S-methyl, mevinphos, parathion, tebupirimfos, MEP, malathion, PHC, DCIP and MPP;
carbamate-based insecticides such as NAC, MTMC, MIPC, BPMC, XMC, PHC, MPMC, ethiofencarb, bendiocarb, pirimicarb, carbosulfan, benfuracarb, methomyl, oxamyl, aldicarb, thiodicarb, alanycarb, carbofuran, methiocarb, fenothiocarb, formetanate, xylylmethylcarbamate, propoxur, isoprocarb and furathiocarb;
neonicotinoid-based insecticides such as imidacloprid, nitenpyram, acetamiprid, dinotefuran, thiamethoxam, thiacloprid and clothianidin;
organochlorine-based insecticides such as bromopropylate, dicofol, endosulfan and linden;
insect growth regulators such as diflubenzuron, chlorfluazuron, teflubenzuron, triflumuron, flufenoxuron, flucycloxuron, hexaflumuron, fluazuron, diafenthiuron, novaluron, noviflumuron, bistrifluron, chromafenozide, halofenozide, methoxyfenozide, lufenuron, cyromazine, triazamate, tebufenozide, buprofezin and isoprothiolane;
natural product insecticides such as nicotine sulfate, polynactin complex, abamectin, milbemectin, lepimectin, BT agent, spinosad and rotenone; nereistoxin-based insecticides such as cartap, thiocyclam and bensultap;
carboxamide-based fungicides such as thifluzamide, flutolanil, mepronil, pencycuron, ethaboxam, oxycarboxin, carboxin and silthiofam;

melanin biosynthesis inhibitor-based fungicides such as carpropamid, diclocymet, tricyclazole, pyroquilon, fenoxanil and fthalide;
strobilurin-based fungicides such as azoxystrobin, metominostrobin, orysastrobin, kresoxim-methyl, fluoxastrobin, trifloxystrobin, dimoxystrobin, pyraclostrobin and picoxystrobin;
antibiotic fungicides such as kasugamycin, validamycin, blasticidin-S-benzylaminobenzenesulfonate, polyoxin, tecloftalam, oxytetracycline, streptomycin, blasticidin-S, mildiomycin and polyoxins;
pyrimidine-based fungicides such as ferimzone, fenarimol, pyrifenox, nuarimol and bupirimate;
azole-based fungicides such as simeconazole, furametpyr, ipconazole, triflumizole, prochloraz, pefurazoate, imazalil, imibenconazole, etridiazole, epoxiconazole, oxpoconazole fumarate, diniconazole, difenoconazole, cyproconazole, thifluzamide, tetraconazole, tebuconazole, triadimenol, triadimefon, triticonazole, bitertanol, hymexazole, fenbuconazole, fluquinconazole, flusilazole, flutriafol, prothioconazole, propiconazole, bromuconazole, hexaconazole, penconazole and metconazole; copper fungicides such as copper, copper nonylphenolsulfonate, basic copper chloride, basic copper sulfate, oxine copper, DBEDC, anhydrous copper sulfate and copper (II) hydroxide;
benzimidazole-based fungicides such as thiophanate-methyl, benomyl, thiabendazole, thiophanate, carbendazim and fuberidazole;
organophosphate-based fungicides such as EDDP, IBP, tolclofos-methyl, fosetyl, dinocap and pyrazophos;
acylalanine-based fungicides such as metalaxyl, oxadixyl, benalaxyl and metalaxyl-M; dicarboximide-based fungicides such as iprodione, procymidone, vinclozolin and chlozolinate;
dithiocarbamate-based fungicides such as thiuram, manzeb, propineb, zineb, metiram, maneb, ziram and ambam;
soil fungicides such as hydroxyisoxazole, methasulfocarb, chloropicrin, flusulfamide, dazomet, methyl isothiocyanate, potassium hydroxyisoxazole, echlomezol, 1,3-dichloropropene and carbam;
organochlorine-based fungicides such as TPN and captan;
anilinopyrimidine-based fungicides such as mepanipyrim, cyprodinil and pyrimethanil;
natural product fungicides such as rape seed oil and machine oil;
inorganic fungicides such as sulfur, lime sulfur mixture, zinc sulfate, fentin, sodium hydrogen carbonate, potassium hydrogen carbonate and hypochlorite salts;
morpholine-based fungicides such as dimethomorph, fenpropidin, fenpropimorph, spiroxamine, tridemorph, dodemorph and flumorph;
acaricides such as chlorobenzilate, fenisobromolate, tetradifon, CPCBS, BPPS, chinomethionat, amitraz, benzomate, hexythiazox, fenbutatin oxide, cyhexatin, dienochlor, clofentezine, pyridaben, fenpyroximate, fenazaquin, tebufenpyrad, pyrimidifen, acequinocyl, bifenazate, etoxazol, spirodiclofen, spiromesifen, amidoflumet, diflovidazin and kelthane;
insecticides and fungicides other than those described above such as pymetrozine, fipronil, buprofezin, fenoxycarb, pyriproxyfen, methoprene, hydroprene, kinoprene, endosulfan, triazuron, tebufenozide, benzoepin, emamectin benzoate, emamectin benzoate, flupyrazofos, fluacrypyrim, flufenzine, indoxacarb, tolfenpyrad, gamma-cyhalothrin, ethiprole, acetoprole, amidoflumet, chlorfenapyr, flonicamid, flufenerim, pyridalyl, sodium oleate, potassium oleate, azadirachtin, carbam, sodium carbam, propargite, azocyclotin, benzoximate, metaldehyde, protrifenbute, benclothiaz, flubendiamide, metaflumizole, nicotine sulfate, lime nitrogen, machine oil, carbam, sodium carbam, bensultap, oxolinic acid, pseudomonas CAB-02, trichoderma atroviride, fludioxonil, DPC,
4-[3-(3,4-dimethoxyphenyl)-3-(4-fluorophenyl)acryloyl]morpholi ne, anilazine, iprovalicarb, imazalil-S, iminoctadine albesilate, quinoxyfen, chinomethionat, metallic silver, quintozene, guazatine, chlorothalonil, chloroneb, cyazofamid, diethofencarb, dichlofluanide, dicloran, dithianon, diflumetorim, dimethirimol, cymoxanil, silthiofam, spiroxamine, zoxamide, thiadiazine, dodine, triforine, tolylfluanid, nitrothalisopropyl, famoxadone, fenamidone, fenitropan, fenpiclonil, fenhexamid, folpet, fluazinam, fluoroimide, propamocarb, propamocarb hydrochloride, propylene glycol fatty acid ester, prohexadione-calcium, benthiazole, benthiavalicarbisopropyl, myclobutanil, organonickel, resveratrol, (RS)-N-[2-(1,3-dimethylbutyl)thiophene-3-yl]-1-methyl-3-triflu oromethyl-1H-pirazole-4-carboxamide, diclomezine, iminoctadine acetate, isoprothiolane, tiadinil, probenazole, acibenzolar-S-methyl and mandipropamide,
a compound represented by the formula (2),

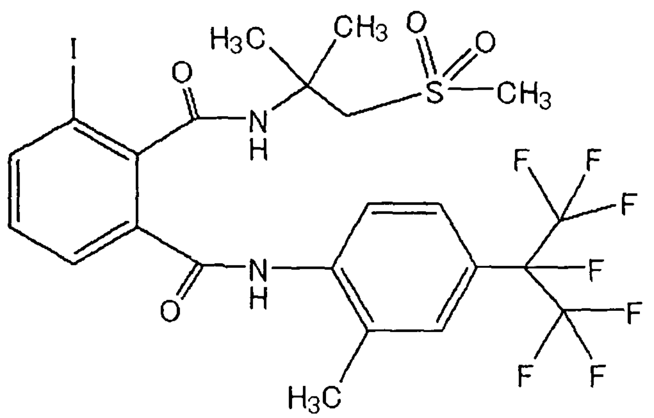

(2)

a compound represented by the formula (3),

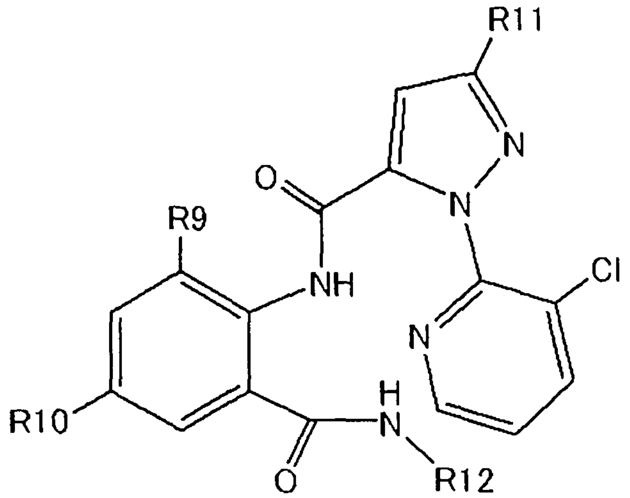

(3)

wherein, in the formula, R9 represents a methyl group or a chloro group; R10 represents a methyl group, a chloro group, a bromo group or a cyano group; R11 represents a chloro group, a bromo group, a trifluoromethyl group or a cyanomethoxy group; and R12 represents a methyl group or an isopropyl group,
a compound represented by the formula (4),

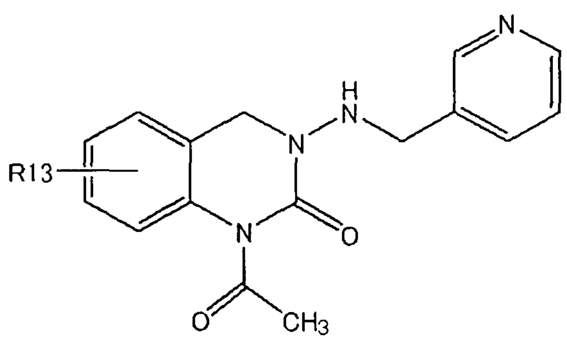

(4)

wherein, in the formula, R13 represents a 1,1,1,3,3,3,2-heptafluoro-2-propyl group or a 3,3,3,2,2,1,1-heptafluoro-1-propyl group,
a compound represented by the formula (5),

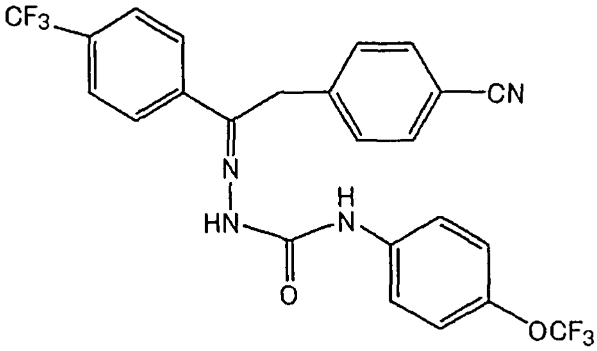

(5)

a compound represented by the formula (6),

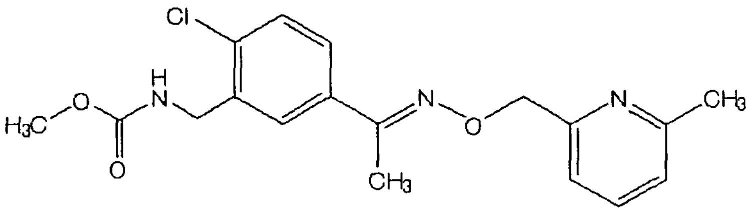

(6)

a compound represented by the formula (7),

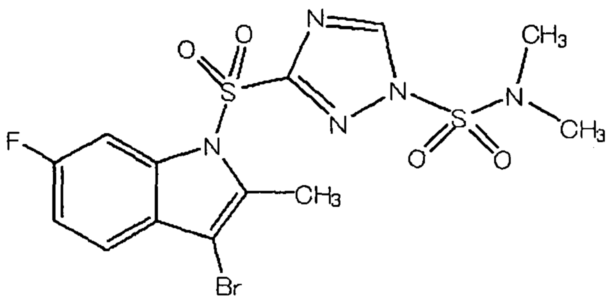

(7)

a compound represented by the formula (8),

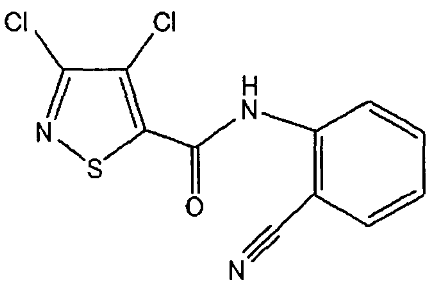

(8)

a compound represented by the formula (9), and

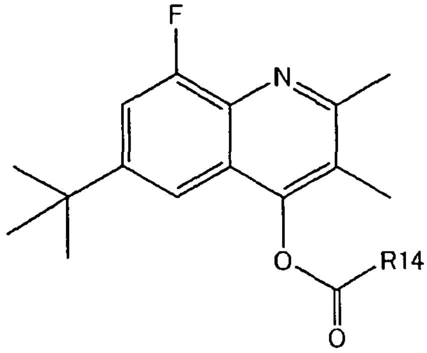

(9)

wherein, R14 represents a methyl group or a methoxymethyl group,
a compound represented by the formula (10),

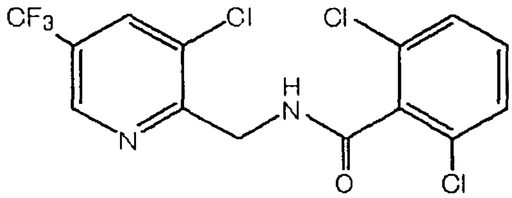

(10)

**8.** The composition for preventing harmful organisms as set forth in any one of claims 1 to 5, wherein other fungicide, insecticide or acaricide is a compound selected from pyrethroid-based insecticides: allethrin, permethrin, cypermethrin, cyhalothrin, cyfluthrin, fenpropathrin, tralomethrin, cycloprothrin, flucythrinate, fluvalinate, acrinathrin, tefluthrin, bifenthrin, fenvalerate, esfenvalerate, silafluofen, pyrethrum extract, etofenprox and halfenprox;
organophosphate-based insecticides such as DDVP, cyanophos, tetrachlorvinphos, dimethylvinphos, propaphos, acephate, DEP, EPN, ethion, pyridafenthion, diazinon, pirimiphos-methyl, isoxathion, chlorpyrifos-methyl, chlorpyrifos, phosalone, methidathion, vamidothion, phenthoate, dimethoate, ethylthiometon, profenofos, prothiofos, sulprofos, pyraclofos, monocrotophos, naled, ethoprophos, cadusafos, chlorfenvinphos, dichlofenthion, MEP, malathion, PHC, DCIP and MPP;
carbamate-based insecticides such as NAC, MIPC, BPMC, XMC, PHC, ethiofencarb, carbosulfan, benfuracarb, methomyl, oxamyl, thiodicarb, alanycarb, carbofuran, furathiocarb;
neonicotinoid-based insecticides such as imidacloprid, nitenpyram, acetamiprid, dinotefuran, thiamethoxam, thiacloprid and clothianidin;
insect growth regulators such as diflubenzuron, chlorfluazuron, teflubenzuron, flufenoxuron, diafenthiuron, novaluron, chromafenozide, methoxyfenozide, lufenuron, cyromazine, tebufenozide, buprofezin and isoprothiolane;
natural product insecticides such as milbemectin, BT agent and spinosad;
nereistoxin-based insecticides such as cartap, thiocyclam and bensultap;
carboxamide-based fungicides such as thifluzamide, flutolanil, mepronil and pencycuron;
melanin biosynthesis inhibitor-based fungicides such as carpropamid, diclocymet, tricyclazole, pyroquilon, fenoxanil and fthalide;
strobilurin-based fungicides such as azoxystrobin, metominostrobin and orysastrobin;
antibiotic fungicides such as kasugamycin, validamycin, blasticidin-S-benzylaminobenzenesulfonate, tecloftalam, oxytetracycline and streptomycin;
pyrimidine-based fungicides such as ferimzone;
azole-based fungicides such as simeconazole, furametpyr, ipconazole, triflumizole, prochloraz and pefurazoate;
benzimidazole-based fungicides such as thiophanate-methyl, benomyl and thiabendazole;
organophosphate-based fungicides such as EDDP and IBP; acylalanine-based fungicides such as metalaxyl and metalaxyl-M; dicarboximide-based fungicides such as iprodione;
soil fungicides such as hydroxyisoxazole, methasulfocarb and flusulfamide;
organochlorine-based fungicides such as TPN and captan;
insecticides and fungicides other than those described above such as pymetrozine, fipronil, buprofezin, pyriproxyfen, benzoepin, emamectin benzoate, fluacrypyrim, indoxacarb, tolfenpyrad, ethiprole, chlorfenapyr, flonicamid, pyridalyl,

sodium oleate, potassium oleate, azadirachtin, nicotine sulfate, lime nitrogen, machine oil, carbam, sodium carbam, bensultap, oxolinic acid, fludioxonil,
(RS)-N-[2-(1,3-dimethylbutyl)thiophene-3-yl]-1-methyl-3-triflu oromethyl-1H-pirazole-4-carboxamide, diclomezine, iminoctadine acetate, isoprothiolane, tiadinil, probenazole, acibenzolar-S-methyl,
a compound represented by the formula (2),

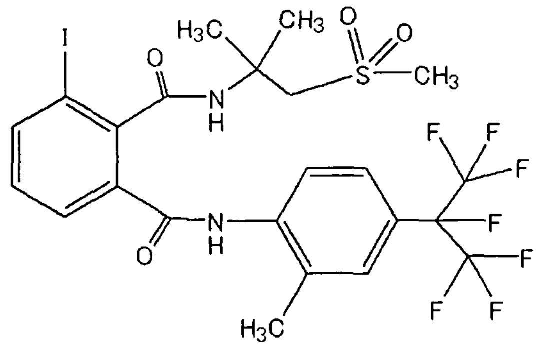

(2)

a compound represented by the formula (3),

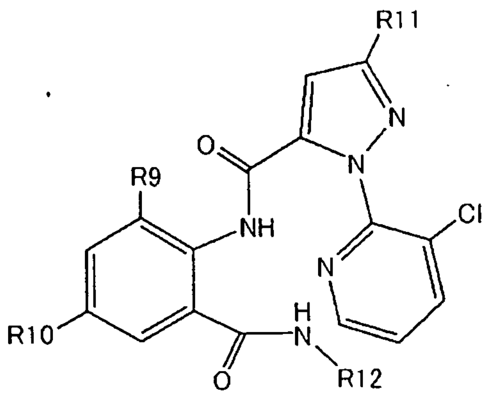

(3)

wherein, in the formula, R9 represents a methyl group or a chloro group; R10 represents a methyl group, a chloro group, a bromo group or a cyano group; R11 represents a chloro group, a bromo group, a trifluoromethyl group or a cyanomethoxy group; and R12 represents a methyl group or an isopropyl group,
a compound represented by the formula (4),

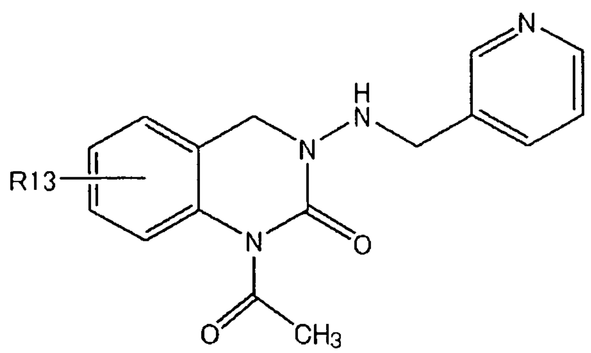

(4)

wherein, in the formula, R13 represents a 1,1,1,3,3,3,2-heptafluoro-2-propyl group or a 3,3,3,2,2,1,1-heptafluoro-1-propyl group,
a compound represented by the formula (5),

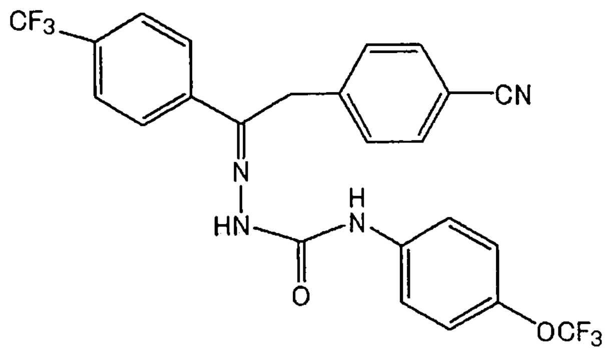

(5)

a compound represented by the formula (8), and

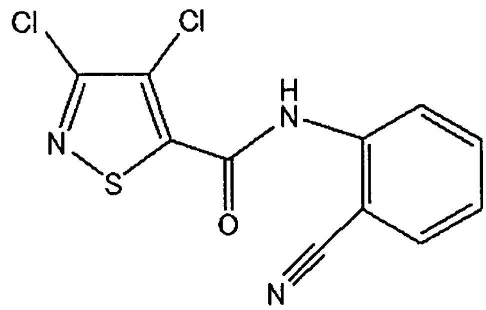

(8)

a compound represented by the formula (9),

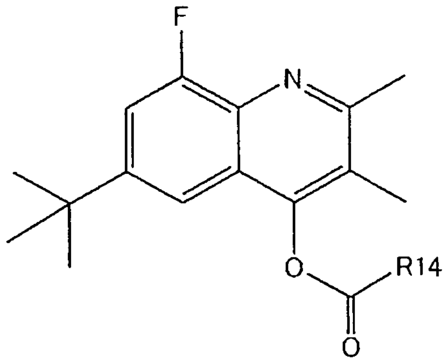

(9)

wherein R14 represents a methyl group or a methoxymethyl group.

**9.** A method for preventing pests using the composition for preventing harmful organisms as set forth in any one of claims 1 to 8.

**INTERNATIONAL SEARCH REPORT**

International application No.
PCT/JP2006/306638

A. CLASSIFICATION OF SUBJECT MATTER
***A01N47/12***(2006.01), ***A01N25/04***(2006.01), ***A01N25/12***(2006.01), ***A01N25/14***
(2006.01)

According to International Patent Classification (IPC) or to both national classification and IPC

B. FIELDS SEARCHED

Minimum documentation searched (classification system followed by classification symbols)
A01N25/04, A01N25/12, A01N25/14, A01N47/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| P,X | WO 2005/042474 A1 (Mitsui Chemicals, Inc.), 12 May, 2005 (12.05.05), Full text (Family: none) | 1-9 |
| X | WO 01/46152 A1 (MONSANT CO.), 28 June, 2001 (28.06.01), Examples 230, 231; pages 44 to 45 etc. & US 2002/052295 A1 & BR 2000016517 A | 1,6-9 |
| X | JP 2003-96046 A (Mitsui Chemicals, Inc.), 03 April, 2003 (03.04.03), Claims; Par. Nos. [0047], [0081] & WO 03/008372 A1 & EP 1408027 A1 & BR 2002011291 A & CN 1628095 A & US 2005/075512 A1 | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 May, 2006 (11.05.06) | 23 May, 2006 (23.05.06) |
| Name and mailing address of the ISA/ Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003096046 A
- WO 2003008372 A
- JP 2001131141 A
- US 6020332 A
- JP 3164762 B
- WO 0110825 A
- US 6620812 B
- WO 9924413 A
- WO 0192231 A
- WO 03079788 A
- WO 200315519 A
- JP 2001342186 A
- US 5543573 A


### Non-patent literature cited in the description


- *Tetrahedron Asymmetry,* 2000, vol. 11, 1907